# EUROPEAN PATENT APPLICATION

(11) **EP 1 487 126 A1**
(43) Date of publication of application: **15.12.2004**
(21) Application number: 03706978.8
(22) Date of filing: 20.02.2003
(51) Int. Cl.: H04B 1/59, G06K 17/00

(54) **RADIO COMMUNICATION SYSTEM**

(30) Priority: 22.02.2002 JP 2002046896; 20.03.2002 JP 2002079443; 20.03.2002 JP 2002079444; 29.03.2002 JP 2002093900
(71) Applicant: Sharp Kabushiki Kaisha, Osaka-shi, Osaka 545-8522 (JP)
(72) Inventor: OHTA, Tomozo, Ikoma-shi, Nara 630-0114 (JP); NAKANO, Hiroshi, Nara-shi, Nara 631-0024 (JP); IZAKI, Tohru, Sakurai-shi, Nara 633-0003 (JP)
(74) Representative: Brown, Kenneth Richard
(86) International application number: PCT/JP2003/001838
(87) International publication number: WO 2003/071701

(57) **Abstract**

An RFID system (10) has an interrogator (11), an interrogator antenna (12) connected to the interrogator (11), for transmitting a signal, a radio wave reflecting plate (21) reflecting the signal transmitted from the interrogator antenna (12) and including a part of a parabolic curve or a curve similar thereto, and a radio frequency tag (13) responding an receiving the signal from the interrogator antenna (12) via at least the radio wave reflecting plate (21) and communicating with the interrogator (11). A signal having passed without being applied to the radio frequency tag (13) is reflected toward the inside of the radio wave reflecting plate (21) by the radio wave reflecting plate (21) . Therefore, the signal is prevented from scattering, so that the signal from the interrogator antenna (12) is effectively utilized.

## Description

### Technical Field

The present invention relates to a radio communications system to enable communications between an interrogator and a transponder.

In the invention, the term "in a vicinity of a focal point" includes the focal point, the term "reflecting plate" includes a reflector of a shape other than a plate-shaped reflector, and the term "in close proximity to a central point" includes the central point. Further, in the invention, the term "rotation" includes angular displacements in a range from 0 degree inclusive to 360 degrees exclusive, the term "nearly at a central portion" includes the central portion, and the term "substantially horseshoe-shaped" includes a horseshoe shape.

### Background Art

A radio frequency identification (hereinafter, abbreviated to RFID) system has been known as one radio communications system. The RFID system of the related art is a system furnished with reading and writing functions, and is provided with an interrogator and a transponder. The transponder is called a radio frequency tag, and accumulates information and transmits the accumulated information at a command from the interrogator.

As a radio frequency tag used in the RFID system, a radio frequency tag having a built-in battery has been used frequently in the field of Factory Automation (abbreviated to FA), particularly in the micro region. However, the advance of semiconductors, that is, the technical advance in a radio communications circuit using a semiconductor, has enabled a radio frequency tag having no battery and instead obtaining driving power from interrogator-based signals to be developed, and the use in diversified fields has been discussed. Hereinafter, a radio frequency tag having no battery is occasionally referred to as a battery-less tag. Because the RFID system using a battery-less tag has a simple configuration and can be formed at low costs, there have been discussed applications in diversified fields, such as FA, distribution, and physical distribution, involving a product line or the goods management in a warehouse, a picking system to automatically sort articles, a mail delivery, a parcel delivery, etc.

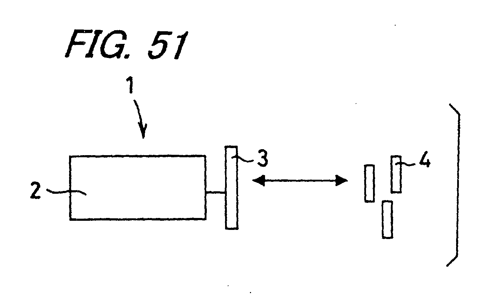

FIG. 51 is a view showing the basic configuration of an RFID system 1 as a related art. The RFID system 1 includes an interrogator 2, an interrogator antenna 3, and radio frequency tags 4. The interrogator antenna 3 is connected to the interrogator 2. Each radio frequency tag 4 comprises a tag antenna and a tag IC (Integrated Circuit) furnished with a radio communications function.

The interrogator 2 generates an interrogation, and the interrogator antenna 3 transmits an interrogation signal representing the interrogation to the radio frequency tags 4. Each radio frequency tag 4 receives the interrogation signal at the tag antenna, generates an answer to the interrogation by means of the tag IC, and transmits a response signal representing the answer from the tag antenna. The response signals transmitted from the radio frequency tags 4 are received at the interrogator antenna 3, and the answers are given to the interrogator 2. Information that each radio frequency tag 4 has is thereby retrieved. Also, in the RFID system 1, it is possible to transmit information from the interrogator 2 to the radio frequency tags 4 for the information to be written and accumulated in the radio frequency tags 4.

Because the interrogation signals are radiated from the interrogator antenna 3 in the form of radio waves, a large portion of the interrogation signals scatters as useless radio waves. When the interrogation signals scatter, power obtained in the radio frequency tag 4 from the interrogation signal transmitted from the interrogator antenna 3, that is, the obtained communication power, becomes smaller as the radio frequency tag 4 is apart farther from the interrogator antenna 3. Hence, because the obtained communication power is larger as a distance between the interrogator antenna 3 and the radio frequency tag 4 becomes smaller, the communication accuracy between the interrogator 2 and the radio frequency tag 4 becomes higher, and because the obtained communication power is smaller as the distance between the interrogator antenna 3 and the radio frequency tag 4 becomes larger, the communication accuracy between the interrogator 2 and the radio frequency tag 4 becomes lower.

A distance between the interrogator antenna 3 and the radio frequency tag 4, over which communications between the interrogator 2 and the radio frequency tag 4 are enabled, varies with power obtained from overall signals radiated from the interrogator antenna 3, that is, the radiation communication power, and with the signal reception sensitivities of the interrogator 2 and the radio frequency tag 4. In the case of the RFID system 1 using battery-less tags, the distance is in a range from several cm to 2 m approximately.

It is often for the RFID system 1 that, for example, a transportation apparatus, such as a belt conveyor, is installed in the directional direction of the interrogator antenna 3. On this transportation apparatus is placed an object bearing the radio frequency tag 4. The transportation apparatus moves the object bearing the radio frequency tag. In this instance, communications between the interrogator 2 and the radio frequency tag 4 are enabled while the radio frequency tag 4 is placed in a region where power obtained from the interrogation signal from the interrogator antenna 3 is large, that is, in a region where a distance between the interrogator antenna 3 and the radio frequency 4 is a communicable distance.

In order to increase the communication accuracy between the interrogator 2 and the radio frequency tag 4, it is necessary to broaden a range for the radio frequency tag 4 to be placed with respect to the interrogator antenna 3, that is, a communicable distance between the interrogator 2 and the radio frequency tag.

When the radiation communication power is increased, the communicable distance between the interrogator antenna 3 and the radio frequency tag 4 can be extended, but power consumption is increased. In order to extend a communication distance without increasing the radiation communication power, signals may be concentrated in a desired region by eliminating the scattering of signals. However, as described above, it is difficult for the RFID system 1 to irradiate a desired range with signals transmitted from the interrogator antenna 3, and in particular, because the smaller interrogator antenna 3 has a broader directional characteristic, interrogation signals that are not radiated effectively to the radio frequency tag 4 are increased, which gives rise to scattering. In addition, there is a problem that a interrogation signal that has scattered over a long distance become interference waves for another radio communications system, such as an RFID system and a wireless Local Area Network (abbreviated to LAN), and provides adverse effects.

As a technique of suppressing the scattering of signals, Japanese Unexamined Patent Publication JP-A 5-128289 discloses a system that concentrates millimeter waves by controlling phases. A phased array antenna is used in this system. For the phased array antenna, however, it is necessary to connect a phase shifter to an individual antenna, which complicates the configuration and increases the cost.

Also, a photo-assisted Chemical Vapor Deposition (CVD) apparatus in Japanese Unexamined Patent Publication JP-A 1-300515, shown as a technique of suppressing the scattering of light, is configured in such a manner that a desired thin film is formed on the substrate by changing the shape of a reflecting plate to reflect light, with the use of guide supporting members capable of changing the curvature radius to different two curvature radii. The reflecting plate is supported by the guide supporting members at the both end portions, and can be changed to shapes having different two curvature radii.

The technique shown in the above-mentioned JP-A 1-300515 relates to the photo-assisted CVD apparatus, and cannot be applied directly to the radio communications system.

An object of the invention is to provide a radio communications system that utilizes signals effectively by preventing the scattering of signals.

### Disclosure of Invention

The invention provides a radio communications system, comprising:
an interrogator for generating information to be transmitted;
an interrogator antenna, connected to the interrogator, for transmitting a signal representing the information generated in the interrogator;
a radio wave reflecting plate having a reflection surface formed thereon which reflects the signal transmitted from the interrogator antenna and has a predetermined reflection characteristic; and
a transponder, capable of receiving the signal from the interrogator antenna, for receiving a signal transmitted from the interrogator antenna and reflected at least on the radio wave reflecting plate.

According to the invention, it is possible to receive signals transmitted from the interrogator antenna connected to the interrogator in the transponder by reflecting the signals on the radio wave reflecting plate. By providing the radio wave reflecting plate to reflect the signals, it is possible to prevent the signals from scattering by passing through to the backside of the radio wave reflecting plate, that is, a surface on a side opposite to the reflection surface. Interference of radio wave with another radio communications system can be thereby reduced.

Also, because the reflection surface of the radio wave reflecting plate has the predetermined reflection characteristic, it is possible to concentrate signals in a predetermied region, for example, by reflecting signals from the interrogator antenna in a predetermined direction. By placing the transponder in this region where the signals concentrate, the signals can be utilized effectively.

Also, a propagation direction of signals can be changed by guiding the signals from the interrogator antenna to the transponder by reflecting the signals on the reflection surface of the radio wave reflecting plate. Therefore, a degree of freedom in placement of the interrogator antenna and the transponder can be increased.

Also, the invention is characterized in that the reflection surface includes a part of a parabolic curve or a curve similar thereto.

According to the invention, there is provided the radio wave reflecting plate formed of a reflection surface including a part of a parabolic curve or a curve similar thereto, for reflecting signals transmitted from the interrogator antenna. Of the signals transmitted from the interrogator antenna, the signals that have passed straight through without being applied to the transponder are reflected on the reflection surface of the radio wave reflecting plate to the inner side of the reflection surface of the radio wave reflecting plate. Signals traveling in a direction parallel to the axis of the reflection surface, when reflected on the reflection surface, concentrate on a focal point of the reflection surface. The focal point of the reflection surface is, for example, when the reflection surface includes a part of a parabolic curve, the axis of the parabolic curve. Hence, signals in a vicinity of the focal point of the reflection surface become strong. Signals that are reflected on the reflection surface after they have passed the focal point of the reflection surface travel in parallel with the axis of the reflection surface. The axis of the reflection surface is, for example, when the reflection surface includes a parabolic curve, the axis of the parabolic curve. In other words, only a region opposing the reflection surface is irradiated with signals from the interrogator antenna. The scattering of signals can be thus prevented. Also, it is possible to receive in the transponder not only signals transmitted directly from the interrogator antenna, but also signals reflected on the radio wave reflecting plate, that is, signals that have once passed straight through. Signals transmitted from the interrogator antenna can be thereby utilized effectively.

Also, the invention is characterized in that the interrogator antenna is placed in a vicinity of a focal point of the reflection surface.

According to the invention, because the interrogator antenna is placed in the vicinity of the focal point of the reflection surface, signals from the interrogator antenna, when reflected on the reflection surface, travel in parallel with the axis of the reflection surface. The axis of the reflection surface is, for example, when the reflection surface includes a parabolic curve, the axis of the parabolic curve. That is to say, only a region opposing the reflection surface is irradiated with signals from the interrogator antenna. Hence, even when the directional characteristic of the interrogator antenna is low, it is still possible to limit a region which is irradiated with signals by means of the radio wave reflecting plate.

Also, the invention is characterized in that the transponder is placed in a vicinity of a focal point of the reflection surface.

According to the invention, the transponder is placed in the vicinity of the focal point of the reflection surface. Signals traveling in a direction parallel to the axis of the reflection surface, when reflected on the reflection surface, concentrate on the focal point of the reflection surface. The vicinity of the reflection surface, therefore, becomes a region where the signals are strong. By placing the transponder in this region where the signals are strong, it is possible to increase the communication accuracy between the interrogator and the transponder.

Also, the invention is characterized in that a plurality of interrogator antennas are placed oppositely to the reflection surface, and each interrogator antenna is set to be directed to a vicinity of a focal point of the reflection surface.

According to the invention, a plurality of interrogator antennas are set oppositely to the reflection surface to be directed to the vicinity of the focal point of the reflection surface, respectively. In this case, signals transmitted to the reflection surface from the interrogator antenna placed at a position shifted from the axis of the reflection surface travel in a direction that is not parallel to the axis of the reflection surface. Hence, when reflected on the reflection surface, these signals form ambiguous focal points at positions different from the focal point of the reflection surface. In other words, the signals concentrate in a region having a predetermined volume in close proximity to the focal point. In a case where a plurality of interrogator antennas are present, a plurality of ambiguous focal points are formed. It is thus possible to broaden a region where the signals are strong.

Also, the invention is characterized in that a plurality of interrogator antennas are placed in a vicinity of a focal point of the reflection surface at positions such that signals transmitted from each interrogator antenna are reflected on the reflection surface to travel independently in different directional directions.

According to the invention, a plurality of interrogator antennas are placed in the vicinity of the focal point of the reflection surface. Signals from the interrogator antenna at a position shifted from the focal point of the reflection surface are reflected on the reflection surface, and thereafter a region shifted from the region opposing the reflection surface is also irradiated with the signals.

Also, the invention is characterized in that the reflection surface is a paraboloid of revolution or a parabolic cylindrical surface including an intersection of a parabolic curve or a curve similar thereto and an axis of the curve as well as the curve.

According to the invention, the reflection surface is a paraboloid of revolution or a parabolic cylindrical surface including the intersection of a parabolic curve or a curve similar thereto and the axis of the curve as well as the curve. Hence, the reflection surface is able to concentrate signals traveling in a direction parallel to the axis of the reflection surface efficiently on the focal point of the reflection surface, and to reflect signals having passed the focal point of the reflection surface and transmitted to the reflection surface, in parallel with the axis of the reflection surface.

Also, the invention is characterized in that the reflection surface is a paraboloid of revolution or a parabolic cylindrical surface including a curve of a parabolic curve or a curve similar thereto in a portion shifted from an intersection of the parabolic curve or the curve similar thereto and an axis of the curve.

According to the invention, the reflection surface is a paraboloid of revolution or a parabolic cylindrical surface including a curve of a parabolic curve or a curve similar thereto in a portion shifted from the intersection of the parabolic curve or the similar curve and the axis of the curve. Signals traveling in a direction parallel to the axis of the reflection surface, when reflected on the reflection surface, concentrate on the focal point of the reflection surface at a position shifted from a path through which the signals from the interrogator antenna have passed to reach the reflection surface. It is thus possible to broaden a region where the signals are strong.

When the interrogator antenna is provided in the vicinity of the focal point of the reflection surface, signals transmitted from the interrogator antenna, when reflected on the reflection surface, travel in parallel with the axis of the reflection surface. A path in which the signals reflected on the reflection surface travel is shifted from the focal point of the reflection surface, that is, the interrogator antenna. Hence, because the interrogator antenna does not block the signals reflected on the reflection surface, it is possible to irradiate the transponder with the signals transmitted from the interrogator antenna efficiently.

Also, the invention is characterized in that a plurality of interrogator antennas are connected to a single interrogator.

According to the invention, a plurality of interrogator antennas are connected to a single interrogator. Hence, in a case where the communication precision differs in each interrogator antenna due to obstacles, it is possible to increase the communication precision of the overall system by selecting information from the interrogator antenna having the highest communication precision by the interrogator.

Also, the invention is characterized in that a plurality of interrogator antennas are connected respectively to different interrogators.

According to the invention, a plurality of interrogator antennas are connected respectively to different interrogators. Hence, because processing is performed individually in the interrogators and the interrogator antennas connected thereto, the processing ability of the overall system can be increased.

Also, the invention is characterized in that another radio wave reflecting plate having a reflection surface opposing the reflection surface is disposed, and the reflection surface of the other radio wave reflecting plate reflects arrival signals to a vicinity of a focal point of the reflection surface of the other radio wave reflecting plate or in a direction in which the signals have arrived.

According to the invention, another radio wave reflecting plate having the reflection surface opposing the reflection surface is placed. Because the reflection surface of the other radio wave reflecting plate reflects arrival signals to the vicinity of the focal point of the reflection surface of the other radio wave reflecting plate or in a direction in which the signals have arrived, it is possible to prevent signals transmitted from the interrogator antenna from scattering to the outside of a region sandwiched by the radio wave reflecting plates. Hence, signals from the interrogator antenna can be utilized effectively. Also, even when the same radio communications systems are placed in a line, it is still possible to prevent interference of signals with another radio communications system.

Also, the invention is characterized in that the reflection surfaces of the two radio wave reflecting plates, which are paraboloids of revolution or parabolic cylindrical surfaces, are placed oppositely so that axes thereof are aligned with each other, the interrogator antenna is placed in the vicinity of the focal point of the reflection surface of one of the radio wave reflecting plates, and the transponder is placed in the vicinity of the focal point of the reflection surface of at least the other radio wave reflecting plate.

According to the invention, the reflection surfaces of the two radio wave reflecting plates, which are paraboloids of revolution or parabolic cylindrical surfaces, are placed oppositely so that axes thereof are aligned with each other, and the interrogator antenna is placed in the vicinity of the focal point of the reflection surface of one of the radio wave reflecting plates. Signals transmitted from the interrogator antenna to one radio wave reflecting plate are reflected on the reflection surface of one radio wave reflecting plate and travel toward the other radio wave reflecting plate in parallel with the axis of the reflection surface. These signals are reflected again on the reflection surface of the other radio wave reflecting plate and concentrate on the focal point of the reflection surface of the other radio wave reflecting plate. Thus, although the vicinity of the focal point of the reflection surface of the other radio wave reflecting plate is far from the interrogator antenna, it forms a region where the signals are strong. Hence, by placing the transponder in the vicinity of the focal point of the reflection surface of the other radio wave reflecting plate, it is possible to extend a communicable distance between the interrogator antenna and the transponder.

Also, the invention is characterized in that the reflection surfaces of the two radio wave reflecting plates, which are paraboloids of revolution or parabolic cylindrical surfaces, are placed oppositely so that axes thereof are aligned with each other, and two interrogator antennas are provided in such a manner that the respective interrogator antennas are placed in the vicinity of the focal points of the reflection surfaces of the both radio wave reflecting plates, respectively.

According to the invention, the reflection surfaces of the two radio wave reflecting plates, which are paraboloids of revolution or parabolic cylindrical surfaces, are placed oppositely so that axes thereof are aligned with each other, and two interrogator antennas are provided in such a manner that the respective interrogator antennas are placed in the vicinity of the focal points of the reflection surfaces of the both radio wave reflecting plates, respectively. Signals transmitted from one interrogator antenna are reflected on the reflection surface of one radio wave reflecting plate and travel toward the other radio wave reflecting plate in parallel with the axis. Signals transmitted from the other interrogator antenna are reflected on the reflection surface of the other radio wave reflecting plate and travel toward one radio wave reflecting plate in parallel with the axis. Hence, a region where communications are disabled with the use of signals from one interrogator antenna becomes a region where communications are enabled with the use of signals from the other interrogator antenna. A communicable region, therefore, can be broadened in this manner.

Also, the invention is characterized in that the two radio wave reflecting plates are placed so that positions of the focal points of the respective reflection surfaces are aligned with each other.

According to the invention, the two radio wave reflecting plates are placed so that positions of the focal points of the respective reflection surfaces are aligned with each other. In a case where the reflection surfaces of the two radio wave reflecting plates are paraboloids of revolution or parabolic cylindrical surfaces including the intersection of a parabolic curve or a curve similar thereto and the axis of the curve as well as the curve, signals transmitted from the interrogator antenna are reflected on one radio wave reflecting plate and travel toward the other radio wave reflecting plate in parallel with the axis. These signals are reflected again on the reflection surface of the other radio wave reflecting plate and concentrate on the focal points of the both radio wave reflecting plates. Further, these signals travel toward one radio wave reflecting plate to be utilized again. Signals transmitted from the interrogator antenna can be thus utilized effectively.

Also, the invention is characterized in that the reflection surface of the radio wave reflecting plate is a paraboloid of revolution or a parabolic cylindrical surface, the reflection surface of the other radio wave reflecting plate is a curved surface including a part of a circular curve or a curve similar thereto, and the radio wave reflecting plate and the other radio wave reflecting plate are placed so that positions of the focal points of the respective reflection surfaces are aligned with each other.

According to the invention, the radio wave reflecting plate having the reflection surface formed of a paraboloid of revolution or a parabolic cylindrical surface, and the other radio wave reflecting plate having the reflection surface formed of a curved surface including a part of a circular curve or a curve similar thereto are placed so that the positions of the focal points and the centers of these reflection surfaces are aligned with each other. Signals having passed the center of the reflection surface of the other radio wave reflecting plate are reflected on the reflection surface of the other radio wave reflecting plate, and travel in a direction in which the signals have arrived, that is, toward the center of the reflection surface of the other radio wave reflecting plate. It is thus possible to make the signals strong in the vicinity of the center of the reflection surface of the other radio wave reflecting plate, that is, in the vicinity of the focal point of the radio wave reflecting plate.

Also, the invention is characterized in that the reflection surface of the radio wave reflecting plate is a paraboloid of revolution or a parabolic cylindrical surface, and the reflection surface of the other radio wave reflecting plate is of a planar shape and placed so as to intersect with an axis of the reflection surface of the radio wave reflecting plate at right angles.

According to the invention, the reflection surface of the other radio wave reflecting plate having a planar-shaped reflection surface is placed so as to intersect at right angles with the axis of the reflection surface of the radio wave reflecting plate having a reflection surface formed of a paraboloid of revolution or a parabolic cylindrical surface. Signals transmitted from the interrogator antenna are reflected on the reflection surface of the radio wave reflecting plate and travel toward the reflection surface of the other radio wave reflecting plate. These signals are reflected again on the reflection surface of the other radio wave reflecting plate. It is thus possible to prevent the signals from scattering from a region sandwiched by the radio wave reflecting plate and the other radio wave reflecting plate.

The invention is characterized in that a plurality of interrogator antennas are placed, and signals transmitted from the interrogator antennas are circular polarized wave signals having turning directions different from each other.

According to the invention, because signals transmitted from a plurality of interrogator antennas are circular polarized wave signals having turning directions different from each other, signals arriving at the plurality of interrogator antennas differ from each other in turning direction. It is thus possible to avoid interference of signals between the interrogator antennas.

Also, the invention is characterized in that an apparatus for moving the transponder is provided, and communications are enabled between the interrogator and the moving transponder.

According to the invention, an apparatus for moving the transponder is provided, and communications are enabled between the interrogator and the moving transponder in a broad region where the signals are strong. The interrogator is thus able to communicate with different transponders successively at high communication precision.

Also, the invention is characterized in that the transponder includes a processing circuit having at least a modulation portion and a memory portion for accumulating information, and an antenna for transmitting and receiving a signal, wherein, upon receipt of a signal at the antenna, the processing circuit modulates in the modulation portion, according to the signal, a signal related to the information accumulated in the memory portion, and controls the antenna to transmit the signal from the antenna.

According to the invention, the transponder includes a processing circuit having at least a modulation portion and a memory portion. Upon receipt of a signal at the antenna, the processing circuit modulates in the modulation portion, according to the signal, a signal related to the information accumulated in the memory portion, and controls the antenna to transmit the signal from the antenna. The transponder, therefore, is applicable to a readable RFID system.

Also, the invention is characterized in that the transponder includes a processing circuit having at least a demodulation portion and a memory portion for accumulating information, and an antenna for receiving a signal, wherein, upon receipt of a signal at the antenna, the processing circuit writes information into the memory portion according to the signal.

According to the invention, the transponder includes a processing circuit having at least a demodulation portion and a memory portion, and upon receipt of a signal at the antenna, the processing circuit writes information into the memory portion according to the signal. The transponder, therefore, is applicable to a writable RFID system.

Also, the invention is characterized in that the reflection surface includes a part of an elliptic curve or a curve similar thereto.

According to the invention, it is possible to receive signals transmitted from the interrogator antenna in the transponder by reflecting the signals on a substantially radio wave reflecting plate having a reflection surface including a part of an elliptic curve or a curve similar thereto. By providing a substantially elliptic radio wave reflecting plate to reflect the signals, it is possible to prevent signals from scattering by passing through to the backside of the substantially elliptic radio wave reflecting plate, that is, a side opposite to the reflection surface. Interference of radio waves with another radio communications system can be thereby reduced. Also, it is possible to concentrate the signals in a region opposing the reflection surface on the reflection surface side from the substantially elliptic radio wave reflecting plate, which enables the signals to be utilized effectively. For example, the transponder is able to receive signals transmitted from the interrogator antenna directly and through reflection on the substantially elliptic radio wave reflecting plate, and thereby to utilize the signals received in the both ways.

Also, because the reflection surface of the substantially elliptic radio wave reflecting plate is a curved surface, it is possible to concentrate signals reflected on the reflection surface locally within a region opposing the reflection surface of the substantially elliptic radio wave reflecting plate. Hence, a region where the signals are strong can be formed readily by concentrating signals transmitted from the interrogator antenna. By placing the transponder in this region where the signals are strong, the gain is improved, which can in turn improve the communication accuracy between the interrogator and the transponder. Further, a communicable distance between the interrogator antenna and the transponder can be extended.

Also, because it is possible to guide signals transmitted from the interrogator antenna to the transponder by reflecting the signals on the reflection surface of the substantially elliptic radio wave reflecting plate, a propagation direction of signals can be changed. A degree of freedom in placement of the interrogator antenna and the transponder can be thereby increased.

Also, the invention is characterized in that the interrogator antenna is placed in close proximity to one of focal points of the reflection surface of the substantially elliptic radio wave reflecting plate to be directed to the reflection surface of the substantially elliptic radio wave reflecting plate.

According to the invention, signals transmitted from the interrogator antenna placed in close proximity to one of focal points of the reflection surface of the substantially elliptic radio wave reflecting plate to be directed to the reflection surface are reflected on the reflection surface of the substantially elliptic radio wave reflecting plate, and then concentrate somewhere in close proximity to the other focal point of the reflection surface of the substantially elliptic radio wave reflecting plate. It is thus possible to form with ease a region where signals transmitted from the interrogator antenna are strong, in close proximity to the other focal point.

For example, even when the interrogator antenna has a broad directional characteristic, a region where signals transmitted from the interrogator antenna are strong can be readily formed in close proximity to the other focal point of the reflection surface of the substantially elliptic radio wave reflecting plate. The communication accuracy between the interrogator and the transponder can be thereby increased.

Also, the invention is characterized in that the interrogator antenna is placed in close proximity to a virtual straight line including one of focal points of the reflection surface of the substantially elliptic radio wave reflecting plate and passing through the reflection surface, to be directed to the reflection surface of the substantially elliptic radio wave reflecting plate almost in parallel with the virtual straight line.

According to the invention, the interrogator antenna is placed in close proximity to a virtual straight line including one of focal points of the reflection surface of the substantially elliptic radio wave reflecting plate and passing through the reflection surface, to be directed to the reflection surface of the substantially elliptic radio wave reflecting plate almost in parallel with the virtual straight line. Signals transmitted from the interrogator antenna are thereby reflected on the reflection surface of the substantially elliptic radio wave reflecting plate and concentrate somewhere in close proximity to the other focal point of the reflection surface of the substantially elliptic radio wave reflecting plate. It is thus possible to form with ease a region where signals transmitted from the interrogator antenna are strong, in close proximity to the other focal point.

For example, even when the interrogator antenna has a broad directional characteristic, a region where signals transmitted from the interrogator antenna are strong can be readily formed in close proximity to the other focal point of the reflection surface of the substantially elliptic radio wave reflecting plate. The communication accuracy with the transponder can be thereby increased. In addition, because it is possible to form a region where the signals are strong in close proximity to the other focal point of the reflection surface of the substantially elliptic radio wave reflecting plate without providing the interrogator antenna in close proximity to one focal point of the reflection surface of the substantially elliptic radio wave reflecting plate, the interrogator antenna can be placed at a position not to interfere with the propagation of signals, and hence the communications between the interrogator antenna and the transponder.

Also, the invention is characterized in that the reflection surface of the substantially elliptic radio wave reflecting plate is a curved surface including a curve of an elliptic curve or a curve similar thereto other than a portion that intersects with a straight line passing two focal points of the elliptic curve or the similar curve.

According to the invention, by forming the reflection surface of the substantially elliptic radio wave reflecting plate from a curved surface including a part of a curve of an elliptic curve or a curve similar thereto other than a portion that intersects with a straight line passing two focal points of the elliptic curve or the curve similar thereto, in a case where signals transmitted from either the interrogator antenna or the transponder are reflected on the substantially elliptic radio wave reflecting plate to propagate to the other, neither the interrogator antenna nor the transponder blocks the signal propagation. For example, in a case where the interrogator antenna is placed in close proximity to one of focal points of the reflection surface of the substantially elliptic radio wave reflecting plate to concentrate signals transmitted from the interrogator antenna somewhere in close proximity to one focal point via the substantially elliptic radio wave reflecting plate in guiding the signals to the transponder present therein, signals transmitted from the interrogator antenna are interfered with neither the interrogator antenna nor the transponder per se.

Also, the invention is characterized in that a plurality of substantially elliptic radio wave reflecting plates are provided, and each substantially elliptic radio wave reflecting plate is placed so that at least one focal point thereof is aligned with a focal point of the reflection surface of another substantially elliptic radio wave reflecting plate.

According to the invention, a plurality of substantially elliptic radio wave reflecting plates are placed so that at least one focal point of the reflection surface is aligned with a focal point of the reflection surface of another substantially elliptic radio wave reflecting plate. In this case, in two substantially elliptic radio wave reflecting plates whose focal points are aligned, signals pass one focal point of one substantially elliptic radio wave reflecting plate and are reflected on one substantially elliptic radio wave reflecting plate. When reflected, the signals pass the other focal point of one substantially elliptic radio wave reflecting plate, which is also one focal point of the other substantially elliptic radio wave reflecting plate, to concentrate on the other focal point of the other substantially radio wave reflecting plate. Hence, a region where the signals are strong is formed in the vicinity of the focal point of each substantially elliptic radio wave reflecting plate. It is thus possible to broaden a region where the signals are strong. Also, by providing the respective substantially elliptic radio wave reflecting plates as has been described, it is possible to extend a communicable distance between the interrogator antenna and the transponder.

Also, the invention is characterized in that a plurality of interrogator antennas connected to the interrogator are provided,
signals transmitted from one interrogator antenna are received in the transponder, and
a signal transmitted from the transponder is received at another interrogator antenna.

According to the invention, an interrogator antenna for transmitting signals to the transponder and an interrogator antenna for receiving a signal from the transponder are provided separately. Hence, it is not necessary to process a signal received from the transponder on the ground that signals transmitted from the interrogator to the interrogator antenna are reflected on the interrogator antenna connected to the interrogator per se as in a case where a single interrogator antenna transmits/receives a signal to/from the transponder. The processing of a signal received from the transponder, therefore, can be easier.

Also, the invention is characterized in that the transponder is placed in close proximity to another focal point of the reflection surface of the substantially elliptic radio wave reflecting plate.

According to the invention, by placing the transponder in a region where the signals are strong, in close proximity to the other focal point of the reflection surface of the substantially elliptic radio wave reflecting plate, the transponder is able to efficiently receive signals transmitted from the interrogator antenna. The communication accuracy between the interrogator and the transponder can be thereby improved.

Also, the invention is characterized in that the reflection surface of the substantially elliptic radio wave reflecting plate includes a part of an ellipsoid of revolution or an elliptic cylindrical surface or a curved surface similar thereto.

According to the invention, the reflection surface of the substantially elliptic radio wave reflecting plate is configured to include a part of an ellipsoid of revolution or an elliptic cylindrical surface, or a part of a curved surface similar thereto. An ellipsoid of revolution is a curved surface formed by rotating an ellipse about the major axis or the minor axis, and an elliptic cylindrical surface is a curved surface formed from a trace when an ellipse is slid in a direction to intersect with the major axis and the minor axis. It is thus possible to efficiently concentrate signals transmitted from the interrogator antenna and reflected on the reflection surface of the substantially elliptic radio wave reflecting plate.

Also, the invention is characterized in that a plurality of interrogator antennas connected to the interrogator are provided, and
each interrogator antenna is placed in such a manner that signals transmitted from each interrogator antenna concentrate in different regions after the signals are reflected on the substantially elliptic radio wave reflecting plate.

According to the invention, because a plurality of interrogator antennas connected to the interrogator are placed in such a manner that signals transmitted from each interrogator antenna concentrate in different regions after the signals are reflected on the reflection surface of the substantially elliptic radio wave reflecting plate, a region where the signals are strong can be provided broadly. It is thus possible to broaden a range over which the communication accuracy between the interrogator and the transponder is high.

Also, the invention is characterized in that the interrogator includes a transmitter for generating an interrogation, and a receiver provided separately from the transmitter, for receiving an answer from the transponder,
the interrogator antenna includes a transmission interrogator antenna and a reception interrogator antenna, and
the transmission interrogator antenna is connected to the transmitter and the reception interrogator antenna is connected to the receiver.

According to the invention, because the transmission interrogator antenna is connected to the transmitter for generating an interrogation, and the reception interrogator antenna is connected to the receiver, it is possible to place the transmission interrogator antenna and the reception interrogator antenna far apart, which increases a degree of freedom in placement. Also, in this case, because it is possible to shorten a path, such as a connection line, from the respective antennas to the transmitter and the receiver, influences from the path, such as a connection line, to the signals can be reduced.

Also, the invention is characterized in that the transponder includes a processing circuit having at least a modulation portion and a memory portion for accumulating information, and an antenna for transmitting and receive a signal, wherein, upon receipt of a signal at the antenna, the processing circuit changes a reflection characteristic of the antenna according to the signal in the modulation portion with the use of a signal related to the information accumulated in the memory portion and reflects the signal received at the antenna.

According to the invention, upon receipt of a signal transmitted from the interrogator antenna, the processing circuit changes the reflection characteristic of the antenna in the modulation portion with the use of a signal related to the information accumulated in the memory portion according to the received signal from the interrogator and reflects the signal received at the antenna. The transponder is thereby able to read out the information accumulated in the memory portion by means of the interrogator. For example, it is possible to read out information about an object bearing the transponder with the use of the interrogator.

Also, the invention is characterized in that a substantially non-elliptic radio wave reflecting plate formed of a reflection surface of a shape different from a shape including a part of an elliptic curve or a similar curve is provided, and
the transponder is able to communicate with the interrogator at least via the substantially elliptic radio wave reflecting plate and the substantially non-elliptic radio wave reflecting plate.

According to the invention, by further reflecting the signals reflected on the reflection surface of the substantially elliptic radio wave reflecting plate on the reflection surface of the substantially non-elliptic radio wave reflecting plate, signals can be utilized more effectively. In particular, by placing the reflection surface of the substantially elliptic radio wave reflecting plate oppositely to the reflection surface of the substantially non-elliptic radio wave reflecting plate, it is possible to prevent the signals from scattering from a region sandwiched by the reflection surfaces of a plurality of reflecting plates.

Also, the invention is characterized in that the reflection surface includes a part of a circular curve or a curve similar thereto.

According to the invention, it is possible to receive signals transmitted from the interrogator antenna in the transponder by reflecting the signals on a substantially circular radio wave reflecting plate having a reflection surface including a part of a circular curve or a curve similar thereto. By providing the substantially circular radio wave reflecting plate to reflect signals, it is possible to prevent signals from scattering by passing through to the backside of the substantially circular radio wave reflecting plate, that is, the surface on a side opposite to the reflection surface. Interference of radio waves with another radio communications system can be thereby reduced. Also, it is possible to concentrate signals in a region opposing the reflection surface on the reflection surface side from the substantially circular radio wave reflecting plate, which enables the signals to be utilized effectively. For example, the transponder is able to receive signals transmitted from the interrogator antenna directly and through reflection on the substantially circular radio wave reflecting plate, and thereby to utilize the signals received in the both ways.

Also, because the reflection surface of the substantially circular radio wave reflecting plate is a curved surface, it is possible to concentrate signals reflected on the reflection surface locally within a region opposing the reflection surface of the substantially circular radio wave reflecting plate. Hence, a region where the signals are strong can be readily formed by concentrating signals transmitted from the interrogator antenna. By placing the transponder in this region where the signals are strong, the gain is improved, which can in turn improve the communication accuracy between the interrogator and the transponder. Further, a communicable distance between the interrogator antenna and the transponder can be extended.

Also, because signals transmitted from the interrogator antenna can be guided to the transponder by reflecting the signals on the reflection surface of the substantially circular radio wave reflecting plate, a propagation direction of the signals can be changed, which increases a degree of freedom in placement of the interrogator antenna and the transponder.

Also, the invention is characterized in that the interrogator antenna is placed in close proximity to a virtual straight line including a central point of the reflection surface of the substantially circular radio wave reflecting plate and passing through the reflection surface, to be directed to the reflection surface of the substantially circular radio wave reflecting plate almost in parallel with the virtual straight line.

According to the invention, signals transmitted from the interrogator antenna, placed in close proximity to a virtual straight line including a central point of the reflection surface of the substantially circular radio wave reflecting plate and passing through the reflection surface, to be directed to the reflection surface of the substantially circular radio wave reflecting plate almost in parallel with the virtual straight line, are reflected on the reflection surface of the substantially circular radio wave reflecting plate and then concentrate somewhere in close proximity to the central point of the reflection surface of the substantially circular radio wave reflecting plate. It is thus possible to form with ease a region where the signals transmitted from the interrogator antenna are strong, in close proximity to the central point of the reflection surface of the substantially circular radio wave reflecting plate. In other words, signals reflected on the reflection surface of the substantially circular radio wave reflecting plate concentrate not at a point position having no volume but in a region having predetermined dimensions. It is thus possible to provide broadly a region where the signals are strong, in close proximity to the central point of the reflection surface of the substantially circular radio wave reflecting plate. A communication range over which the communication accuracy between the interrogator and the transponder is high, therefore, can be broadened.

Also, the invention is characterized in that a plurality of interrogator antennas connected to the interrogator are provided,
signals transmitted from a single interrogator antenna are received in the transponder, and
a signal transmitted from the transponder is received at another interrogator antenna.

According to the invention, an interrogator antenna for transmitting signals to the transponder and an interrogator antenna for receiving a signal from a transponder are provided separately. Hence, it is not necessary to process a signal received from the transponder on the ground that signals transmitted from the interrogator to the interrogator antenna are reflected on the interrogator antenna connected to the interrogator per se as in a case where a single interrogator antenna transmits/receives a signal to/from the transponder. The processing of a signal received from the transponder, therefore, can be easier.

Also, the invention is characterized in that the transponder is placed in close proximity to the central point of the reflection surface of the substantially circular radio wave reflecting plate.

According to the invention, by placing the transponder in a region where the signals are strong, in close proximity to the central point of the reflection surface of the substantially circular radio wave reflecting plate, the transponder is able to efficiently receive signals transmitted from the interrogator antenna. The communication accuracy between the interrogator and the transponder can be thereby improved.

Also, the invention is characterized in that the reflection surface of the substantially circular reflecting plate includes at least a part of a spherical surface or a cylindrical surface, or a curved surface similar thereto.

According to the invention, the reflection surface of the substantially circular radio wave reflecting plate is configured to include a part of a spherical surface or a cylindrical surface, or a curved surface similar thereto. It is thus possible to efficiently concentrate signals transmitted from the interrogator antenna and reflected on the reflection surface of the reflecting plate of the substantially circular radio wave reflecting plate.

Also, the invention is characterized in that a plurality of interrogator antennas connected to the interrogator are provided, and
each interrogator antenna is placed in such a manner that signals transmitted from each interrogator antenna concentrate in different regions after the signals are reflected on the substantially circular radio wave reflecting plate.

According to the invention, because a plurality of interrogator antennas connected to the interrogator are placed in such a manner that signals transmitted from each interrogator antenna concentrate in different regions after the signals are reflected on the reflection surface of the substantially circular radio wave reflecting plate, a region where the signals are strong can be provided broadly. It is thus possible to broaden a range over which the communication accuracy between the interrogator and the transponder is high.

Also, the invention is characterized in that a substantially non-circular radio wave reflecting plate formed of a reflection surface of a shape different from a shape including a part of a circular curve or a curve similar thereto is provided,
and
the transponder is able to communicate with the interrogator at least via the substantially circular radio wave reflecting plate and the substantially non-circular radio wave reflecting plate.

According to the invention, by further reflecting the signals reflected on the reflection surface of the substantially circular radio wave reflecting plate on the reflection surface of the substantially non-circular radio wave reflecting plate, signals can be utilized more effectively. In particular, by placing the reflection surface of the substantially circular radio wave reflecting plate oppositely to the reflection surface of the substantially non-circular radio wave reflecting plate, it is possible to prevent the signals from scattering from a region sandwiched by the reflection surfaces of a plurality of reflecting plates.

Also, the invention is characterized in that the radio wave reflecting plate is a variable radio wave reflecting plate, and
reflecting plate changing means for changing at least one of a shape and a position of a reflection surface of the variable radio wave reflecting plate is further provided.

According to the invention, it is possible to receive signals transmitted from the interrogator antenna connected to the interrogator in the transponder, by reflecting the signals on the variable radio wave reflecting plate. By providing the variable radio wave reflecting plate to reflect signals, it is possible to prevent signals from scattering by passing through to the backside of the variable radio wave reflecting plate, that is, the surface on a side opposite to the reflection surface. Interference of radio waves with another radio communications system can be thereby reduced.

Also, by changing at least one of the shape and the position of the reflection surface of the variable radio wave reflecting plate by the reflecting plate changing means, a propagation direction of the reflected signals can be changed. It is thus possible to utilize signals effectively by setting a propagation direction of signals as needed. For example, the transponder is able to receive signals transmitted from the interrogator antenna directly and through reflection on the variable radio wave reflecting plate, and thereby to utilize the signals received in the both ways.

Also, because a propagation direction of the signals can be changed by guiding the signals from the interrogator antenna to the transponder by reflecting the signals on the reflection surface of the variable radio wave reflecting plate, a degree of freedom in placement of the interrogator antenna and the transponder can be increased.

Also, the invention is a radio communications system characterized in that the reflecting plate changing means is able to change the reflection surface to at least one shape from shapes including a part of a parabolic curve, an elliptic curve, and a circular curve, and a curve close thereto.

According to the invention, the reflection surface of the variable radio wave reflecting plate is changed by the reflecting plate changing means to at least one shape from shapes including a part of a parabolic curve, an elliptic curve, a circular curve, and a curve close thereto. Because the reflection surface of the variable radio wave reflecting plate is a curved surface, it is possible to concentrate signals reflected on the reflection surface locally within a region opposing the reflection surface of the variable radio wave reflecting plate. Hence, by concentrating signals transmitted from the interrogator antenna, a region where the signals are strong can be readily formed. Further, by changing the shape and the position of the reflection surface of the variable radio wave reflecting plate as needed, so that the transponder is placed in a region where the signals are strong, not only can the communication accuracy between the interrogator and the transponder be improved, but also a communicable distance between the interrogator antenna and the transponder can be extended. In addition, for example, when a plurality of variable radio wave reflecting plates are used, not only one but more than one region where the signals are strong can be formed, which enables the signals to be utilized more effectively.

Also, the invention is characterized in that the variable radio wave reflecting plate has at least flexibility, and
the reflecting plate changing means changes the reflection surface to a concave shape by fixing the variable radio wave reflecting plate on at least one point, and pressing at least one point on the variable radio wave reflecting plate, which is different from the fixing position, from a side opposite to the reflection surface.

According to the invention, the reflecting plate changing means changes the reflection surface to a concave shape by fixing the variable radio wave reflecting plate on at least one point, and pressing at least one point on the variable radio wave reflecting plate, which is different from the fixing position, from the side opposite to the reflection surface. It is thus possible not only to form a region where the signals are strong in a region opposing the reflection surface of the variable radio wave reflecting plate, but also to place the region in a desired region. Also, because the variable radio wave reflecting plate has at least flexibility, the reflection surface can be deformed by a configuration as simple as changing a pressing state from the side opposite to the reflection surface. Also, in the invention, when the configuration of the variable radio wave reflecting plate is further limited, for example, when the variable radio wave reflecting plate is formed to have flexibility and elasticity, the reflection surface can be deformed and the deformed shape can be maintained in a stable manner by a configuration as simple as changing a pressing state from the side opposite to the reflection surface.

Also, the invention is characterized in that the variable radio wave reflecting plate has at least flexibility, and
the reflecting plate changing means changes the reflection surface to a concave shape by pressing both end portions of the variable radio wave reflecting plate in a predetermined direction, in a direction to come in close proximity to each other.

According to the invention, the reflecting plate changing means changes the reflection surface of the variable radio wave reflecting plate to a concave shape by pressing both end portions of the variable radio wave reflecting plate in a predetermined direction, in a direction to come in close proximity to each other. It is thus possible not only to form a region where the signals are strong in a region opposing the reflection surface of the variable radio wave reflecting plate, but also to place the region in a desired region. Also, because the variable radio wave reflecting plate has at least flexibility, the reflection surface can be deformed by a configuration as simple as changing a pressing state to bring the both end portions in a predetermined direction in close proximity. Also, in the invention, when the configuration of the variable radio wave reflecting plate is further limited, for example, when the variable radio wave reflecting plate is formed to have flexibility and elasticity, the reflection surface can be deformed and the deformed shape can be maintained in a stable manner by a configuration as simple as changing a pressing state to bring the both end portions in a predetermined direction in close proximity.

Also, the invention is characterized in that the variable radio wave reflecting plate has at least flexibility, and
the reflecting plate changing means changes the reflection surface to a concave shape by pulling the variable radio wave reflecting plate at positions different from each other.

According to the invention, the reflecting plate changing means changes the reflection surface of the variable radio wave reflecting plate to a concave shape by pulling the variable radio wave reflecting plate at positions different from each other. It is thus possible not only to form a region where the signals are strong in a region opposing the reflection surface of the variable radio wave reflecting plate, but also to place the region in a desired region. Also, because the variable radio wave reflecting plate has at least flexibility, the reflection surface can be deformed by a configuration as simple as changing a pulling state at two positions. Also, in the invention, when the configuration of the variable radio wave reflecting plate is further limited, for example, when the variable radio wave reflecting plate is formed to have flexibility and elasticity, the reflection surface can be deformed and the deformed shape can be maintained in a stable manner by a configuration as simple as changing a pulling state at two positions.

Also, the invention is characterized in that the reflecting plate changing means includes one or more guiding members each being made to a different shape, and changes the shape of the reflection surface to a concave shape analogous to a shape of the guiding member by placing the variable radio wave reflecting plate selectively along the guiding member.

According to the invention, the reflecting plate changing means changes the shape of the reflection surface to a concave shape analogous to the shape of the guiding member by placing the variable radio wave reflecting plate selectively along the guiding member. It is thus possible not only to form a region where the signals are strong in a region opposing the reflection surface of the variable radio wave reflecting plate, but also to place the region in a desired region. Because the shape can be changed by merely changing the variable radio wave reflecting plate analogously, not only can the shape be set readily, but also the shape thus set can be maintained in a stable manner.

Also, the invention is characterized in that the reflecting plate changing means causes the variable radio wave reflecting plate to rotate about a predetermined rotational axis line.

According to the invention, by changing the position of the reflection surface by causing the variable radio wave reflecting plate to rotate about a predetermined rotational axis line by the reflecting plate changing means, a propagation direction of the reflected signals can be readily changed.

Also, the invention is characterized in that a plurality of interrogator antennas connected to the interrogator are provided,
a signal transmitted from one of the interrogator antennas is received in the transponder, and
a signal transmitted from the transponder is received at another interrogator antenna.

According to the invention, an interrogator antenna for transmitting signals to the transponder and an interrogator antenna for receiving a signal from the transponder are provided separately. Hence, it is not necessary to process a signal received from the transponder on the ground that signals transmitted from the interrogator to the interrogator antenna are reflected on the interrogator antenna as in a case where a single interrogator antenna transmits/receives a signal to/from the transponder. The processing of a signal received from the transponder, therefore, can be easier.

Also, the invention is characterized in that the interrogator includes a transmitter for generating an interrogation, and a receiver, provided separately from the transmitter, for receiving an answer from the transponder,
the interrogator antenna includes a transmission interrogator antenna and a reception interrogator antenna, and
the transmission interrogator antenna is connected to the transmitter and the reception interrogator antenna is connected to the receiver.

According to the invention, because the transmission interrogator antenna is connected to the interrogator for generating an interrogation, and the reception interrogator antenna is connected to the receiver, it is possible to place the transmission interrogator antenna and the reception interrogator antenna far apart, which increases a degree of freedom in placement. Also, in this case, because it is possible to shorten a path, such as a connection line, from the respective antennas to the transmitter and the receiver, influences from the path, such as a connection line, to the signals can be reduced.

Also, the invention is characterized in that an invariable radio wave reflecting plate having a reflection surface with a constant shape at a constant position is provided, and
the transponder is able to communicate with the interrogator at least via the variable radio wave reflecting plate and the invariable radio wave reflecting plate.

According to the invention, communications between the interrogator and the transponder are enabled by reflecting signals on the variable radio wave reflecting plate and the invariable radio wave reflecting plate. For example, by further reflecting signals reflected on the reflection surface of the variable radio wave reflecting plate on the reflection surface of the invariable radio wave reflecting plate, of the signals reflected on the variable radio wave reflecting plate, the signals that have not been received in the transponder are reflected on the invariable radio wave reflecting plate to concentrate in the transponder. The signals can be thereby utilized more effectively. In particular, by placing the reflection surface of the variable radio wave reflecting plate oppositely to the reflection surface of the invariable radio wave reflecting plate, it is possible to prevent signals from scattering from a region sandwiched by the reflection surfaces of a plurality of reflecting plates.

Brief Description of DrawingsOther and further objects, features, and advantages of the invention will be more explicit from the following detailed description taken with reference to the drawings wherein:
FIG. 1 is a view showing the configuration of an RFID system 10 according to a first embodiment of the invention;
FIG. 2 is a plan view of a radio frequency tag 13a that transmits and receives chiefly a linear polarized wave signal;
FIG. 3 is a plan view of a radio frequency tag 13b that transmits and receives chiefly a circular polarized wave signal;
FIG. 4 is a cross section of the radio frequency tag 13b shown in FIG. 3, viewed from the cutting plane line I-I;
FIG. 5 is a plan view of a radio frequency tag 13c that transmit and receive chiefly a circular polarized wave signal;
FIG. 6 is a view showing the configuration of an RFID system 20 according to a second embodiment of the invention;
FIG. 7 is a view showing the configuration of an RFID system 30 according to a third embodiment of the invention;
FIG. 8 is a view showing the configuration of an RFID system 40 according to a fourth embodiment of the invention;
FIG. 9A and FIG. 9B are views of the radio wave reflecting plate 21 when viewed from the front;
FIG. 10 is a perspective view of a radio wave reflecting plate 23 having a reflection surface comprising a parabolic cylindrical surface;
FIG. 11 is a view showing the configuration of an RFID system 50 according to a fifth embodiment of the invention;
FIG. 12 is a view showing the configuration of an RFID system 60 according to a sixth embodiment of the invention;
FIG. 13 is a view showing the configuration of an RFID system 70 according to a seventh embodiment of the invention;
FIG. 14 is a view showing the configuration of an RFID system 80 according to an eighth embodiment of the invention;
FIG. 15 is a view showing the configuration of an RFID system 90 according to a ninth embodiment of the invention;
FIG. 16 is a view showing the configuration of an RFID system 100 according to a tenth embodiment of the invention;
FIG. 17 is a view showing the configuration of an RFID system 101 according to an eleventh embodiment of the invention;
FIG. 18 is a perspective view of the RFID system 70;
FIG. 19 is a view showing the configuration of a radio frequency identification system 110 according to a twelfth embodiment of the invention;
FIG. 20 is a plan view of the substantially elliptic radio wave reflecting plate 114 when viewed from the first focal point 116;
FIG. 21 is a plan view of the substantially elliptic radio wave reflecting plate 114 when viewed from the first focal point 116;
FIG. 22 is a view showing the configuration of an RFID system 130 according to a thirteenth embodiment of the invention;
FIG. 23 is a view showing the configuration of an RFID system 140 as a fourteenth embodiment of the invention;
FIG. 24 is a view showing the configuration of an RFID system 150 according to a fifteenth embodiment of the invention;
FIG. 25 is a view showing the configuration of an RFID system 160 according to a sixteenth embodiment of the invention;
FIG. 26 is a perspective view of an RFID system 170 according to a seventeenth embodiment of the invention;
FIG. 27 is a view showing the configuration of an RFID system 180 according to an eighteenth embodiment of the invention;
FIG. 28 is a view showing an RFID system 190 according to a nineteenth embodiment of the invention;
FIG. 29 is a view showing the configuration of an RFID system 200 according to a twentieth embodiment of the invention;
FIG. 30 is a view showing the configuration of an RFID system 210 according to a twenty-first embodiment of the invention;
FIG. 31 is a view showing the configuration of an RFID system 230 according to a twenty-second embodiment of the invention;
FIG. 32 is a view showing the configuration of an RFID system 240 according to a twenty-third embodiment of the invention;
FIG. 33 is a view showing the configuration of an RFID system 250 according to a twenty-fourth embodiment of the invention;
FIG. 34 is a perspective view showing the configuration of an RFID system 260 according to a twenty-fifth embodiment of the invention;
FIG. 35 is a view showing the configuration of an RFID system 270 according to a twenty-sixth embodiment of the invention;
FIG. 36 is a view showing the configuration of an RFID system 280 according to a twenty-seventh embodiment of the invention;
FIG. 37 is a cross section showing the configuration of an RFID system 310 as a twenty-eighth embodiment of the invention;
FIG. 38 is a cross section showing a part of the reflecting plate changing means 315;
FIG. 39 is a cross section showing another example of the reflecting plate changing means 315;
FIG. 40 is a cross section showing one example of the shape of the reflection surface 314a;
FIG. 41 is a cross section showing another example of the shape of the reflection surface 314a;
FIG. 42 is a perspective view showing the configuration of an RFID system 335 according to a twenty-ninth embodiment of the invention;
FIG. 43 is a cross section showing a variable radio wave reflecting plate 314 and reflecting plate changing means 336;
FIG. 44 is a cross section showing a variable radio wave reflecting plate 345 and reflecting plate changing means 346 in an RFID system 400 according to a thirtieth embodiment of the invention;
FIG. 45 is a cross section showing a variable radio wave reflecting plate 314 and reflecting plate changing means 315 in an RFID system 410 according to a thirty-first embodiment of the invention;
FIG. 46 is a cross section showing a variable radio wave reflecting portion 314 and reflecting plate changing means 357 in an RFID system 420 according to a thirty-second embodiment of the invention;
FIG. 47 is a cross section showing a variable radio wave reflecting plate 314 and reflecting plate changing means 357 in an RFID system 430 according to a thirty-third embodiment of the invention;
FIG. 48 is a cross section showing a variable radio wave reflecting plate 314 and reflecting plate changing means 365 in an RFID system 440 according to a thirty-fourth embodiment of the invention;
FIG. 49 is a perspective view showing a variable radio wave reflecting plate 314 and reflecting plate changing means 375 in an RFID system 450 according to a thirty-fifth embodiment of the invention;
FIG. 50 is a cross section showing a variable radio wave reflecting plate 314 and reflecting plate changing means 377 in an RFID system 460 according to a thirty-sixth embodiment of the invention; and
FIG. 51 is a view showing the basic configuration of an RFID system 1 as a related art.

### Best Mode for Carrying out the Invention

Preferred embodiments of a radio communications system according to the invention will now be described with reference to the accompanying drawings.

A radio communications system, serving as a radio communications apparatus of the invention, comprises an interrogator, an interrogator antenna connected to the interrogator, and a transponder. The interrogator generates an interrogation to the transponder, and the interrogator antenna transmits an interrogation signal, which is a signal representing the interrogation, in the form of radio waves. The transponder receives the interrogation signal, and applies response processing to the interrogation. For example, the transponder generates an answer to the interrogation on the basis of its own accumulated information, and transmits by reflection a response signal, which is a signal representing the answer, in the form of radio waves. The response signal transmitted by reflection from the transponder is received at the interrogator antenna, and the answer is given to the interrogator. Also, for example, the transponder stores and accumulates information based on the interrogation. In the radio communications system, communications are enabled between the interrogator and the transponder in this manner. The invention, in particular, can be used suitably for short-distance radio communications.

Embodiments of the invention will now be described more concretely. In the invention, the term "plate shape" includes a tabular shape, that is, a flat-surface plate shape, and a bent plate shape, that is, a plate shape bent in a curved surface.

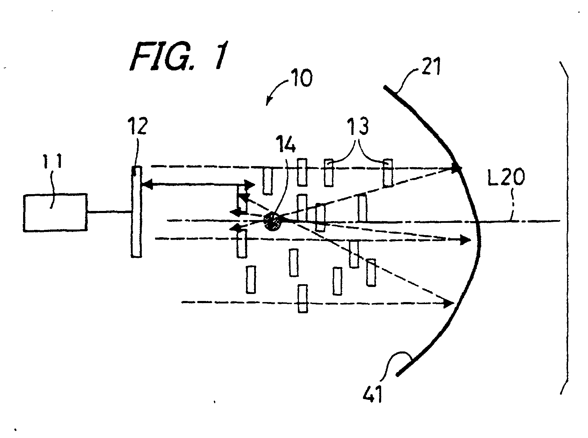

FIG. 1 is a view showing the configuration of a radio frequency identification (hereinafter, abbreviated to RFID) system 10 according to a first embodiment of the invention. The RFID system 10 comprises an interrogator 11, an interrogator antenna 12 connected to the interrogator 11, radio frequency tags 13 serving as transponders, and a radio wave reflecting plate 21 on which a reflection surface is formed. Shown in FIG. 1 is the cross section of the radio wave reflecting plate 21.

The radio wave reflecting plate 21 has a reflection surface 41 that reflects a radio wave signal. The reflection surface 41 of the radio wave reflecting plate 21 is a paraboloid of revolution, a parabolic cylindrical surface or the like including the intersection of a parabolic curve and an axis L20 of the curve as well as the curve. The radio wave reflecting plate 21 is able to reflect interrogation signals transmitted from the interrogator antenna 12 and response signals transmitted by reflection from the radio frequency tags 13 on the reflection surface 41. Hence, signals traveling in a direction parallel to the axis L20 of the radio wave reflecting plate 21, when reflected on the reflection surface 41 of the radio wave reflecting plate 21, concentrate on a focal point 14 of the reflection surface 41 of the radio wave reflecting plate 21. The focal point 14 of the reflection surface 41 of the radio wave reflecting plate 21 referred to herein means a position, at which is formed a focal point of the parabolic curve that defines the reflection surface 41 of the radio wave reflecting plate 21.

The interrogator 11 comprises a transmission portion for generating an interrogation to the radio frequency tags 13, a reception portion for receiving answers from the radio frequency tags 13, and a signal separator. The signal separator comprises a circulator for separating interrogation signals transmitted from the transmission portion to the interrogator antenna 12 from response signals received at the interrogator antenna 12. The transmission portion comprises an interrogation generating portion for generating an interrogation signal, which is information to be transmitted, representing an interrogation, such as a response instruction as an instruction to read out information accumulated in the radio frequency tags 13 and a write instruction as an instruction to write information in the radio frequency tag 13, a transmission source for generating carrier waves, and a modulator for modulating the carrier waves generated in the transmission source with the use of the interrogation signal as a signal representing the interrogation, to generate an interrogation signal. The reception portion comprises a demodulator, formed of a synchronous detector or the like, for demodulating a response signal received at the interrogator antenna 12.

The interrogator 11 is configured not only to transmit an interrogation signal generated in the modulator to the interrogator antenna 12, but also to obtain an answer by receiving from the interrogator antenna 12 the response signal received at the interrogator antenna 12 and by demodulating the response signal in the demodulator.

The interrogator antenna 12 has, for example, two dipole antennas orthogonal to each other, and a phase-shifter. An interrogation signal is provided to the respective dipole antennas from the phase-shifter by giving a phase difference of 90 degrees to each. It is thus possible to transmit the interrogation signal in the form of circular polarized waves. In addition, the interrogator antenna 12 converts signals obtained from the respective dipole antennas with a phase difference of 90 degrees from each other to signals having no phase difference from each other by means of the phase-shifter, and synthesizes the signals. The interrogator antenna 12 is able to receive both a response signal transmitted by reflection from the radio frequency tag 13 in the form of linear polarized waves and a response signal transmitted by reflection in the form of circular polarized waves.

In this embodiment, the interrogator 11 and the interrogator antenna 12 are provided separately. However, as another embodiment of the invention, the interrogator 11 and the interrogator antenna 12 may be combined into one unit. Also, as a further embodiment of the invention, the interrogator antenna 12 may be a normal circular polarized wave antenna or linear polarized wave antenna, such as a flat panel antenna.

The interrogator antenna 12 is placed oppositely to an open surface of the radio wave reflecting plate 21, that is, the reflection surface 41. It should be noted, however, that a distance between the interrogator antenna 12 and the radio wave reflecting plate 21 is greater than a distance between the radio wave reflecting plate 21 and its focal point 14. The radio frequency tags 13 are placed in a space between the interrogator antenna 12 and the radio wave reflecting plate 21.

The radio frequency tags 13 present in front of the interrogator antenna 12 are irradiated with interrogation signals transmitted from the interrogator antenna 12. The interrogation signals having passed straight through without being applied to the radio frequency tags 13 are reflected on the reflection surface 41 of the radio wave reflecting plate 21. The interrogation signals thus reflected concentrate on the focal point 14 of the reflection surface 41 of the radio wave reflecting plate 21.

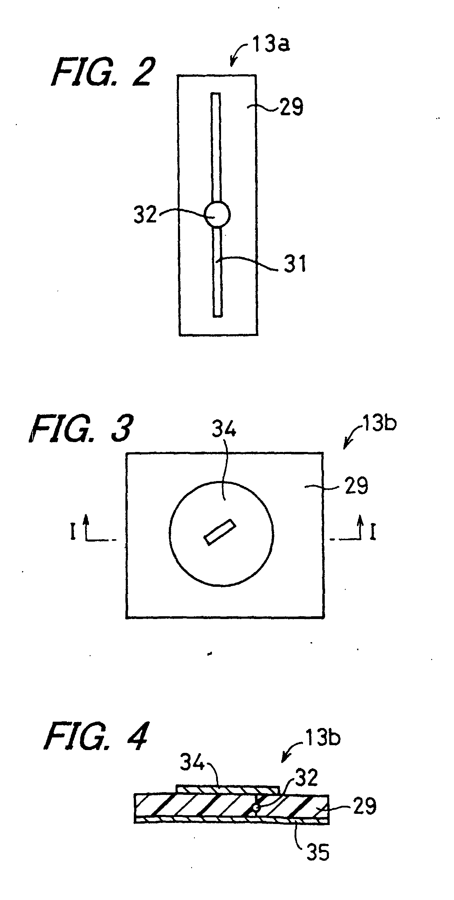

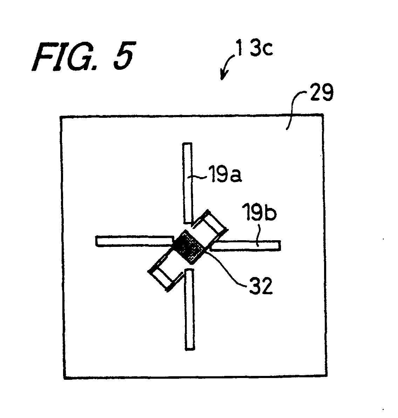

FIGs. 2 through 5 are views showing representative examples of the radio frequency tags 13. FIG. 2 is a plan view of a radio frequency tag 13a that transmits and receives chiefly a linear polarized wave signal. FIGs. 3 and 5 are plan views of radio frequency tags 13b and 13c, respectively, that transmit and receive chiefly a circular polarized wave signal. FIG. 4 is a cross section of the radio frequency tag 13b shown in FIG. 3, viewed from the cutting plane line I-I. Hereinafter, the radio frequency tags 13a through 13c are referred to as radio frequency tags 13 when referred to collectively.

In this embodiment, as the radio frequency tags 13, battery-less tags having no battery and instead obtaining driving power from interrogation signals transmitted from the interrogator antenna 12 are shown.

The first radio frequency tag 13a shown in FIG. 2 includes a dipole antenna 31 serving as a tag antenna and a tag IC (Integrated Circuit) 32 serving as a processing circuit on a tabular dielectric substrate 29. The tag IC 32 can be achieved by a semiconductor integrated circuit, and includes a demodulation portion, a modulation portion, and a memory portion for accumulating information.

In a case where an interrogation, obtained by demodulating an interrogation signal received at the dipole antenna 31 in the demodulation portion, is a response instruction, the modulation portion changes the reflection characteristic of the dipole antenna 31 with the use of a signal related to the information accumulated in the memory portion, and modulates a part of the interrogation signal to a response signal representing the answer by means of the dipole antenna 31, which signal is then transmitted by reflection. In this case, when the interrogation, obtained by demodulating the interrogation signal received at the dipole antenna 31 in the demodulation portion, is a write instruction, the received information is written into the memory portion.

In this embodiment, the tag IC 32 is configured to have a function addressing both a response instruction and a write instruction. However, as still another embodiment of the invention, the tag IC 32 may be configured to have a function addressing a response instruction alone. Also, in still another embodiment of the invention, the tag IC 32 may be configured in such a manner that, in a case where an interrogation, obtained by demodulating the interrogation signal received at the dipole antenna 31 in the demodulation portion, is a response instruction, the tag IC 32 modulates, in the modulation portion, according to the instruction, a signal related to the information accumulated in the memory portion, and controls the dipole antenna 31 to transmit a response signal representing the answer from the dipole antenna 31.

The radio frequency tag 13b shown in FIG. 3 and FIG. 4 has been proposed in Japanese Unexamined Patent Publication JP-A 2002-353735 by the applicant of the present application. This radio frequency tag 13b comprises a radiation surface 34 formed on one surface of a tabular dielectric substrate 29, a grounding surface 35 formed on the other surface of the dielectric substrate 29, and a tag IC 32 electrically connected to the radiation surface 34 and the grounding surface 35. In this embodiment, a combined tag is also effective, which is formed by laminating two radio frequency tags 13b that receive different circular polarized waves, one receiving left-handed circular polarized waves and the other receiving right-handed circular polarized waves.

The second radio frequency tag 13c shown in FIG. 5 includes dipole antennas 19a and 19b orthogonal to each other and placed on one surface of a tabular dielectric substrate 29, a phase adjusting circuit, and a tag IC 32 serving as a processing circuit. The second radio frequency tag 13b, by including the orthogonal dipole antennas 19a and 19b and thereby being provided with a phase difference, is able to transmit and receive circular polarized waves efficiently. Also, the radio frequency tag 13c is able to transmit and receive right-handed circular polarized waves and left-handed circular polarized waves. Hereinafter, the radio frequency tag 13c is occasionally referred to as the cross tag 13c.

It is preferable that the radio frequency tags 13 are able to make communications on the both surfaces, like a combined tag using the radio frequency tags 13a, 13c and the radio frequency tag 13b.

In a case where a signal transmitted from the interrogator antenna 12 is a linear polarized wave signal, the radio frequency tags 13a and 13c are used, and in the case of a circular polarized wave signal, the radio frequency tags 13b and 13c are used.

As has been described, in the RFID system 10, interrogation signals having passed straight through spaces among the radio frequency tags 13 are reflected on the reflection surface 41 of the radio wave reflecting plate 21. It is thus possible to prevent the scattering of interrogation signals, which enables the interrogation signals to be utilized effectively. Also, the interrogation signals reflected on the reflection surface 41 of the radio wave reflecting plate 21 concentrate on the focal point 14 of the reflection surface 41 of the radio wave reflecting plate 21, which makes signals in the vicinity of the focal point 14 strong. The term "in the vicinity of" referred to herein means a response processable range for the radio frequency tags 13 to respond to interrogations from the interrogator 11. Hence, the reception sensitivity is high between the interrogator 11 and the radio frequency tags 13 in the vicinity of the focal point 14 of the reflection surface 41 of the radio wave reflecting plate 21, which increases the communication accuracy, indicating the preciseness when delivering information that should be put through.

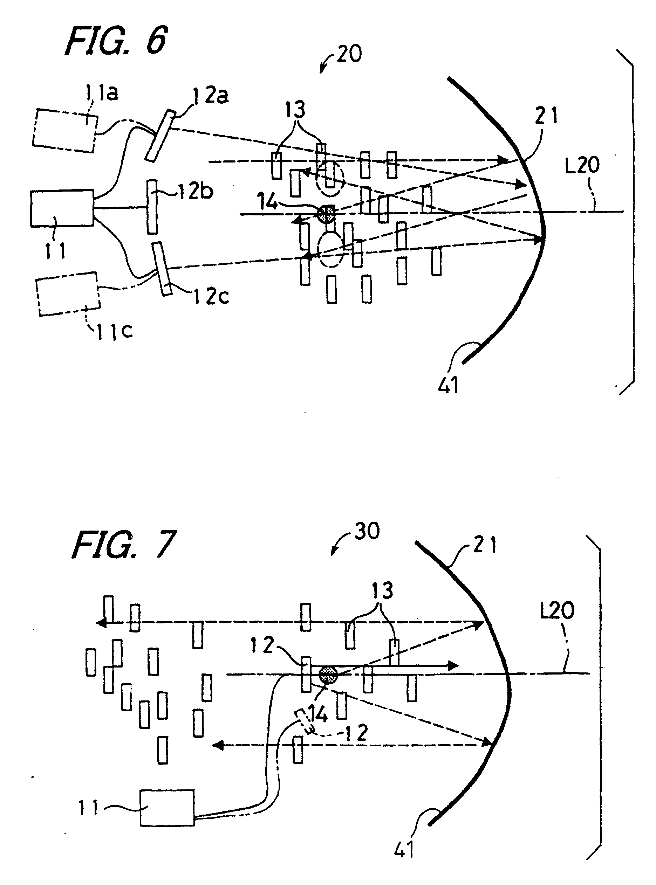

FIG. 6 is a view showing the configuration of an RFID system 20 according to a second embodiment of the invention. The RFID system 20 comprises an interrogator 11, a plurality of interrogator antennas 12a, 12b, and 12c connected to the interrogator 11, radio frequency tags 13, and a radio wave reflecting plate 21. Shown in FIG. 6 is the cross section of the radio wave reflecting plate 21. The RFID system 20 of this embodiment has the same configuration as the RFID system 10 as the first embodiment above. Hence, the corresponding portions are denoted by the same reference numerals, and a description thereof is omitted.

The reflection surface 41 of the radio wave reflecting plate 21 is a paraboloid of revolution, a parabolic cylindrical surface or the like including the intersection of a parabolic curve and an axis L20 of the curve as well as the curve. Hence, signals traveling in a direction parallel to the axis L20 of the radio wave reflecting plate 21, when reflected on the reflection surface 41 of the radio wave reflecting plate 21, concentrate on the focal point 14 of the reflection surface 41 of the radio wave reflecting plate 21. Also, signals traveling in a direction slightly tilted with respect to the axis L20 of the reflection surface 41 of the radio wave reflecting plate 21, that is, the axis of the parabolic curve included in the reflection surface 41, when reflected on the reflection surface 41 of the radio wave reflecting plate 21, form ambiguous focal points at positions different from the vicinity of the focal point 14 of the reflection surface 41 of the radio wave reflecting plate 21. In other words, interrogation signals reflected on the reflection surface 41 of the radio wave reflecting plate 21 concentrate in a region having predetermined dimensions in close proximity to the focal point 14.

The interrogator antennas 12a, 12b and 12c are of the same configuration as the interrogator antenna 12 described above, and are placed oppositely to the open surface of the radio wave reflecting plate 21. It should be noted, however, that distances from the respective interrogator antennas 12a, 12b, and 12c to the radio wave reflecting plate 21 are greater than a distance between the reflection surface 41 of the radio wave reflecting plate 21 and its focal point 14. The interrogator antennas 12a, 12b, and 12c are set to be directed to the vicinity of the focal point 14 of the reflection surface 41 of the radio wave reflecting plate 21. The radio frequency tags 13 are placed in a space between the interrogator antennas 12a, 12b, and 12c and the radio wave reflecting plate 21.

Interrogation signals from the interrogator antennas 12a, 12b, and 12c can be transmitted in a time-divisional manner or transmitted concurrently.

The radio frequency tags 13 present in front of the interrogator antennas 12a, 12b and 12c are irradiated with interrogation signals transmitted from the interrogator antennas 12a, 12b, and 12c. The interrogation signals that have passed straight through without being applied to the radio frequency tags 13 are reflected on the reflection surface 41 of the radio wave reflecting plate 21. The interrogation signals thus reflected concentrate on the focal point 14 of the reflection surface 41 of the radio wave reflecting plate 21 and at a different position in the vicinity of the focal point 14.

As has been described, the interrogation signals having passed straight through spaces among the radio frequency tags 13 are reflected on the reflection surface 41 of the radio wave reflecting plate 21. It is thus possible to prevent the scattering of interrogation signals, which enables the interrogation signals to be utilized effectively. Also, the interrogation signals reflected on the reflection surface 41 of the radio wave reflecting plate 21 concentrate on the focal point 14 of the reflection surface 41 of the radio wave reflecting plate 21 and at a different position in the vicinity of the focal point 14. Hence, in comparison with the RFID system 10 as the first embodiment above, a region where signals are strong is formed broadly, which in turn broadens a communicable region. In addition, in a case where the communication accuracy differs in each of the interrogator antennas 12a, 12b, and 12c due to obstacles, the communication accuracy of the overall RFID system 20 is increased by selecting information from the interrogator antenna having the highest communication accuracy by the interrogator 11.

In the RFID system 20, the interrogator antennas 12a, 12b, and 12c are connected to a single interrogator 11. However, each may be connected to a different interrogator. For example, interrogators 11a and 11c of the same configuration as the interrogator 11 may be provided, so that the interrogator antenna 12a is connected to the interrogator 11a, the interrogator antenna 12b is connected to the interrogator 11, and the interrogator antenna 12c is connected to the interrogator 11c. In this case, because processing can be performed in each interrogator, the processing ability of the overall system can be increased. Also, signals transmitted from the interrogator antennas 12a, 12b, and 12c may have different signal formats. For example, in a case where both a left-handed circular polarized wave tag and a right-handed circular polarized wave tag are used as the radio frequency tags 13, the interrogator antennas 12a and 12b may transmit a left-handed circular polarized wave signal, and the interrogator antenna 12c may transmit a right-handed circular polarized wave signal. In this case, a right-handed circular polarized wave tag, having an inversed direction and thereby incapable of making communications with the use of a left-handed circular polarized wave signal transmitted from the interrogator antennas 12a and 12b, becomes able to make communications with the use of a right-handed circular polarized wave signal transmitted from the interrogator antenna 12c.

FIG. 7 is a view showing the configuration of an RFID system 30 according to a third embodiment of the invention. The RFID system 30 comprises an interrogator 11, an interrogator antenna 12 connected to the interrogator 11, radio frequency tags 13, and a radio wave reflecting plate 21. Shown in FIG. 7 is the cross section of the radio wave reflecting plate 21. The reflection surface 41 of the radio wave reflecting plate 21 is a paraboloid of revolution, a parabolic cylindrical surface or the like including the intersection of a parabolic curve and an axis L20 of the curve as well as the curve. The RFID system 30 of this embodiment has the same configuration as the RFID systems of the first and second embodiments above. Hence, the corresponding portions are denoted by the same reference numerals, and a description thereof is omitted.

The interrogator antenna 12 is placed oppositely to the open surface of the radio wave reflecting plate 21 in the vicinity of the focal point 14 of the reflection surface 41 of the radio wave reflecting plate 21. The radio frequency tags 13 are placed in a space between the interrogator antenna 12 and the reflection surface 41 of the radio wave reflecting plate 21, or placed on the opposite side of the radio wave reflecting plate 21 with the interrogator antenna 12 in between, or in the both locations.

The radio frequency tags 13 present in front of the interrogator antenna 12 are irradiated with interrogation signals transmitted from the interrogator antenna 12. Interrogation signals having passed straight through without being applied to the radio frequency tags 13 are reflected on the reflection surface 41 of the radio wave reflecting plate 21. The interrogation signals thus reflected travel in parallel with the axis L20 of the reflection surface 41 of the radio wave reflecting plate 21. In a case where the radio frequency tags 13 are absent in a space between the focal point 14 and the radio wave reflecting plate 21, a degree of signal enhancement by the radio wave reflecting plate 21 is equal to a gain G obtained by a parabolic antenna, which is approximately G = 4πA/λ² (A is an open area and λ is a wavelength of radio waves).

As has been described, because the interrogation signals having passed straight through spaces among the radio frequency tags 13 are reflected on the reflection surface 41 of the radio wave reflecting plate 21, a region where the interrogation signals are irradiated is limited. In short, the scattering of interrogation signals is prevented, which enables the interrogation signals to be utilized effectively.

In the RFID system 30, the interrogator antenna 12 is not limited to one. For example, another interrogator antenna 12 may be additionally provided at a position indicated by a virtual line as is shown in FIG. 7. In this case, the interrogator antennas 12 are placed in such a manner that interrogation signals transmitted from the respective interrogator antennas 12 are reflected on the reflection surface 41 of the radio wave reflecting plate 21, and then travel independently in different directional directions to irradiate regions different from each other. When configured in this manner, a communicable region is broadened in comparison with a case where a single interrogator antenna is provided. A plurality of interrogator antennas may be connected to a single interrogator or respectively to different interrogators. In either case, interrogation signals from a plurality of interrogator antennas can be transmitted in a time-divisional manner or transmitted concurrently.

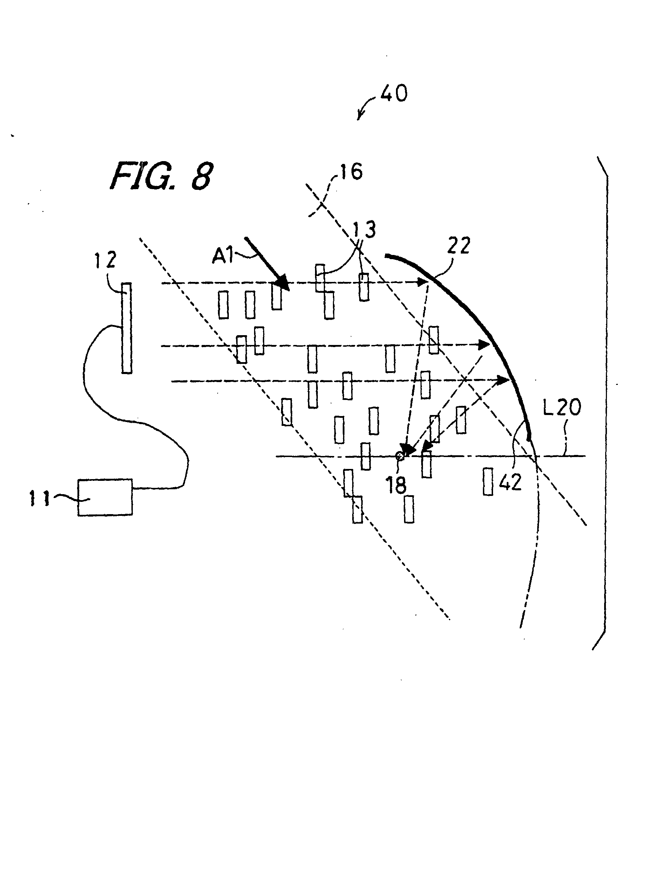

FIG. 8 is a view showing the configuration of an RFID system 40 according to a fourth embodiment of the invention. In this embodiment, the RFID system 40 comprises an interrogator 11, an interrogator antenna 12 connected to the interrogator 11, radio frequency tags 13, a radio wave reflecting plate 22, and a transportation apparatus 16. Shown in FIG. 8 is the cross section of the radio wave reflecting plate 22. The RFID system 40 of this embodiment has the same configuration as the RFID systems of the first through third embodiments above. Hence, the corresponding portions are denoted by the same reference numerals, and a description thereof is omitted.

The radio wave reflecting plate 22 includes a reflection surface 42 that reflects radio wave signals. The reflection surface 42 of the radio wave reflecting plate 22 is a paraboloid of revolution, a parabolic cylindrical surface or the like including a curve of a parabolic curve in a portion shifted from the intersection of the parabolic curve and an axis L20 of the curve. The radio wave reflecting plate 22 is able to reflect interrogation signals transmitted from the interrogator antenna 12 and response signals transmitted by reflection from the radio frequency tags 13 on the reflection surface 42.

The interrogator antenna 12 is placed oppositely to the open surface of the radio wave reflecting plate 22, that is, the reflection surface 42. The radio frequency tags 13 are placed within a signal travel path. The radio frequency tags 13 are moved in a direction indicated by an arrow A1 by the transportation apparatus 16.

The radio frequency tags 13 present in front of the interrogator antenna 12 are irradiated with interrogation signals transmitted from the interrogator antenna 12. The interrogation signals having passed straight through without being applied to the radio frequency tags 13 are reflected on the reflection surface 42 of the radio wave reflecting plate 22. The interrogation signals thus reflected concentrate on a focal point 18 of the reflection surface 42 of the radio wave reflecting plate 22. The focal point 18 of the reflection surface 42 of the radio wave reflecting plate 22 referred to herein means a position, at which is formed a focal point of the parabolic curve that defines the reflection surface 42 of the radio wave reflecting plate 22. It should be noted, however, that the focal point 18 is at a position shifted from a path through which the interrogation signals from the interrogator antenna 12 pass to reach the radio wave reflecting plate 22.

As has been described, the interrogation signals having passed straight through spaces among the radio frequency tags 13 are reflected on the reflection surface 42 of the radio wave reflecting plate 22. It is thus possible to prevent the scattering of interrogation signals, which enables the interrogation signals to be utilized effectively. Also, the interrogation signals reflected on the reflection surface 42 of the radio wave reflecting plate 22 concentrate in the vicinity of the focal point 18 at a position shifted from the path through which the interrogation signals from the interrogator antenna 12 pass to reach the radio wave reflecting plate 22. Hence, a region where the interrogation signals are strong is broad in comparison with the RFID system 10, and a communicable region is thereby broadened.

The position of the interrogator antenna 12 may be in the vicinity of the focal point 18 of the reflection surface 42 of the radio wave reflecting plate 22. In this case, the interrogator antenna 12 will never block signals reflected on the reflection surface 42 of the radio wave reflecting plate 22. Therefore, the radio frequency tags 13 are irradiated with the interrogation signals transmitted from the interrogator antenna 12 efficiently.

In the RFID system 40, in a case where a plurality of interrogator antennas are provided and each transmits interrogation signals, a region where the interrogation signals are strong is broadened in comparison with a case where a single interrogator antenna is provided. The plurality of interrogator antennas may be connected to a single interrogator, or connected respectively to different interrogators. In either case, the interrogation signals from the plurality of interrogator antennas can be transmitted in a time-divisional manner or transmitted concurrently.

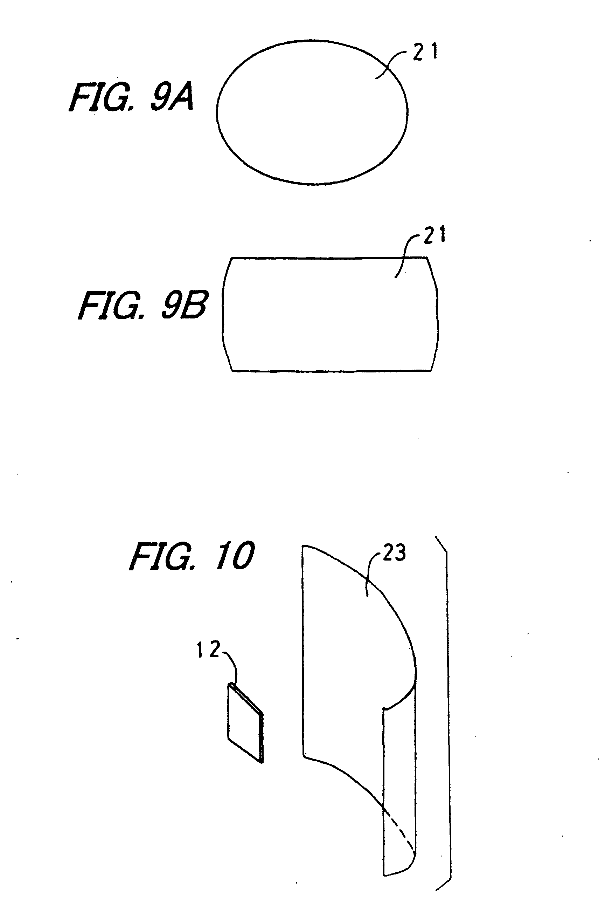

FIGs. 9A and 9B are views of the radio wave reflecting plate 21 when viewed from the front. As is shown in FIG. 9A, the radio wave reflecting plate 21 may be a paraboloid of revolution of an elliptical shape when viewed from the front, or as is shown in FIG. 9B, it may be a paraboloid of an almost rectangular shape when viewed from the front.

The reflection surface of the radio wave reflecting plate in still another embodiment of the invention may be a curved surface including a part of a curve similar to a parabolic curve, instead of a part of a paraboloid of revolution or a parabolic cylindrical surface.

FIG. 10 is a perspective view of a radio wave reflecting plate 23 having a reflection surface comprising a parabolic cylindrical surface. The interrogator antenna 12 is placed oppositely to the radio wave reflecting plate 23. Although it is not shown in the drawing, the radio frequency tags 13 are placed in a space between the interrogator antenna 12 and the radio wave reflecting plate 23.

The reflection surface of the radio wave reflecting plate in still another embodiment of the invention may be a curved surface similar to a parabolic cylindrical surface instead of a parabolic cylindrical surface.

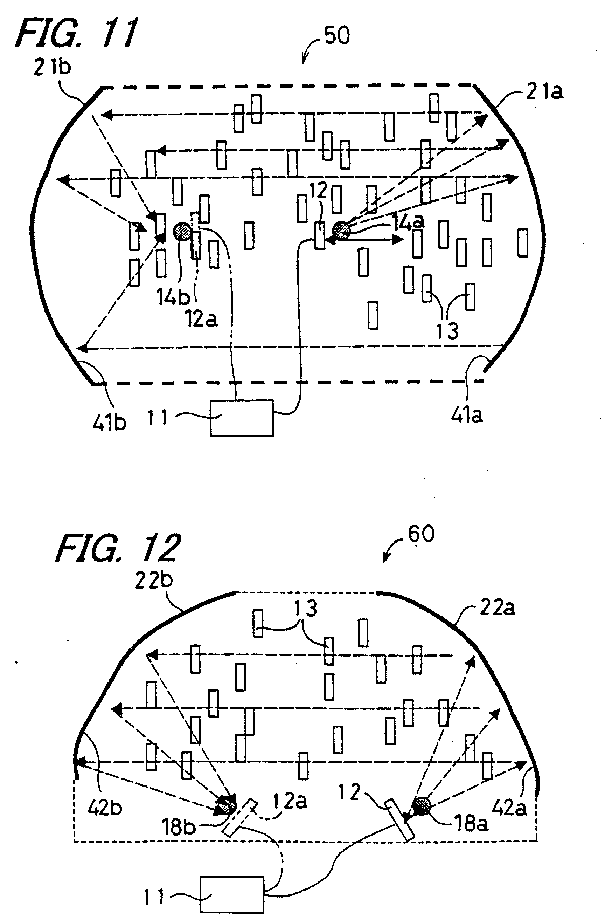

FIG. 11 is a view showing the configuration of an RFID system 50 according to a fifth embodiment of the invention. The RFID system 50 comprises an interrogator 11, an interrogator antenna 12 connected to the interrogator 11, radio frequency tags 13, and radio wave reflecting plates 21a and 21b. Shown in FIG. 11 are the cross sections of the radio wave reflecting plates 21a and 21b. The RFID system 50 of this embodiment has the same configuration as the RFID systems of the first through fourth embodiments above. Hence, the corresponding portions are denoted by the same reference numerals, and a description thereof is omitted.

Reflection surfaces 41a and 41b of the radio wave reflecting plates 21a and 21b, respectively, are paraboloids of revolution, parabolic cylindrical surfaces or the like including the intersection of a parabolic curve and an axis of the curve as well as the curve. For example, the reflection surfaces 41a and 41b of the radio wave reflecting plates 21a and 21b, respectively, are paraboloids cut out symmetrically with respect to the axes.

The radio wave reflecting plates 21a and 21b are placed in such a manner that the reflection surfaces 41a and 41b oppose each other so that the axes thereof are aligned with each other. The radio frequency tags 13 are placed in a region sandwiched by the radio wave reflecting plates 21a and 21b. The interrogator antenna 12 is placed oppositely to the open surface of one radio wave reflecting plate 21a, that is, the reflection surface 41a, in the vicinity of a focal point 14a of the reflection surface 41a of one radio wave reflecting plate 21a. The focal point 14a of the reflection surface 41a of the radio wave reflecting plate 21a referred to herein means a position, at which is formed a focal point of the parabolic curve that defines the reflection surface 41a of the radio wave reflecting plate 21a.

Interrogation signals transmitted from the interrogator antenna 12 are reflected on the reflection surface 41a of one radio wave reflecting plate 21a, and then travel toward the other radio wave reflecting plate 21b in parallel with the axes of the radio wave reflecting plates 21a and 21b. The interrogation signals are reflected again on the reflection surface 42b of the other radio wave reflecting plate 21b, and concentrate on a focal point 14b of the reflection surface 42b of the other radio wave reflecting plate 21b. The focal point 14b of the reflection surface 42b of the radio wave reflecting plate 21b referred to herein means a position, at which is formed a focal point of the parabolic curve that defines the reflection surface 42b of the radio wave reflecting plate 21b.

As has been described, the interrogation signals having passed straight through spaces among the radio frequency tags 13 are reflected on the reflection surfaces 41a and 41b of the radio wave reflecting plate 21a and 21b, respectively. It is thus possible to prevent the interrogation signals from scattering to the outside of the region sandwiched by the radio wave reflecting plates 21a and 21b, which enables the interrogation signals to be utilized effectively. In addition, interference of signals with another system can be improved.

Also, the interrogation signals reflected on the reflection surface 42b of the other radio wave reflecting plate 21b concentrate on the focal point 14b of the reflection surface 42b of the other radio wave reflecting plate 21b. Hence, although the vicinity of the focal point 14b of the other radio wave reflecting plate 21b is far from the interrogator antenna 12, it forms a region where the interrogation signals are strong.

In the RFID system 50, another interrogator antenna 12 may be additionally provided oppositely to the open surface of the other radio wave reflecting plate 21b, in the vicinity of the focal point 14b of the reflection surface 42b of the other radio wave reflecting plate 21b. In this case, a region where communications are disabled with the use of interrogation signals from the interrogator antenna 12 becomes a region where communications are enabled with the use of interrogation signals from another interrogator antenna 12. In this manner, a communicable region can be broadened. Further, for example, by configuring in such a manner that a right-handed circular polarized wave signal is transmitted from the interrogator antenna 12 and a left-handed circular polarized wave signal is transmitted from another interrogator antenna 12, it is possible to avoid interference of signals between the interrogator antennas.

FIG. 12 is a view showing the configuration of an RFID system 60 according to a sixth embodiment of the invention. The RFID system 60 comprises an interrogator 11, an interrogator antenna 12 connected to the interrogator 11, radio frequency tags 13, and radio wave reflecting plates 22a and 22b. Shown in FIG. 12 are the cross sections of the radio wave reflecting plates 22a and 22b. The RFID system 60 of this embodiment has the same configuration as the RFID systems of the first through fifth embodiments above. Hence, the corresponding portions are denoted by the same reference numerals, and a description thereof is omitted. Reflection surfaces 42a and 42b of the radio wave reflecting plates 22a and 22b, respectively, are paraboloids of revolution, parabolic cylindrical surfaces or the like including a curve of a parabolic curve in a portion shifted from the intersection of the parabolic curve and an axis of the curve.

The radio wave reflecting plates 22a and 22b are placed in such a manner that the reflection surfaces 42a and 42b oppose each other so that the axes thereof are aligned with each other. The radio frequency tags 13 are placed in a region sandwiched by the radio wave reflecting plates 22a and 22b. The interrogator antenna 12 is placed oppositely to the reflection surface 42a of one radio wave reflecting plate 22a, in the vicinity of a focal point 18a of the reflection surface 42a of one radio wave reflecting plate 22a.

Interrogation signals transmitted from the interrogator antenna 12 are reflected on the reflection surface 42a of one radio wave reflecting plate 22a, and then travel toward the other radio wave reflecting plate 22b in parallel with the axes of the parabolic curves included in the reflection surfaces 42a and 42b of the radio wave reflecting plates 22a and 22b, respectively. The interrogation signals are reflected again on the reflection surface 42b of the other radio wave reflecting plate 22b, and concentrate on a focal point 18b of the reflection surface 42b of the other radio wave reflecting plate 22b.

The focal point 18a of the reflection surface 42a of one radio wave reflecting plate 22a is present on the outside of the region sandwiched by the radio wave reflecting plates 22a and 22b, and the interrogator antenna 12 is placed on the focal point 18b of the reflection surface 42a of the radio wave reflecting plate 22a. The interrogator antenna 12, therefore, will never block the interrogation signals reflected on one radio wave reflecting plate 22a, that is, the interrogation signals that travel in a space between the radio wave reflecting plates 22a and 22b. Therefore, the radio frequency tags 13 are irradiated with the interrogation signals transmitted from the interrogator antenna 12 efficiently.

In the RFID system 60, another interrogator antenna 12a may be additionally provided oppositely to the open surface of the other radio wave reflecting plate 22b, in the vicinity of the focal point 18b of the other radio wave reflecting plate 22b. In this case, a region where communications are disabled with the use of interrogation signals from the interrogator antenna 12 becomes a region where communications are enabled with the use of interrogation signals from another interrogator antenna 12a. In this manner, a communicable region can be broadened.

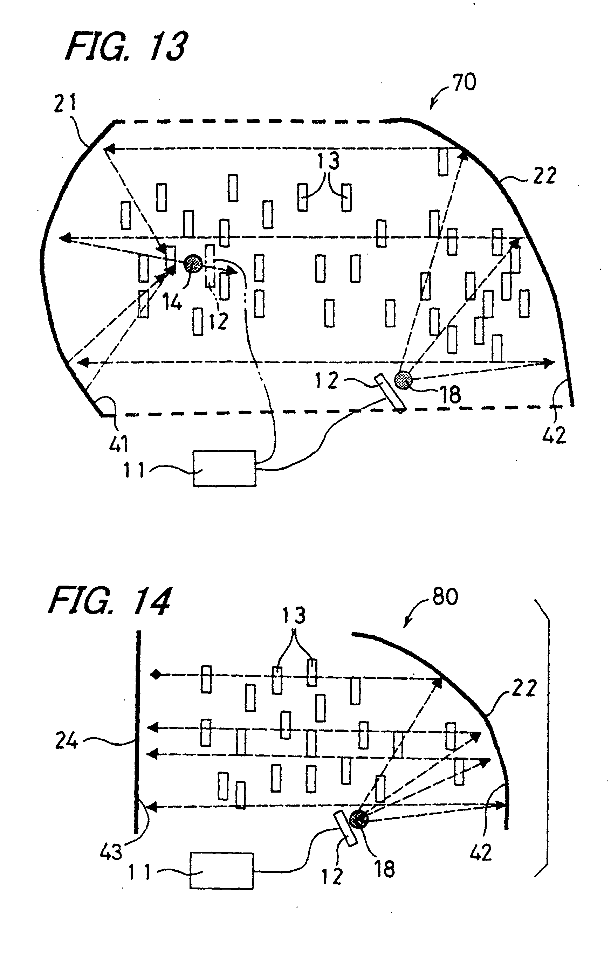

FIG. 13 is a view showing the configuration of an RFID system 70 according to a seventh embodiment of the invention. The RFID system 70 comprises an interrogator 11, an interrogator antenna 12 connected to the interrogator 11, radio frequency tags 13, and radio wave reflecting plates 21 and 22. Shown in FIG. 13 are the cross sections of the radio wave reflecting plates 21 and 22. The RFID system 70 of this embodiment has the same configuration as the RFID systems of the first through sixth embodiments above. Hence, the corresponding portions are denoted by the same reference numerals, and a description thereof is omitted. The reflection surface 41 of one radio wave reflecting plate 21 is a paraboloid of revolution, a parabolic cylindrical surface or the like including the intersection of a parabolic curve and an axis of the curve as well as the curve. The reflection surface 42 of the other radio wave reflecting plate 22 is a paraboloid surface including a curve of a parabolic curve in a portion shifted from the intersection of the parabolic curve and an axis of the curve.

The radio wave reflecting plates 21 and 22 are placed in such a manner that the reflection surfaces 41 and 42 oppose each other. The radio frequency tags 13 are placed in a region sandwiched by the radio wave reflecting plates 21 and 22. The interrogator antenna 12 is placed oppositely to the reflection surface 42 of the radio wave reflecting plate 22, in the vicinity of the focal point 18 of the reflecting plate 42 of the other radio wave reflecting plate 22.

Interrogation signals transmitted from the interrogator antenna 12 are reflected on the reflection surface 42 of the other radio wave reflecting plate 22, and then travel toward one radio wave reflecting plate 21 in parallel with the axes of the parabolic curves included in the reflection surfaces 41 and 42 of the radio wave reflecting plates 21 and 22, respectively. The interrogation signals are reflected again on the reflection surface 41 of one radio wave reflecting plate 21, and concentrate on the focal point 14 of the reflection surface 41 of one radio wave reflecting plate 21.

Interrogation signals transmitted from the interrogator antenna 12, therefore, travel without being blocked by the interrogator antenna 12, and concentrate on the focal point 18 of the reflection surface 41 of one radio wave reflecting plate 21. That is to say, interrogation signals transmitted from the interrogator antenna 12 concentrate efficiently on the focal point 18 of the reflection surface 41 of one radio wave reflecting plate 21.

In the RFID system 7, another interrogator antenna 12, indicated by a virtual line of FIG. 13, may be additionally provided in a manner so as to oppose the open surface of the radio wave reflecting plate 21, in the vicinity of the focal point 18 of one radio wave reflecting plate 21.

FIG. 14 is a view showing the configuration of an RFID system 80 according to an eighth embodiment of the invention. The RFID system 80 comprises an interrogator 11, an interrogator antenna 12 connected to the interrogator 11, radio frequency tags 13, and radio wave reflecting plate 22 and 24. Shown in FIG. 14 are the cross sections of the radio wave reflecting plates 22 and 24. The RFID system 80 of this embodiment has the same configuration as the RFID systems of the first through seventh embodiments above. Hence, the corresponding portions are denoted by the same reference numerals, and a description thereof is omitted. The reflection surface 42 of one radio wave reflecting plate 22 is a paraboloid of revolution, a parabolic cylindrical surface or the like including a curve of a parabolic curve in a portion shifted from the intersection of the parabolic curve and an axis of the curve.

The other radio wave reflecting plate 24 has a reflection surface 43 that reflects radio wave signals. The reflection surface 43 of the other radio wave reflecting plate 24 is tabular. The other radio wave reflecting plate 24 is able to reflect interrogation signals transmitted from the interrogator antenna 12 and response signals transmitted by reflection from the radio frequency tags 13 on the reflection surface 43.

The other radio wave reflecting plate 24 is placed in such a manner that the reflection surface 43 opposes the reflection surface 42 of one radio wave reflecting plate 22 while the reflection surface 43 intersects with the axis of one radio wave reflecting plate 22 at right angles. The radio frequency tags 13 are placed in a region sandwiched by the reflection surfaces 42 and 43 of the radio wave reflecting plates 22 and 24, respectively. The interrogator antenna 12 is placed oppositely to the reflection surface 42 of one radio wave reflecting plate 22, in the vicinity of the focal point 18 of the reflection surface 42 of one radio wave reflecting plate 22.

Interrogation signals transmitted from the interrogator antenna 12 are reflected on the reflection surface 42 of one radio wave reflecting plate 22, and then travel toward the other radio wave reflecting plate 24 in parallel with the axis of the parabolic curve included in the reflection surface 42 of one radio wave reflecting plate 22. The interrogation signals are reflected again on the reflection surface 43 of the other radio wave reflecting plate 24.

As has been described, the interrogation signals are reflected on the reflection surfaces 42 and 43 of the radio wave reflecting plates 22 and 24, respectively. It is thus possible to prevent the scattering of interrogation signals, which enables the interrogation signals to be utilized effectively.

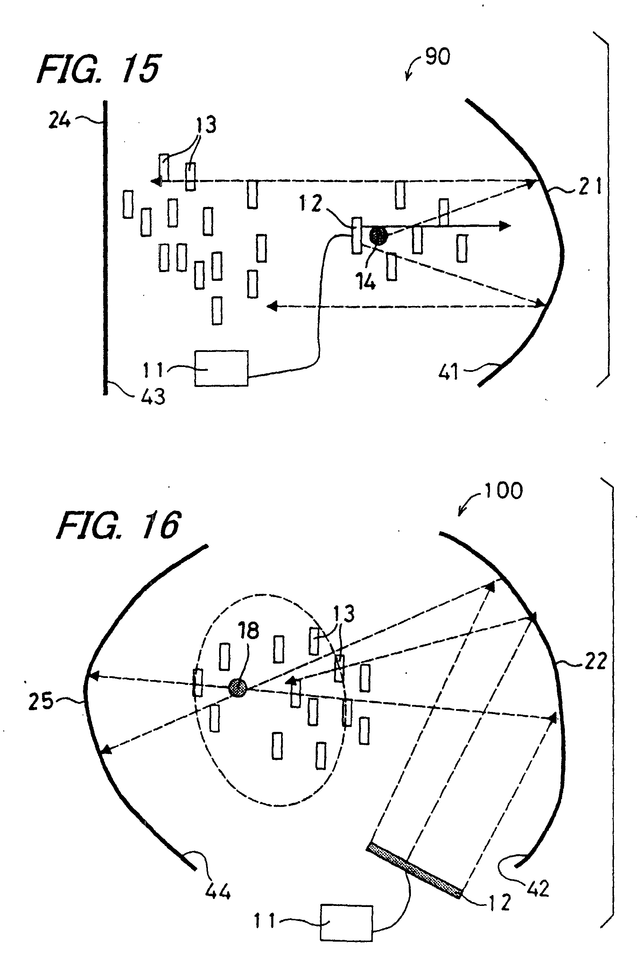

FIG. 15 is a view showing the configuration of an RFID system 90 according to a ninth embodiment of the invention. The RFID system 90 comprises an interrogator 11, an interrogator antenna 12 connected to the interrogator 11, radio frequency tags 13, and radio wave reflecting plates 21 and 24. Shown in FIG. 15 are the cross sections of the radio wave reflecting plates 21 and 24. The RFID system 90 of this embodiment has the same configuration as the RFID systems of the first through eighth embodiments above. Hence, the corresponding portions are denoted by the same reference numerals, and a description thereof is omitted. The reflection surface 41 of one radio wave reflecting plate 21 is a paraboloid of revolution, a parabolic cylindrical surface or the like including the intersection of a parabolic curve and an axis of the curve as well as the curve. The reflection surface 43 of the other radio wave reflecting plate 24 is tabular.

The other radio wave reflecting plate 24 is placed in such manner that the reflection surface 43 opposes the reflection surface 41 of one radio wave reflecting plate 21 while the reflection surface 43 intersects with the axis of one radio wave reflecting plate 21 at right angles. The radio frequency tags 13 are placed in a region sandwiched by the reflection surfaces 41 and 43 of the radio wave reflecting plates 21 and 24, respectively. The interrogator antenna 12 is placed oppositely to the reflection surface 41 of one radio wave reflecting plate 21, in the vicinity of the focal point 14 of the reflection surface 42 of one radio wave reflecting plate 21.

Interrogation signals transmitted from the interrogator antenna 12 are reflected on the reflection surface 42 of one radio wave reflecting plate 21, and then travel toward the other radio wave reflecting plate 24 in parallel with the axis of the parabolic curve included in the reflection surface 41 of one radio wave reflecting plate 21. The interrogation signals are reflected again on the other radio wave reflecting plate 24.

As has been described, by reflecting the interrogation signals on the radio wave reflecting plates 21 and 24, it is possible to prevent the scattering of interrogation signals, which enables the interrogation signals to be utilized effectively.

FIG. 16 is a view showing the configuration of an RFID system 100 according to a tenth embodiment of the invention. The RFID system 100 comprises an interrogator 11, an interrogator antenna 12 connected to the interrogator 11, radio frequency tags 13, and radio wave reflecting plates 22 and 25. Shown in FIG. 16 are the cross sections of the radio wave reflecting plates 22 and 25. The RFID system 100 of this embodiment has the same configuration as the RFID systems of the first through ninth embodiments above. Hence, the corresponding portions are denoted by the same reference numerals, and a description thereof is omitted. The reflection surface 42 of one radio wave reflecting plate 22 is a paraboloid of revolution, a parabolic cylindrical surface or the like including a curve of a parabolic curve in a portion shifted from the intersection of the parabolic curve and an axis of the curve.

The other radio wave reflecting plate 25 has a reflection surface 44 that reflects radio wave signals. The reflection surface 44 of the other radio wave reflecting plate 25 is a curved surface including a part of a circular curve. The other radio wave reflecting plate 25 is able to reflect interrogation signals transmitted from the interrogator antenna 12 and response signals transmitted by reflection from the radio frequency tags 13 on the reflection surface 44.

The other radio wave reflecting plate 25 is placed in such a manner that the reflection surface 44 opposes the reflection surface 42 of one radio wave reflecting plate 22, while the center of a circular curved surface including the circular curve, that is, the center of a spherical surface including the circular curve included in the reflection surface 44, is positioned near the focal point 18 of the reflection surface 42 of one radio wave reflecting plate 22. The radio frequency tags 13 are placed in a region sandwiched by the reflection surfaces 42 and 44 of the radio wave reflecting plates 22 and 25, respectively. The interrogator antenna 12 is placed oppositely to the reflection surface 42 of one radio wave reflecting plate 22 in such a manner that a travel direction of interrogation signals transmitted from the interrogator antenna 12 becomes parallel to the axis of the parabolic curve included in the reflection surface 42 of one radio wave reflecting plate 22.

Interrogation signals transmitted from the interrogator antenna 12 are reflected on the reflection surface 42 of one radio wave reflecting plate 22, and concentrate first on the focal point 18 of the reflection surface 42 of one radio wave reflecting plate 22, after which the signals are split again to travel toward the other radio wave reflecting plate 25. The signals are reflected again on the reflection surface 44 of the other radio wave reflecting plate 25, and concentrate on the focal point 18 of the reflection surface 42 of one radio wave reflecting plate 22. Hence, the vicinity of the focal point 18 of the reflection surface 42 of one radio wave reflecting plate 22 becomes a region where the interrogation signals are strong.

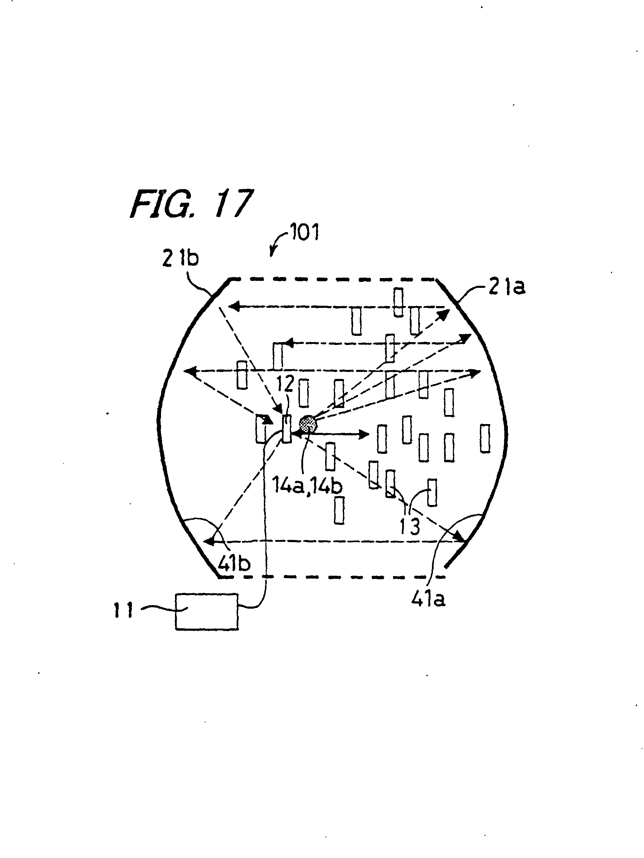

FIG. 17 is a view showing the configuration of an RFID system 101 according to an eleventh embodiment of the invention. Shown in FIG. 17 are the cross sections of radio wave reflecting plates 21a and 21b. The RFID system 101 of this embodiment is configured in such a manner that, in the RFID system 50 according to the fifth embodiment above, the positions of the focal points 14a and 14b of the reflection surfaces 41a and 41b of the radio wave reflecting plates 21a and 21b are aligned with each other.

Interrogation signals transmitted from the interrogator antenna 12 are reflected on the reflection surface 41a of one radio wave reflecting plate 21a, and then travel toward the other radio wave reflecting plate 21b in parallel with the axis of the parabolic curve included in the reflection surface 41a. The interrogation signals are reflected again on the reflection surface 42b of the other radio wave reflecting plate 21b, and concentrate on the focal points 14a and 14b of the reflection surfaces 42a and 42b of the radio wave reflecting plates 21a and 21b, respectively. Further, the interrogation signals travel toward one radio wave reflecting plate 21a. It is thus possible to utilize effectively the interrogation signals transmitted from the interrogator antenna 12.

In the RFID systems 50, 60, 70, 80, 90, 100, and 101, more than one interrogator antenna may be provided. In a case where a plurality of interrogator antennas 12 are provided and each transmits signals, a region where signals are strong is broadened in comparison with a case where a single interrogator antenna 12 is provided. The plurality of interrogator antennas 12 may be connected to a single interrogator 11, or connected respectively to different interrogators 11. In either case, interrogation signals from the plurality of interrogator antennas 12 can be transmitted in a time-divisional manner or transmitted concurrently.

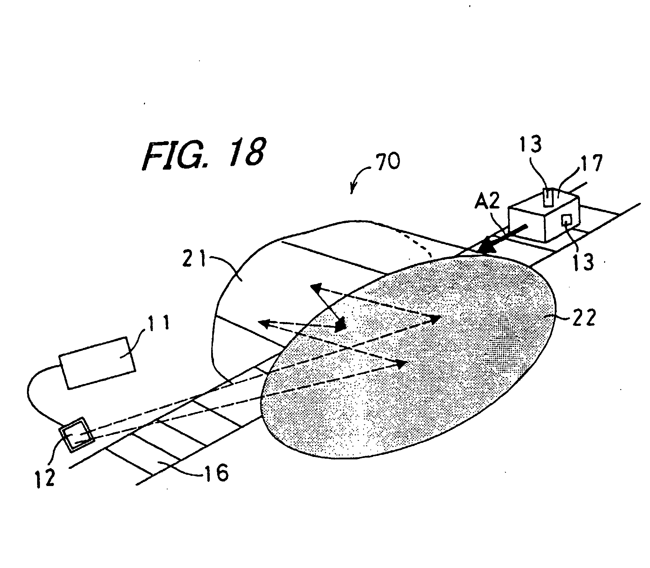

FIG. 18 is a perspective view of the RFID system 70. It should be noted, however, that FIG. 18 shows the transportation apparatus 16 omitted in FIG. 13. The radio frequency tag 13 is attached to an object 17.

The object 17 bearing the radio frequency tag 13 is moved in a direction indicated by an arrow A2 by the transportation apparatus 16. The moving direction of the object 17 may be opposite to the direction indicated by the arrow A2. When the object 17 passes by the region sandwiched by the radio wave reflecting plates 21 and 22 and somewhere in close proximity to the interrogator antenna 12, efficient communications are enabled between the interrogator 11 and the radio frequency tag 13. By placing the objects 17 on the transportation apparatus 16 in a line along the direction indicated by the arrow A2 and activating the transportation apparatus 16 continuously, the interrogator 11 becomes able to communicate with the radio frequency tags 13 successively.

Although it is not shown in the drawing, a metal body or an absorber body may be provided on the peripheries of the radio wave reflecting plates 21 and 22 in preventing the scattering of signals.

Of the embodiments above, in the embodiments configured to use more than one interrogator antenna, interrogation signals transmitted from the interrogator antennas may be received in the radio frequency tags directly or via the radio wave reflecting plate, and the signals from the radio frequency tags are received at the same interrogator antenna directly or via the radio wave reflecting plate.

Also, in a radio communications system using the radio wave reflecting plate as with the invention, it is possible to change a propagation direction of interrogation signals by reflecting the interrogation signals on the reflection surface of the radio wave reflecting plate. Hence, it may be configured in such a manner that one interrogator antenna is provided as an interrogator antenna exclusively used for transmission, and another interrogator antenna is provided separately as an interrogator antenna exclusively used for reception at positions different from each other, so that interrogation signals transmitted from the interrogator antenna exclusively used for transmission are received in the radio frequency tags directly or via the radio wave reflecting plate, and response signals from the radio frequency tags are received at the interrogator antenna exclusively used for reception directly or via the radio wave reflecting plate.

By separately providing an interrogator antenna exclusively used for transmission and an interrogator antenna exclusively used for reception, the radio frequency tags and the interrogator antenna exclusively used for reception can be independently placed at positions where the reception sensitivity is high, which can in turn increase the communication accuracy. Hence, a degree of freedom in selecting the placement of the overall radio communications system is increased. Further, by using the interrogator antennas exclusively for transmission and reception, the demodulation processing of signals in the interrogator can be simpler. In a case where the antennas are used exclusively for transmission and reception, the respective interrogator antennas may be connected commonly to a single interrogator or to different interrogators.

In a case where the respective interrogator antennas are connected to different interrogators, cables to connect the respective interrogator antennas and the interrogators can be shorter, which can in turn reduce a cable loss. In the embodiments above, the interrogator may be configured to be able to generate an interrogation and to generate an answer as well. Alternatively, a transmitter to generate an interrogation and a receiver to generate an answer may be provided separately, so that an interrogator antenna exclusively used for transmission is connected to the transmitter, and an interrogator antenna exclusively used for reception is connected to the receiver. The transmission and reception functions of the interrogator may be separated in this manner.

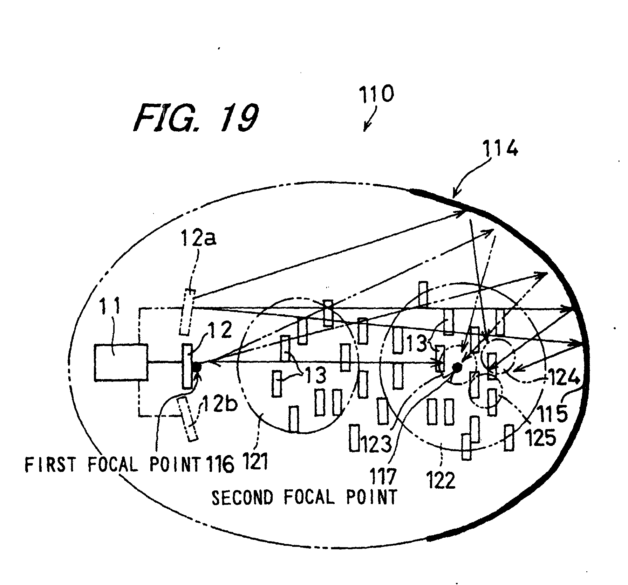

FIG. 19 is a view showing the configuration of a radio frequency identification system 110 according to a twelfth embodiment of the invention. The RFID system 110, serving as a radio communications apparatus, comprises an interrogator 11, an interrogator antenna 12 connected to the interrogator 11, radio frequency tags 13 serving as transponders, and a substantially elliptic radio wave reflecting plate 114. Shown in FIG. 19 is the cross section of the substantially elliptic radio wave reflecting plate 114. The RFID system 110 of this embodiment has the same configuration as the RFID systems of the first through eleventh embodiments above. Hence, the corresponding portions are denoted by the same reference numerals, and a description thereof is omitted.

The substantially elliptic radio wave reflecting plate 114 has a reflection surface 115 that reflects radio wave signals. The reflection surface 115 of the substantially elliptic radio wave reflecting plate 114 is a concave surface that bends inward, which is a curved surface including a part of an ellipsoid of revolution or an elliptic cylindrical surface, or a curved surface similar thereto, and for example, a curved surface comprising a part of an ellipsoid of revolution. An ellipsoid of revolution is a curved surface formed by rotating an ellipse about the major axis or the minor axis of the ellipse. An elliptic cylindrical surface is a curved surface formed from a trace when an ellipse is slid in a direction to intersect with the major axis and the minor axis. The curved surface including a part of an ellipsoid of revolution or an elliptic cylindrical surface, or a curved surface similar thereto includes a part of an elliptic curve or a curve similar thereto.

The reflection surface 115 of the substantially elliptic radio wave reflecting plate 114 is, for example, an elliptic cylindrical surface or an ellipsoid of revolution having only one of two intersections with the major axis of the ellipse.

The substantially elliptic radio wave reflecting plate 114 is able to reflect interrogation signals transmitted from the interrogator antenna 12 and response signals transmitted by reflection from the radio frequency tags 13 on the reflection surface 115.

The interrogator antenna 12 is placed in close proximity to one focal point of the reflection surface 115 of the substantially elliptic radio wave reflecting plate 114, and in this embodiment, it is placed on one focal point. The focal point of the reflection surface 115 of the substantially elliptic radio wave reflecting plate 114 referred to herein means a position, at which is formed a focal point of the ellipse that defines the reflection surface 115 of the substantially elliptic radio wave reflecting plate 114. In the case of an ellipsoid of revolution, it indicates a set of focal points of an elliptic curve when cut on a plane including the axis line, and in the case of an elliptic cylindrical surface, it indicates a set of focal points of an elliptic curve when cut on a plane perpendicular to the axis line of the elliptic cylindrical surface. In a case where the reflection surface of the substantially elliptic radio wave reflecting plate 114 is either an ellipsoid of revolution or an elliptic cylindrical surface, it indicates a focal point of an ellipsoid of revolution or an elliptic cylindrical surface that approximates to the surfaces specified above. Also, the term "in close proximity to the focal point" includes the focal point and a peripheral region of the focal point, and indicates a region where communication processing is enabled precisely by receiving signals, transmitted so as to pass somewhere in close proximity to one of focal points, at somewhere in close proximity to the other focal point.

In this embodiment, the interrogator antenna 12 is placed on a first focal point 116, which is one of two focal points of the reflection surface 115 of the substantially elliptic radio wave reflecting plate 114, and is placed to be directed to a second focal point 117, which is the other focal point, and to the substantially elliptic radio wave reflecting plate 114.

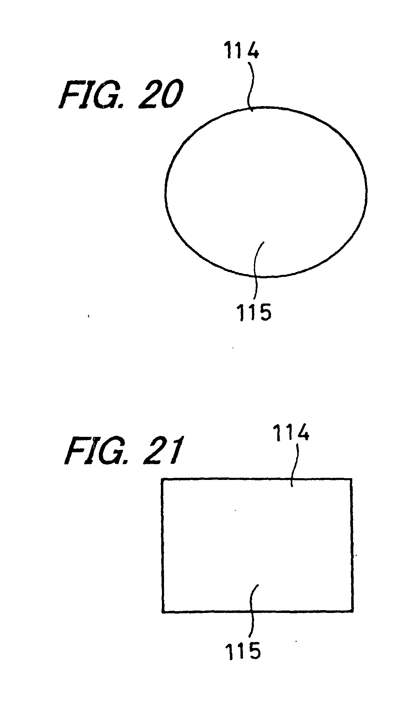

FIGs. 20 and 21 are plan views of the substantially elliptic radio wave reflecting plate 114 when viewed from the first focal point 116. The substantially elliptic radio wave reflecting plate 114, when viewed from the first focal point 116, may be formed in an elliptical shape as is shown in FIG. 20 or in a rectangular shape as is shown in FIG. 21.

Although it varies with a gain and the radiation communication power of the interrogator antenna 12, the radio frequency tags 13 are placed broadly in a first region 121 in close proximity to the interrogator antenna 12, and in a second region 122 in close proximity to the second focal point 117 of the reflection surface 115 of the substantially elliptic radio wave reflecting plate 114. The radio frequency tags 13 are allowed to communicate directly with the interrogator 11, and also allowed to communicate indirectly with the interrogator 11 via the reflection surface 115 of the substantially elliptic radio wave reflecting plate 114.

When interrogation signals are transmitted from the interrogator antenna 12, obtained communication power, which is the power obtained from the interrogation signals, is supplied sufficiently to the radio frequency tags 13 placed in the first region 121 in close proximity to the interrogator antenna 12. Hence, communications between the radio frequency tags 13 placed in the first region 121 and the interrogator 11 are enabled at good accuracy.

On the other hand, of the interrogation signals transmitted from the interrogator antenna 12, the interrogation signals that have not been received in the radio frequency tags 13 placed in the first region 121 in close proximity to the interrogator antenna 12 travel toward the substantially elliptic radio wave reflecting plate 114. Power of the interrogation signals transmitted from the interrogator antenna 12 becomes smaller as the radio frequency tags 13 are apart farther from the interrogator antenna 12, and for this reason, the obtained communication power that the radio frequency tags 13, placed in the second region 122, obtain directly from the interrogator antenna 12 is small. However, the interrogation signals traveling toward the substantially elliptic radio wave reflecting plate 114 are reflected on the reflection surface 115 of the substantially elliptic radio wave reflecting plate 114, and concentrate on the second focal point 117 and in a third region 123 in the closest proximity to the second focal point 117. Hence, power density increases in the third region 123, which enables a region where the interrogation signals are strong to be formed. The obtained communication power in the radio frequency tags 13, therefore, increases in this region where the interrogation signals are strong. The communication accuracy between the radio frequency tags 13 placed in the third region 123, which is the region where the interrogation signals are strong, and the interrogator 11 is thereby increased.

Response signals modulated in the radio frequency tags 13 and transmitted by reflection are received at the interrogator antenna 12 directly or via the reflection surface 115 of the substantially elliptic radio wave reflecting plate 114. Incidentally, distances to the first focal point 116 and the second focal point 117 are assumed to be adequate distances for the RFID system 110.

Any of the radio frequency tags 13a through 13c described above can be used as the radio frequency tags 13. However, in a case where communications are enabled with the use of circular polarized waves, efficient communications can be achieved by using the cross tag 13c shown in FIG. 5. The cross tag 13c is able to address right-handed circular polarized waves on one surface, and left-handed circular polarized waves on the other surface. For example, in a case where interrogation signals are transmitted from the interrogator antenna 12 in the form of right-handed circular polarized waves, the signals can be received efficiently by placing the cross tags 13c, which are placed in close proximity to the interrogator antenna 12 and communicate directly with the interrogator antenna 12, in such a manner that one surface of each faces the interrogator antenna 12. Also, in this case, the interrogation signals reflected on the reflection surface 115 of the substantially elliptic radio wave reflecting plate 114 concentrate in the third region 123 in the form of left-handed circular polarized waves. Hence, the cross tags 13c placed in the third region 123 become able to receive the interrogation signals efficiently when placed in such a manner that the other surface of each faces the substantially elliptic radio wave reflecting plate 114. Response signals transmitted by reflection from the radio frequency tags 13 placed in the third region 123 to the substantially elliptic radio wave reflecting plate 114 are in the form of left-handed circular polarized waves; however, they are converted to right-handed circular polarized waves when reflected on the reflection surface 115 of the substantially elliptic radio wave reflecting plate 114, and can be therefore received at the interrogator antenna 12.

As has been described, in the RFID system 110, of the interrogation signals transmitted from the interrogator antenna 12 placed on the first focal point 116 of the reflection surface 115 of the substantially elliptic radio wave reflecting plate 114, the signals that have not been received in the radio frequency tags 13 placed in close proximity to the interrogator antenna 12 are reflected on the reflection surface 115 of the substantially elliptic radio wave reflecting plate 114, and concentrate in the third region 123 of the reflection surface 115 of the substantially elliptic radio wave reflecting plate 114. It is thus possible to prevent the interrogation signals from scattering by passing through to the main surface side of the substantially elliptic radio wave reflecting plate 114, that is, a side opposite to the reflection surface 115. Interference of radio waves with another radio communications apparatus can be thereby reduced.

Even when a small antenna, having a broad directional characteristic to enable radio waves to be radiated at a broad directional angle, is used as the interrogator antenna 12, it is still possible to concentrate the interrogation signals efficiently, which enables the interrogation signals to be utilized effectively.

Because the interrogation signals reflected on the substantially elliptic radio wave reflecting plate 114 concentrate in the third region 123 including the second focal point 117 of the substantially elliptic radio wave reflecting plate 114, the interrogation signals in the third region 123 become strong. Hence, by placing the radio frequency tags 13 in the third region 123, not only can the communication accuracy between the radio frequency tags 13 placed in the third region 123 and the interrogator 11 be improved, but also a communication distance between the interrogator antenna 12 and the radio frequency tags 13 can be extended.

In the RFID system 110 according to the twelfth embodiment above, the interrogator antenna 12 is placed on the first focal point 116 of the reflection surface 115 of the substantially elliptic radio wave reflecting plate 114. However, as still another embodiment of the invention, the interrogator antenna 12 may be placed at a position shifted from the first focal point 116, that is, a position moved forward or backward, to the right or left, or above or below from the first focal point 116 with respect to the substantially elliptic radio wave reflecting plate 114. By placing the interrogator antenna 12 in this manner, the interrogation signals transmitted from the interrogator antenna 12 are reflected on the reflection surface 115 of the substantially elliptic radio wave reflecting plate 114 and concentrate in a region having predetermined dimensions in close proximity to the second focal point 117. It is thus possible to broaden the third region 123, which is a region where the interrogation signals are strong.

As still another embodiment of the invention, the reflection surface 115 of the substantially elliptic radio wave reflecting plate 114 may be a curved surface similar to an ellipsoid of revolution or an elliptic cylindrical surface. Then, because the interrogation signals transmitted from the interrogator antenna 12 concentrate in a region having predetermined dimensions in close proximity to the second focal point 117, it is possible to broaden a range of the third region 123, which is a region where the interrogation signals are strong.

In the RFID system 110 according to the twelfth embodiment above, only a single interrogator 11 is provided. However, as still another embodiment of the invention, the interrogator antenna 12 is not limited to one, and as are indicted by virtual lines of FIG. 19, it may be configured in such a manner that a second interrogator antenna 12a and a third interrogator antenna 12b are additionally provided in close proximity to the interrogator antenna 12. The second interrogator antenna 12a and the third interrogator antenna 12b are of the same configuration as the interrogator antenna 12. Hereinafter, each of the second interrogator antenna 12a and the third interrogator antenna 12b is occasionally referred to as the interrogator antenna 12. A plurality of interrogator antennas 12 are connected to the interrogator 11.

The respective interrogator antennas 12 are placed in such a manner that interrogation signals transmitted from the respective interrogator antennas 12 are reflected on the reflection surface 115 of the substantially elliptic radio wave reflecting plate 114, and then travel independently to different directions to concentrate in regions different from each other. In other words, interrogation signals transmitted from the second interrogator antenna 12a are reflected on the reflection surface 115 of the substantially elliptic radio wave reflecting plate 114 and concentrate in a forth region 124, which is a region different from the third region 123, in close proximity to the second focal point 117 of the reflection surface 115 of the substantially elliptic radio wave reflecting plate 114. Also, interrogation signals transmitted from the third interrogator antenna 12b are reflected on the reflection surface 115 of the substantially elliptic radio wave reflecting plate 114 and concentrate in a fifth region 125, which is a region different from the third region 123 and the fourth region 124, in close proximity to the second focal point 117 of the reflection surface 115 of the substantially elliptic radio wave reflecting plate 114. It is thus possible to broaden a region where the interrogation signals are strong, in close proximity to the second focal point 117, and the communication accuracy between the radio frequency tags 13 placed in close proximity to the second focal point 117 and the interrogator 11 is thereby improved.

The interrogation signals transmitted from the plurality of interrogator antennas 12 can be transmitted in a time-divisional manner or transmitted concurrently.

Also, in a case where the communication accuracy differs in each interrogator antenna 12 due to obstacles, the communication accuracy of the overall RFID system 110 is increased by selecting information from the interrogator antenna 12 having the highest communication accuracy by the interrogator 11.

The plurality of interrogator antennas 12 described above are connected to a single interrogator 11. However, as still another embodiment of the invention, a plurality of interrogators 11 may be provided, so that the plurality of interrogator antennas 12 are connected respectively to different interrogators 11. In this case, too, interrogation signals transmitted from the plurality of interrogator antennas 12 can be transmitted in a time-divisional manner or transmitted concurrently.

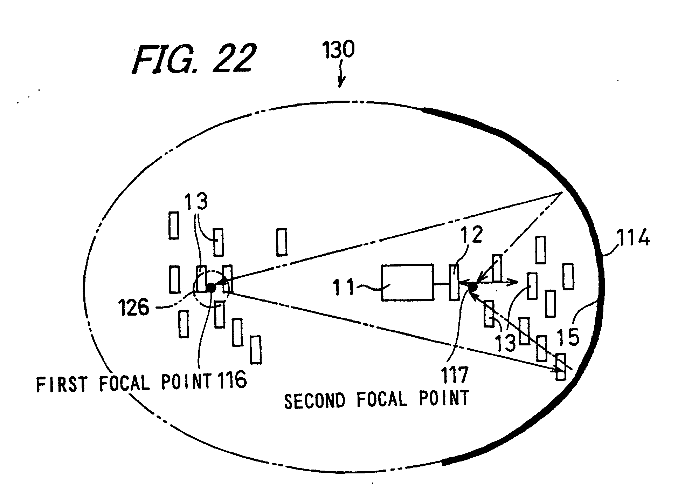

FIG. 22 is a view showing the configuration of an RFID system 130 according to a thirteenth embodiment of the invention. The RFID system 130, serving as a radio communications apparatus, comprises an interrogator 11, an interrogator antenna 12 connected to the interrogator 11, radio frequency tags 13, and a substantially elliptic radio wave reflecting plate 114. Shown in FIG. 22 is the cross section of the substantially elliptic radio wave reflecting plate 114.

The RFID system 130 has the same configuration as the RFID system 110 according to the twelfth embodiment above, except that the interrogator antenna 12 and the radio frequency tags 13 are placed differently from those of the RFID system 110. Hence, the corresponding portions in this embodiment are denoted by the same reference numerals with respect to the RFID system 110, and a description thereof is omitted.

In the RFID system 130, the interrogator antenna 12 is placed on the second focal point 117 of the reflection surface 115 of the substantially elliptic radio wave reflecting plate 114 to be directed to the substantially elliptic radio wave reflecting plate 114, and a plurality of radio frequency tags 13 are placed in a region between the interrogator antenna 12 and the substantially elliptic radio wave reflecting plate 114 and in close proximity to the first focal point 116 of the reflection surface of the substantially elliptic radio wave reflecting plate 114.

When interrogation signals are transmitted from the interrogator antenna 12, obtained communication power is supplied sufficiently to the radio frequency tags 13 that are placed in a space between the interrogator antenna 12 and the substantially elliptic radio wave reflecting plate 114, to enable communications with the interrogator 11 at good accuracy. On the other hand, of the signals transmitted from the interrogator antenna 12, the interrogation signals that have not been received in the radio frequency tags 13 placed in a space between the interrogator antenna 12 and the substantially elliptic radio wave reflecting plate 114 travel toward the substantially elliptic radio wave reflecting plate 114 to be reflected on the reflection surface 115 of the substantially elliptic radio wave reflecting plate 114, and concentrate on the first focal point 116 and in a sixth region 126 in the closest proximity to the first focal point 116. The interrogation signals in the sixth region 126 therefore become strong. It is thus possible to improve the communication accuracy between the radio frequency tags 13 placed in the sixth region 126, which is the region where the interrogation signals are strong, and the interrogator 11. It is preferable that the interrogator 11 is placed at a position not to block the interrogation signals and the response signals passing a space between the interrogator antenna 12 and the radio frequency tags 13.

Response signals transmitted by reflection from the radio frequency tags 13 are received at the interrogator antenna 12 directly or via the reflection surface 115 of the substantially elliptic radio wave reflecting plate 114.

When interrogation signals transmitted from the interrogator antenna 12 are in the form of linear polarized waves, basically, the interrogation signals that concentrate somewhere in close proximity to the first focal point 116 are also in the form of linear polarized waves. However, for example, when interrogation signals transmitted from the interrogator antenna 12 are in the form of right-handed circular polarized waves, then the interrogation signals that concentrate somewhere in close proximity to the first focal point 116 are in the form of left-handed circular polarized waves. In this case, the efficiency of communications can be increased by placing the radio frequency tag 13c shown in FIG. 5, with which communications are enabled with the use of left-handed circular polarized waves, in close proximity to the first focal point 116.

As has been described, in the RFID system 130, of the interrogation signals transmitted from the interrogator antenna 12 placed on the second focal point 117 of the reflection surface 115 of the substantially elliptic radio wave reflecting plate 114, the signals that have not been received in a space between the interrogator antenna 12 and the substantially elliptic radio wave reflecting plate 114 are reflected on the reflection surface 115 of the substantially elliptic radio wave reflecting plate 114. It is thus possible to prevent the interrogation signals from scattering to the backside of the substantially elliptic radio wave reflecting plate 114, that is, the side opposite to the reflection surface 115. Interference of radio waves with another radio communications apparatus can be thereby reduced.

Also, even when a small antenna, having a broad directional characteristic to enable radio waves to be radiated at a broad directional angle, is used as the interrogator antenna 12, it is still possible to concentrate the interrogation signals efficiently, which enables the interrogation signals to be utilized effectively.

Because the interrogation signals reflected on the substantially elliptic radio wave reflecting plate 114 concentrate in the sixth region 126 including the first focal point 116 of the substantially elliptic radio wave reflecting plate 114, the interrogation signals in the sixth region 126 become strong. Hence, by placing the radio frequency tags 13 in the sixth region 126, the interrogation signals can be utilized effectively. In other words, not only can the communication accuracy between the radio frequency tags 13 placed in the sixth region 126 and the interrogator 11 be improved, but also a communication distance between the interrogator antenna 12 and the radio frequency tags 13 can be extended.

In this embodiment, the radio frequency tags 13 are placed in a space between the interrogator antenna 12 and the substantially elliptic radio wave reflecting plate 114 and in close proximity to the first focal point 116. However, as still another embodiment of the invention, the radio frequency tags 13 may be placed either in a space between the interrogator antenna 12 and the substantially elliptic radio wave reflecting plate 114 or in close proximity to the first focal point 116.

In the RFID system 130 according to the thirteenth embodiment above, the interrogator antenna 12 is placed on the second focal point 117 of the reflection surface 115 of the substantially elliptic radio wave reflecting plate 114. However, as still another embodiment of the invention, the interrogator antenna 12 may be placed at a position shifted from the second focal point 117, that is, a position moved forward or backward, to the right or left, or above or below from the second focal point 117 with respect to the substantially elliptic radio wave reflecting plate 114. By placing the interrogator antenna 12 in this manner, the interrogation signals transmitted from the interrogator antenna 12 are reflected on the reflection surface 115 of the substantially elliptic radio wave reflecting plate 114 and concentrate in a region having predetermined dimensions in close proximity to the first focal point 116. It is thus possible to broaden a region where the signals are strong.

In the RFID system 130 according to the thirteenth embodiment above, only a single interrogator 11 is provided. However, as still another embodiment of the invention, the interrogator antenna 12 is not limited to one, and it may be configured in such a manner that a plurality of interrogator antennas 12 are provided in close proximity to the interrogator antenna 12, that is, in close proximity to the second focal point 117. The plurality of interrogator antennas 12 are connected to the interrogator 11.

The respective interrogator antennas 12 are placed in such a manner that interrogation signals transmitted from the respective interrogator antennas 12 are reflected on the reflection surface 115 of the substantially elliptic radio wave reflecting plate 114 to travel independently in different directions, and concentrate in regions different from each other. It is thus possible to broaden a region where the interrogation signals are strong, in close proximity to the first focal point 116. The communication accuracy between the radio frequency tags 13 placed in close proximity to the first focal point 116 and the interrogator 11 can be thereby improved.

Interrogation signals transmitted from the plurality of interrogator antennas 12 can be transmitted in a time-divisional manner or transmitted concurrently.

In a case where the communication accuracy differs in each interrogator antenna 12 due to obstacles, the communication accuracy of the overall RFID system 130 is increased by selecting information from the interrogator antenna 12 having the highest communication accuracy by the interrogator 11.

The plurality of interrogator antennas 12 described above are connected to a single interrogator 11. However, as still another embodiment of the invention, a plurality of interrogators 11 may be provided, so that the plurality of interrogator antennas 12 are connected respectively to different interrogators 11. In this case, too, interrogation signals transmitted from the plurality of interrogator antennas 12 can be transmitted in a time-divisional manner or transmitted concurrently.

In still another embodiment of the invention, the RFID system 110 according to the twelfth embodiment above and the RFID system 130 according to the thirteenth embodiment above may be combined to form an RFID system. In other words, the interrogator antennas 12 are provided in close proximity to the first focal point 116 and in close proximity to the second focal point 117. Interrogation signals are transmitted from one interrogator antenna 12 and response signals transmitted by reflection from the radio frequency tags 13 are received at two interrogator antennas 12. The communication accuracy between the interrogator 11 and the radio frequency tags 13 can be thereby improved.

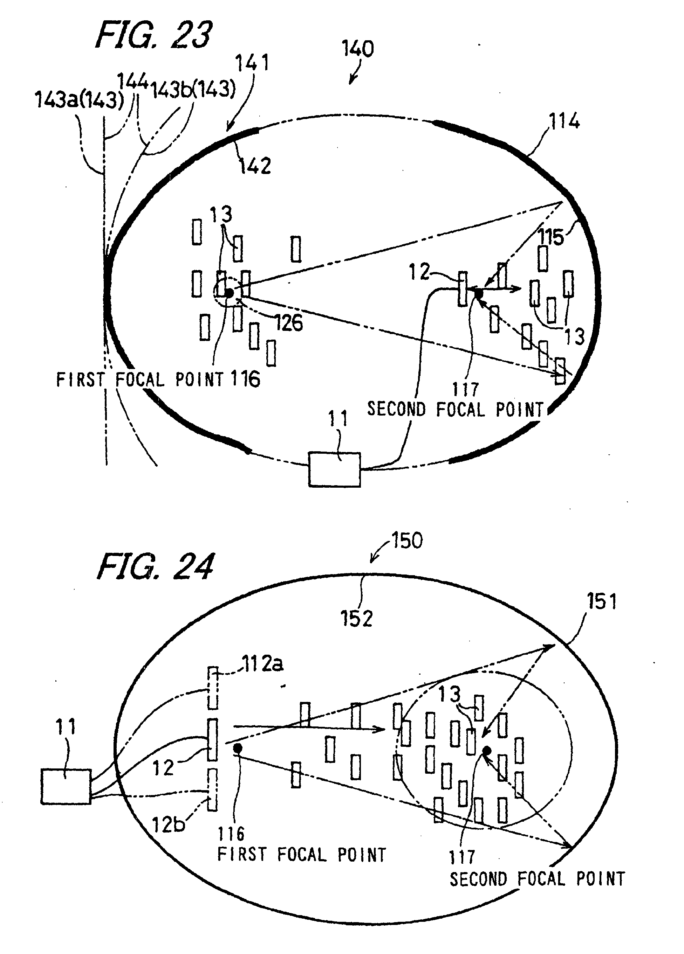

FIG. 23 is a view showing the configuration of an RFID system 140 according to a fourteenth embodiment of the invention. The RFID system 140 is configured to additionally include another radio wave reflecting plate 141 in the configuration of the RFID system 130 according to the thirteenth embodiment. Hence, like components are denoted by the same reference numerals with respect to the RFID system 130, and a description thereof is omitted. Shown in FIG. 23 are the cross sections of the substantially elliptic radio wave reflecting plate 114 and another radio wave reflecting plate 141.

The RFID system 140, serving as a radio communications apparatus, comprises an interrogator 11, an interrogator antenna 12 connected to the interrogator 11, radio frequency tags 13 serving as transponders, a substantially elliptic radio wave reflecting plate 114, and another radio wave reflecting plate 141.

Another radio wave reflecting plate 141 is a reflecting plate having a reflection surface 142 that reflects radio wave signals. In this embodiment, another radio wave reflecting plate 141 is of the same shape as the substantially elliptic radio wave reflecting plate 114 and has the reflection surface 142 including a part of the reflection surface 115 of the substantially elliptic radio wave reflecting plate 114. In the RFID system 140, the reflection surface 142 of another radio wave reflecting plate 141 is placed oppositely to the reflection surface 115 of the substantially elliptic radio wave reflecting plate 114, and two focal points of the reflection surface 142 of another radio wave reflecting plate 141 are aligned with the two focal points of the reflection surface 115 of the substantially elliptic radio wave reflecting plate 114.

Interrogation signals, transmitted from the interrogator antenna 12 and reflected on the reflection surface 115 of the substantially elliptic radio wave reflecting plate 114, concentrate in the sixth region 126 in close proximity to the first focal point 116. The interrogation signals are further reflected on the reflection surface 142 of another radio wave reflecting plate 141, and concentrate on the second focal point 117 and in a region in the closest proximity to the second focal point 117. It is thus possible to utilize the interrogation signals by reflecting the interrogation signals in a region sandwiched by the two radio wave reflecting plates, which enables the interrogation signals to be utilized effectively. It is also possible to efficiently prevent the interrogation signals from being radiated to the outside from the region sandwiched by the substantially elliptic radio wave reflecting plate 114 and another radio wave reflecting plate 141. Interference of radio waves with another radio communications system can be thereby reduced further.

Another radio wave reflecting plate 141 described above is of the same shape as the substantially elliptic radio wave reflecting plate 114. However, as still another embodiment of the invention, a substantially non-elliptic radio wave reflecting plate 144 having a reflection surface 143 of a shape different from the shape including a part of an elliptic curve or a curve similar thereto may be used as another radio wave reflecting plate 141. The substantially non-elliptic radio wave reflecting plate 144 is a reflecting plate having the reflection surface 143 that reflects radio wave signals, and the reflection surface 143 is configured to include a part of a plane 143a or a paraboloid or a spherical surface 143b in cross section indicated by virtual lines of FIG. 7. By placing the reflection surface 143 of the substantially non-elliptic radio wave reflecting plate 144 configured in this manner oppositely to the reflection surface 115 of the substantially elliptic radio wave reflecting plate 114, it is possible to efficiently prevent the interrogation signals from being radiated to the outside.

Also, in a case where the substantially non-elliptic radio wave reflecting plate 144 is used as another radio wave reflecting plate 141, it is possible to concentrate the interrogation signals in a region different from the region where the interrogation signals are concentrated by the reflection surface 115 of the substantially elliptic radio wave reflecting plate 114, and a range over which the interrogation signals are strong can be broadened. The communication accuracy between the interrogator 11 and the radio frequency tags 13 can be improved in a broad range within the region sandwiched by the two radio wave reflecting plates.

FIG. 24 is a view showing the configuration of an RFID system 150 according to a fifteenth embodiment of the invention. The RFID system 150 has the same configuration as the RFID system 110 according to the twelfth embodiment above, except that the substantially elliptic radio wave reflecting plate 114 of the RFID system 110 is replaced with a second substantially elliptic radio wave reflecting plate 151. Hence, like components are denoted by the same reference numerals with respect to the RFID system 110, and a description thereof is omitted. Shown in FIG. 24 is the cross section of the second substantially elliptic radio wave reflecting plate 151.

The RFID system 150, serving as a radio communications apparatus, comprises an interrogator 11, an interrogator antenna 12 connected to the interrogator 11, radio frequency tags 13, and a second substantially elliptic radio wave reflecting plate 151.

The second substantially elliptic radio wave reflecting plate 151 is a reflecting plate having a reflection surface 152 that reflects radio wave signals. In contrast to the reflection surface 115 of the substantially elliptic radio wave reflecting plate 114 of the twelfth embodiment above that comprises a part of an ellipsoid of revolution or an elliptic cylindrical surface, or a curved surface similar thereto, the reflection surface 152 of the second substantially elliptic radio wave reflecting plate 151 of this embodiment is an ellipsoid of revolution or an elliptic cylindrical surface, or a curved surface similar thereto, and for example, a curved surface comprising an elliptic cylindrical surface. A difference between the reflection surface 115 of the substantially elliptic radio wave reflecting plate 114 and the reflection surface 152 of the second substantially elliptic radio wave reflecting plate 152 is whether the reflection surface is a curved surface including only a part of the elliptic curve or a curved surface including the elliptic curve entirely or almost entirely. The reflection surface 152 of the second substantially elliptic radio wave reflecting plate 151 includes a part of the reflection surface 115 of the substantially elliptic radio wave reflecting plate 114.

The interrogator antenna 12 is placed on the first focal point 116, which is one of focal points of the reflection surface 152 of the substantially elliptic radio wave reflecting plate 151, to be directed to the second focal point 117, which is the other focal point. The radio frequency tags 13 are placed in a region to achieve efficient communications in consideration of a degree of manufacturing of the reflection surface 152 of the substantially elliptic radio wave reflecting plate 151 and disturbances in the peripheral radio wave situations caused when the interrogator antenna 12 is placed in close proximity to the first focal point 116. The radio frequency tags 13, when placed in close proximity to the interrogator antenna 12 and in close proximity to the second focal point 117 as with the RFID system 110 according to the twelfth embodiment, are able to communicate with the interrogator 11 at high accuracy.

In the RFID system 150, the interrogator antenna 12 and the radio frequency tags 13 are placed on the inner side of the reflection surface 152 of the second substantially elliptic radio wave reflecting plate 151. It is thus possible to further reduce radiation of radio waves to the outside from the inside of the reflection surface 152, and interference of radio waves with another radio communications system can be thereby reduced further.

It is preferable that the interrogator 11 is placed on the outer side of the reflection surface 152 of the second substantially elliptic radio wave reflecting plate 151, so as to block neither interrogation signals nor response signals that are transmitted and received between the interrogator antenna 12 and the radio frequency tags 13.

In the RFID system 150 according to the fifteenth embodiment above, only a single interrogator 11 is provided. However, as still another embodiment of the invention, the interrogator antenna 12 is not limited to one, and as are indicated by virtual lines of FIG. 24, it may be configured in such a manner that a second interrogator antenna 12a and a third interrogator antenna 12b are additionally provided in close proximity to the interrogator antenna 12. Hereinafter, each of the second interrogator antenna 12a and the third interrogator antenna 12b is occasionally referred to as the interrogator antennas 12. The plurality of interrogator antennas 12 are connected to the interrogator 11.

By placing the respective interrogator antennas 12 in such a manner that interrogation signals transmitted from the respective interrogator antennas 12 are reflected on the reflection surface 152 of the second substantially elliptic radio wave reflecting plate 151 to travel independently in different directions and concentrate in regions different from each other, it is possible to broaden a region where the interrogation signals are strong, in close proximity to the second focal point 117. The communication accuracy between the radio frequency tags 13 placed in close proximity to the second focal point 117 and the interrogator 11 can be thereby improved. Interrogation signals transmitted from the plurality of interrogator antennas 12 can be transmitted in a time-divisional manner or transmitted concurrently.

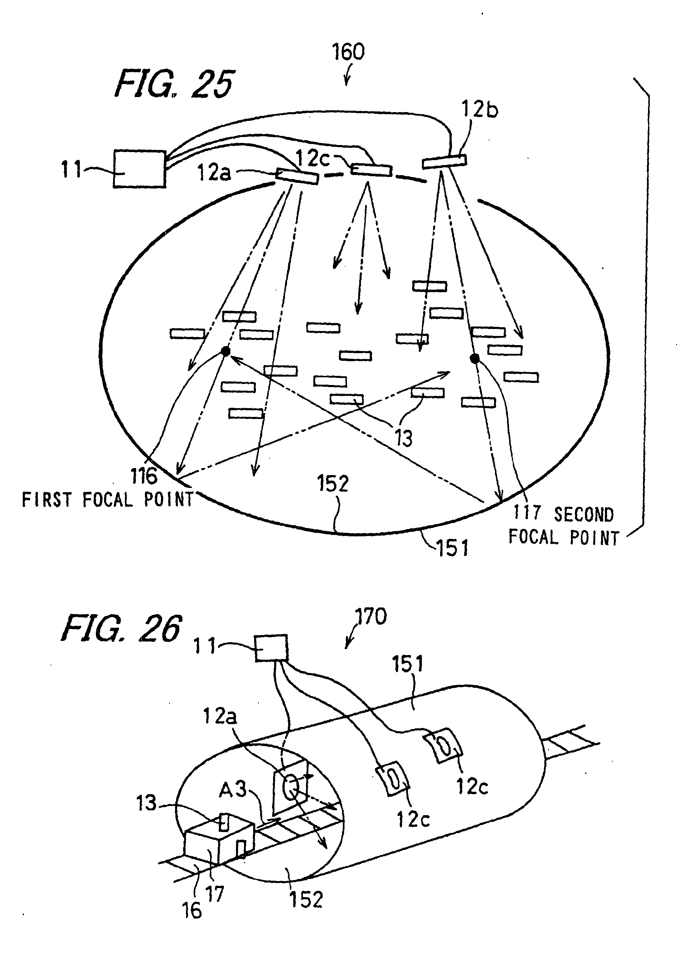

FIG. 25 is a view showing the configuration of an RFID system 160 according to a sixteenth embodiment of the invention. The RFID system 160 has the same configuration as the RFID system 150 according to the fifteenth embodiment above, except that the interrogator antenna 12 and the radio frequency tags 13 are placed differently from those of the RFID system 150 according to the fifteenth embodiment above. Hence, like components are denoted by the same reference numerals with respect to the RFID system 150, and a description thereof is omitted. Shown in FIG. 25 is the cross section of the second substantially elliptic radio wave reflecting plate 151.

The RFID system 160, serving as a radio communications apparatus, comprises an interrogator 11, first through third interrogator antennas 12a, 12b, and 12c connected to the interrogator 11, radio frequency tags 13, and a second substantially elliptic radio wave reflecting plate 51. The first through third interrogator antennas 12a, 12b and 12c have the same configurations as the interrogator antenna 12 described above.

At least one antenna from the first through third interrogator antennas 12a, 12b, and 12c is placed in close proximity to a virtual straight line including one of focal points of the reflection surface 152 of the second substantially elliptic radio wave reflecting plate 151 and passing through the reflection surface 152, to be directed to the reflection surface 152 of the second substantially elliptic radio wave reflecting plate 151 almost in parallel with the virtual straight line. In the invention, the term "in close proximity to the virtual straight line" includes the virtual straight line. In the invention, the term "almost in parallel with" includes parallel.

In this embodiment, the first interrogator antenna 12a is placed in close proximity to an opening portion provided in the second substantially elliptic radio wave reflecting plate 151 on the outside of the reflection surface 152 of the second substantially elliptic radio wave reflecting plate 151 on a virtual straight line including the first focal point 116 of the reflection surface 152 of the second substantially elliptic radio wave reflecting plate 151 and passing through the reflection surface 52, to be directed to the reflection surface 152 of the second substantially elliptic radio wave reflecting plate 151 in parallel with the virtual straight line. The second interrogator antenna 12b is placed in close proximity to an opening portion provided in the second substantially elliptic radio wave reflecting plate 151 on the outside of the reflection surface 152 of the second substantially elliptic radio wave reflecting plate 151 on a virtual straight line including the second focal point 117 of the reflection surface 152 of the second substantially elliptic radio wave reflecting plate 151 and passing through the reflection surface 152, to be directed to the reflection surface 52 of the second substantially elliptic radio wave reflecting plate 151 in parallel with the virtual straight line.

Interrogation signals transmitted from the first interrogation signal 12a pass the first focal point 116 to be reflected on the reflection surface 152 of the second substantially elliptic radio wave reflecting plate 151, and concentrate on the second focal point 117 and in a region in the closest proximity to the second focal point 117. Interrogation signals transmitted from the second interrogator antenna 12b pass the second focal point 117 to be reflected on the reflection surface 152 of the second substantially elliptic radio wave reflecting plate 151, and concentrate on the first focal point 116 and in the closest proximity to the first focal point 116. It is thus possible to form regions where the interrogation signals are strong, in close proximity to the first and second focal points 116 and 117, respectively. As has been described, because regions where the interrogation signals are strong are formed in close proximity to the two focal points of the reflection surface 152 of the second substantially elliptic radio wave reflecting plate 151, respectively, the radio frequency tags 13 placed in these regions are able to receive efficiently the interrogation signals from the interrogator antennas, and the communication accuracy can be thereby improved.

The third interrogator antenna 12c is placed in close proximity to an opening portion in the second substantially elliptic radio wave reflecting plate on the outside of the reflection surface 152 of the second substantially elliptic radio wave reflecting plate 151, and transmits interrogation signals to a region different from the regions where the interrogation signals from the first interrogator antenna 12a and the second interrogator antenna 12b concentrate, that is, in a manner so as to complement a region where the interrogation signals transmitted from the first and second interrogator antennas 12a and 12b are weak. It is thus possible to improve overall communication accuracy between the radio frequency tags 13 placed on the inner side of the reflection surface 152 of the second substantially elliptic radio wave reflecting plate 151 and the interrogator 11.

FIG. 26 is a perspective view of an RFID system 170 according to a seventeenth embodiment of the invention. The RFID system 170 is configured to additionally include a transportation apparatus 16 in the configuration of the RFID system 160 according to the sixteenth embodiment above. Hence, like components are denoted by the same reference numerals with respect to the RFID system 160, and a description thereof is omitted. In this embodiment, the reflection surface 152 of the substantially elliptic radio wave reflecting plate 151 is an elliptic cylindrical surface or a curved surface similar thereto, and for example, an elliptic cylindrical surface.

In the RFID system 170 serving as a radio communications apparatus, a part of a belt conveyor used as the transportation apparatus 16 is provided on the inside of the elliptic cylindrical surface, serving as the reflection surface 152 of the substantially elliptic radio wave reflecting plate 151, along a direction in which the elliptic cylindrical surface extends. In the RFID system 170, the radio frequency tag 13 is attached to an object 17 placed and transported on the belt conveyor. Communications between the radio frequency tag 13 and the interrogator 11 are enabled while the object 17 is being moved by means of the belt conveyor in a direction from one end to the other end of the opening portion in the elliptic cylindrical surface, that is, in a direction indicated by an arrow A3 of FIG. 26.

The first, second, and third interrogator antennas 12a, 12b, and 12c are placed at predetermined intervals in a direction in which the belt conveyor extends, that is, in the transportation direction of the object 17. It is thus possible to form broadly a region where the interrogation signals transmitted from the respective interrogator antennas 12a, 12b, and 12c are strong. By configuring in such a manner that the radio frequency tags 13 are attached to the objects 17 to pass by the region where the interrogation signals are strong on the inner side of the reflection surface 152 of the substantially elliptic radio wave reflecting plate 151, the interrogator 11 becomes able to communicate at high accuracy with the radio frequency tags 13 that are attached to the objects 72 transported successively on the belt conveyor.

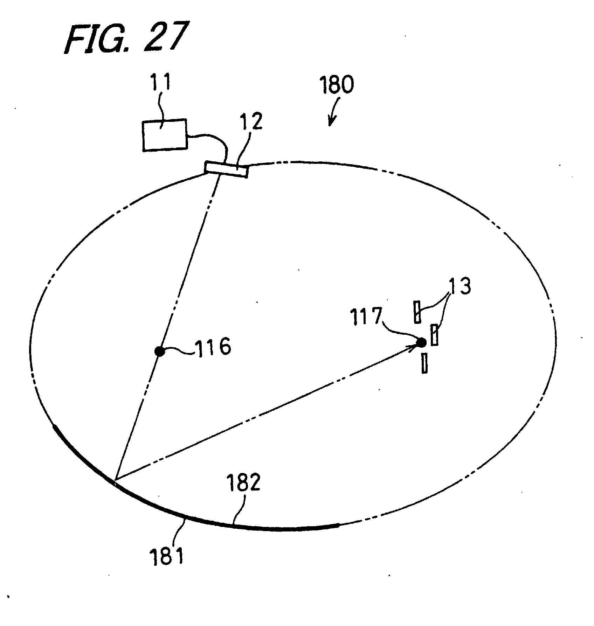

FIG. 27 is a view showing the configuration of an RFID system 180 according to an eighteenth embodiment of the invention. The RFID system 180, serving as a radio communications apparatus, comprises an interrogator 11, an interrogator antenna 12 connected to the interrogator 11, radio frequency tags 13, and a third substantially elliptic radio wave reflecting plate 181. Because the interrogator 11, the interrogator antenna 12, and the radio frequency tags 13 have the same configurations as the interrogator 11, the interrogator antenna 12, and the radio frequency tags 13, respectively, in the RFID system 110 according to the twelfth embodiment, the same configures are denoted by the same reference numerals and a description thereof is omitted. Shown in FIG. 27 is the cross section of the third substantially elliptic radio wave reflecting plate 181.

The third substantially elliptic radio wave reflecting plate 181 is a reflecting plate having a reflection surface 182 that reflects radio wave signals. The reflection surface 182 of the third substantially elliptic radio wave reflecting plate 181 is a concave surface that bends inward, which is a curved surface including a curve of an elliptic curve or a curve similar thereto other than a portion intersecting with a straight line passing two focal points of the elliptic curve or the curve similar thereto, and in this embodiment, it comprises a curved surface including a curve of an elliptic curve other than a portion intersecting with a straight light passing two focal points of the elliptic curve. In short, it is a reflecting plate in a so-called off-set placement. Such a curved surface includes a part of an ellipsoid of revolution and an elliptic cylindrical surface, and in this embodiment, for example, the reflection surface 182 is a part of an elliptic cylindrical surface.

The interrogator antenna 12 is placed in close proximity to a virtual straight line including a first focal point 116, which is one of focal points of the reflection surface 182 of the third substantially elliptic radio wave reflecting plate 181 and passing through the reflection surface 182, to be directed to the reflection surface 182 of the substantially elliptic radio wave reflecting plate 181 in almost parallel with the virtual straight line.

The radio frequency tags 13 are placed in close proximity to a second focal point 117, which is the other focal point of the reflection surface 182 of the third substantially elliptic radio wave reflecting plate 181. The radio frequency tags 13 may be moved to pass somewhere in close proximity to of the second focal point 117.

Interrogation signals transmitted from the interrogator antenna 12 are reflected on the reflection surface 182 of the third substantially elliptic radio wave reflecting plate 181 and concentrate on the second focal point 117. When configured in this manner, neither the interrogator antenna 12 nor the radio frequency tags 13 are placed on a propagation path between the interrogator antenna 12 and the radio frequency tags 13 via the third substantially elliptic radio wave reflecting plate 181, and therefore neither will lie in the way. The strength of the interrogation signals on the second focal point 117 can be thereby increased.

In a case where the third substantially elliptic radio wave reflecting plate 181 is a curved surface including a curve of a curve similar to an elliptic curve other than a portion intersecting with a straight line passing two focal points of the curve similar to an elliptic curve, the two focal points are two focal points of an approximated elliptic curve when a curve similar to an elliptic curve is approximated to the elliptic curve.

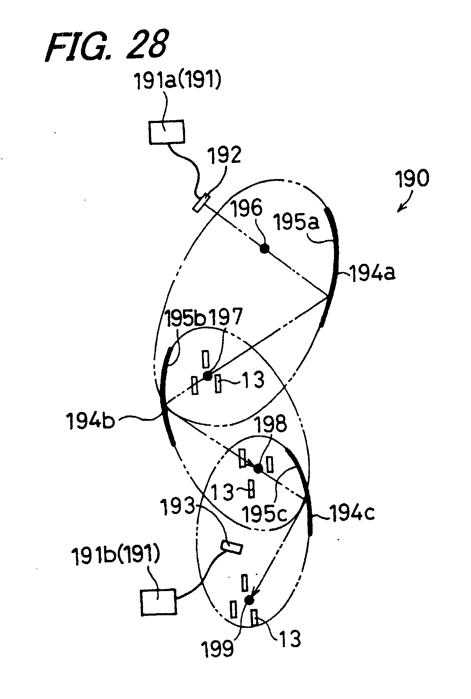

FIG. 28 is a view showing an RFID system 190 according to a nineteenth embodiment of the invention. The RFID system 190, serving as a radio communications apparatus, comprises an interrogator 191, a transmission interrogator antenna 192, a reception interrogator antenna 193, radio frequency tags 13, and fourth through sixth substantially elliptic radio wave reflecting plates 194a, 194b, and 194c. Shown in FIG. 28 are the cross sections of the fourth through sixth substantially elliptic radio wave reflecting plates 194a, 194b, and 194c.

The interrogator 191 comprises a transmitter 191a connected to the transmission interrogator antenna 192, and a receiver 191b connected to the reception interrogator antenna 193. Because the transmitter 191a has the same configuration as the transmission portion in the interrogator 11 of the twelfth embodiment above, and the receiver 91b has the same configuration as the reception portion in the interrogator 11 described above, a description thereof is omitted herein. It goes without saying that the transmitter 191a and the transmission interrogator antenna 192 are furnished with the same transmission and reception functions as those of the interrogator 11 and the interrogator antenna 12 described above.

The transmission interrogator antenna 192 and the reception interrogator antenna 193 have the same configuration as the interrogator antenna 12 described above. The transmission interrogator antenna 192 transmits interrogation signals to the radio frequency tags 13, and the reception interrogator antenna 193 receives response signals transmitted by reflection from the radio frequency tags 13.

Reflection surfaces 195a, 195b, and 195c of the fourth through sixth substantially elliptic radio wave reflecting plates 194a, 194b, and 194c, respectively, are of the same shape as the reflection surface 182 of the third substantially elliptic radio wave reflecting plate 181 of the eighteenth embodiment above. The fourth through sixth substantially elliptic radio wave reflecting plates 194a, 194b, and 194c are placed in such a manner that one focal point of the reflection surface 195a of the fourth substantially elliptic radio wave reflecting plate 194a is aligned with one focal point of the reflection surface 195b of the fifth substantially elliptic radio wave reflecting plate 194b, and the other focal point of the reflection surface 195b of the fifth substantially elliptic radio wave reflecting plate 194b is aligned with one focal point of the reflection surface 195c of the sixth substantially elliptic radio wave reflecting plate 194c.

The transmission interrogator antenna 192 is placed in close proximity to a virtual straight line including one focal point 196 of the fourth substantially elliptic radio wave reflecting plate 194a and passing through the reflection surface 195a, to be directed to the reflection surface 195b of the substantially elliptic radio wave reflecting plate 194a in almost parallel with the virtual straight line.

Interrogation signals transmitted from the transmission interrogator antenna 192 pass one focal point 196 of the fourth substantially elliptic radio wave reflecting plate 194a to be reflected on the reflection surface 195a of the fourth substantially elliptic radio wave reflecting plate 194a, and concentrate in the vicinity of the focal point 197, on which the other focal point of the fourth substantially elliptic radio wave reflecting plate 194a and one focal point of the fifth substantially elliptic radio wave reflecting plate 194b are aligned, and in a region in the closest proximity to the focal point 197. Having passed the vicinity of the focal point 197, the interrogation signals are reflected on the reflection surface 195b of the fifth substantially elliptic radio wave reflecting plate 194b, and concentrate again on the focal point 198, on which the other focal point of the fifth substantially elliptic radio wave reflecting plate 194b and one focal point of the sixth substantially elliptic radio wave reflecting plate 194c are aligned, and in a region in the closest proximity to the focal point 198. Further, having passed the vicinity of the focal point 198, the interrogation signals are reflected on the reflection surface 195c of the sixth substantially elliptic radio wave reflecting plate 194c, and concentrate once again on the other focal point 199 of the sixth substantially elliptic radio wave reflecting plate 194c and in a region in the closest proximity to the focal point 199.

Hence, regions where the interrogation signals are strong are formed on the focal points 197, 198, and 199 and in close proximity to the focal points 197, 198, and 199. By placing the radio frequency tags 13 in these regions to enable communications, the communication accuracy between the interrogator 11 and the radio frequency tags 13 can be improved.

The reception interrogator antenna 193 is placed at a position far from the transmission interrogator antenna 192, at which response signals from the respective radio frequency tags 13 described above are readily received.

In the case of FIG. 28, three substantially elliptic radio wave reflecting plates 194a, 194b, and 194c are used. However, four or more substantially elliptic radio wave reflecting plates may be provided in combination to be placed in the same manner that one focal point is aligned with another substantially elliptic radio wave reflecting plate, and the other focal point is aligned with another different substantially elliptic radio wave reflecting plate. Alternatively, it may be configured in such a manner that a plurality of substantially elliptic radio wave reflecting plates, including two substantially elliptic radio wave reflecting plates placed so that the two focal points thereof are aligned with each other, are provided in combination.

As has been described, in the RFID system 190, because a region where the interrogation signals are strong can be broadened, the communication accuracy between the interrogator 191 and the radio frequency tags 13 is improved. Also, by using a plurality of substantially elliptic radio wave reflecting plates, a propagation direction of interrogation signals can be changed, which increases a degree of freedom in placement of the RFID system 190.

Also, because the transmitter 191a is connected to the transmission interrogator antenna 192 and the receiver 191b is connected to the reception interrogator antenna 193, when the transmission interrogator antenna 192 and the reception interrogator antenna 193 are placed far apart, a degree of freedom in placement is increased in comparison with the configuration in which the transmission interrogator antenna 192 and the reception interrogator antenna 193 are connected to a single interrogator having a transmission portion and a reception portion. In addition, even when the transmission interrogator antenna 192 and the reception interrogator antenna 193 are placed far apart, a path, such as a connection line, between the transmission interrogator antenna 192 and the transmitter 191a, and a path, such as a connection line, between the reception interrogator antenna 193 and the receiver 191b can be shorter, and influences of these paths to the signals can be thereby prevented.

In the RFID system 180 according to the nineteenth embodiment above, the transmitter 191a is connected to the transmission interrogator antenna 192 and the receiver 191b is connected to the reception interrogator antenna 193. However, as still another embodiment of the invention, it may be configured in such a manner that the transmission interrogator antenna 192 and the reception interrogator antenna 193 are connected to the interrogator 11 shown in the RFID system 10 according to the first embodiment. In a case where communications are enabled by using a single interrogator 11 and a single interrogator antenna 12, when interrogation signals are transmitted from the interrogator 11 to the interrogator antenna 12, processing to separate the interrogation signals from response signals received at the interrogator antenna 12 is necessary on the ground that the interrogation signals are reflected on the interrogator antenna 12. However, by providing the transmission interrogator antenna 192 and the reception interrogator antenna 193, the processing on the response signals received from the radio frequency tags 13 becomes easier.

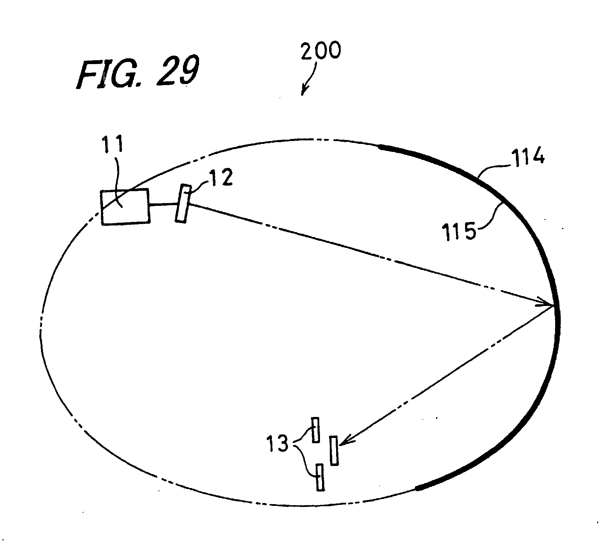

FIG. 29 is a view showing the configuration of an RFID system 200 according to a twentieth embodiment of the invention. The RFID system 200 has the same configuration as the RFID system 110 according to the twelfth embodiment above, except that the interrogator antenna 12 and the radio frequency tags 13 are placed differently from those of the RFID system 110. Hence, portions having the same configuration are denoted by the same reference numerals with respect to the RFID system 110, and a description thereof is omitted. Shown in FIG. 29 is the cross section of the substantially elliptic radio wave reflecting plate 114.

The RFID system 200, serving as a radio communications apparatus, comprises an interrogator 11, an interrogator antenna 12 connected to the interrogator 11, radio frequency tags 13, and a substantially elliptic radio wave reflecting plate 114. The interrogator 11 and the radio frequency tags 13 are able to communicate with each other directly and via the reflection surface 115 of the substantially elliptic radio wave reflecting plate 114.

The interrogator antenna 12 is placed to be directed to the reflection surface 115 of the substantially elliptic radio wave reflecting plate 114. Interrogation signals transmitted from the interrogator antenna 12 are reflected on the reflection surface 115 of the substantially elliptic radio wave reflecting plate 114 and received in the radio frequency tags 13. Response signals from the radio frequency tags 13 pass through the same path and are received at the interrogator antenna 12.

By providing the substantially elliptic radio wave reflecting plate 114 to reflect the interrogation signals, it is possible to prevent the interrogation signals from scattering by passing through to the backside of the substantially elliptic radio wave reflecting plate 114, that is, the surface on a side opposite to the reflection surface 115. Interference of radio waves with another radio communications system can be thereby reduced. Also, it is possible to concentrate the interrogation signals in a region opposing the reflection surface 115 of the substantially elliptic radio wave reflecting plate 114, which enables the interrogation signals to be utilized effectively.

Also, because the reflection surface 115 of the substantially elliptic radio wave reflecting plate 114 is a curved surface, it is possible to concentrate the interrogation signals reflected on the reflection surface 115 locally within the region opposing the reflection surface 115 of the substantially elliptic radio wave reflecting plate 114. Hence, by concentrating signals transmitted from the interrogator antenna 12, a region where the interrogation signals are strong can be readily formed. By placing the radio frequency tags 13 in this region where the interrogation signals are strong, the gain is increased, which can in turn improve the communication accuracy between the interrogator 11 and the radio frequency tags 13. Further, a communicable distance between the interrogator antenna 12 and the radio frequency tags 13 can be extended.

Also, by providing the substantially elliptic radio wave reflecting plate 114 to reflect the interrogation signals, a signal propagation direction can be changed, which can in turn increase a degree of freedom in placement of the interrogator antenna 12 and the radio frequency tags 13.

In still another embodiment of the invention, in the RFID systems of the twelfth through twentieth embodiments above, it may be configured in such a manner that communications are enabled with the radio frequency tags 13 attached to the objects 17 transported by the transportation apparatus 16 shown in the RFID system 170 according to the seventeenth embodiment. In this case, by providing the transportation apparatus 16 in such a manner that the frequency tags 13 pass by a region where the interrogation signals concentrate, the interrogator 11 becomes able to make communications with the radio frequency tags 13 successively at high communication accuracy.

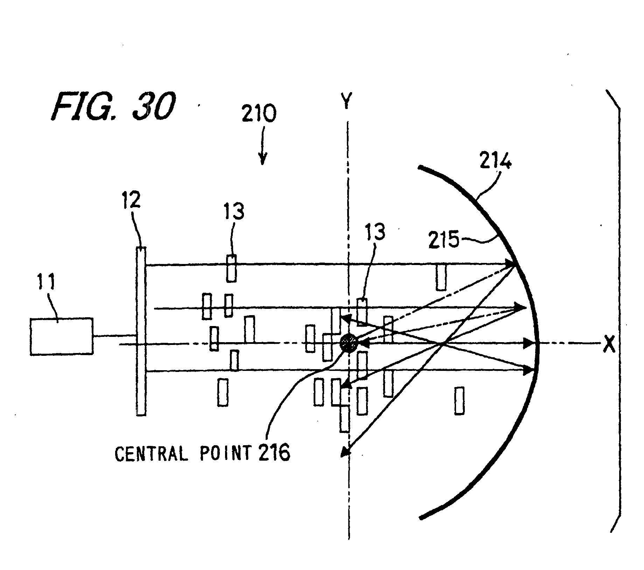

FIG. 30 is a view showing the configuration of an RFID system 210 according to a twenty-first embodiment of the invention. The RFID system 210, serving as a radio communications apparatus, comprises an interrogator 11, an interrogator antenna 12 connected to the interrogator 11, radio frequency tags 13 serving as transponders, and a substantially circular radio wave reflecting plate 214. Shown in FIG. 30 is the cross section of the substantially circular radio wave reflecting plate 214. The RFID system 210 of this embodiment has the same configuration as the RFID systems of the first through twentieth embodiments above. Hence, the corresponding portions are denoted by the same reference numerals, and a description thereof is omitted.

The substantially circular radio wave reflecting plate 214 has a reflection surface 215 that reflects radio wave signals. The reflection surface 215 of the substantially circular radio wave reflecting plate 214 is a concave surface that bends inward, which is a curved surface including a part of a spherical surface or a cylindrical surface, or a curved surface similar thereto, and for example, a curved surface comprising a part of a spherical surface. A spherical surface and a cylindrical surface includes a part of a circular curve, and a curved surface including a part of a curved surface similar to a spherical surface or a cylindrical surface includes a part of a curve similar to a circular curve. To be more specific, the reflection surface 215 of the substantially circular radio wave reflecting plate 214 is formed as a part of a spherical surface, which is a surface smaller than a hemispherical surface.

The substantially circular radio wave reflecting plate 214 is able to reflect interrogation signals transmitted from the interrogator antenna 12 and response signals transmitted by reflection from the radio frequency tags 13 on the reflection surface 215.

The interrogator antenna 12 is placed in close proximity to a virtual straight line including a central point 216 of the reflection surface 215 of the substantially circular radio wave reflecting plate 214 and passing through the reflection surface 215, to be directed to the reflection surface of the substantially circular radio wave reflecting plate almost in parallel with the virtual straight line. In the invention, the term "in close proximity to the virtual straight line" includes the virtual straight line. In the invention, the term "almost in parallel with" includes parallel. The central point 216 of the reflection surface of the substantially circular radio wave reflecting plate 214 means a central point of a spherical surface when the reflection surface 215 of the substantially circular radio wave reflecting plate 214 is a spherical surface, a set of central points of circular curves when cut on a plane perpendicular to the axis line of a cylindrical surface when the reflection surface of the substantially circular radio wave reflecting plate 214 is a cylindrical surface, and a central point of a spherical surface or a cylindrical surface that approximates to a spherical surface or a cylindrical surface when the reflection surface of the substantially circular radio wave reflecting plate 214 is a curved surface similar to a spherical surface or a cylindrical surface. Also, the term "in close proximity to the central point" includes the central point and a peripheral region of the central point, and means a region where the radio frequency tags 13 placed therein are able to perform communication processing precisely.

The radio frequency tags 13 are placed broadly in close proximity to the interrogator antenna 12 and in close proximity to the central point 216 of the reflection surface 215 of the substantially circular radio wave reflecting plate 214. The radio frequency tags 13 are able to communicate directly with the interrogator 11, and also are able to communicate with the interrogator 11 indirectly via the reflection surface 215 of the substantially circular radio wave reflecting plate 214.

When interrogation signals are transmitted from the interrogator antenna 12, the radio frequency tags 13 placed in close proximity to the interrogator antenna 12 obtain sufficient obtained communication power, which is the power obtained from the interrogation signals. Hence, communications between the radio frequency tags 13 placed in close proximity to the interrogator antenna 12 and the interrogator 11 are enabled at good accuracy.

On the other hand, of the interrogation signals transmitted from the interrogator antenna 12, the interrogation signals that have not been received in the radio frequency tags 13 placed in close proximity to the interrogator antenna 12 travel toward the substantially circular radio wave reflecting plate 214. The obtained communication power in the radio frequency tags 13 becomes smaller as the radio frequency tags 13 are apart farther from the interrogator antenna 12, and therefore, the obtained communication power that the radio frequency tags 13, placed in close proximity to the central point 216 of the substantially circular radio wave reflecting plate 214, obtain directly from the interrogator antenna 12 is small.

Of the interrogation signals transmitted from the interrogator antenna 12, the interrogation signals that have not been received in the radio frequency tags 13 placed in close proximity to the interrogator antenna 12 are reflected on the reflection surface 215 of the substantially circular radio wave reflecting plate 214. Herein, let an X axis be a given virtual straight line including the central point 216 of the reflection surface 215 of the substantially circular radio wave reflecting plate 214 and passing through the reflection surface 215, and a Y axis be another virtual straight line including the central point 216 and interesting with that particular virtual straight line, that is, the X axis, at right angles on a virtual plane including that particular virtual straight line. Because the radio waves travel straight, an angle of incidence and an angle of reflection with respect to a normal line to the reflection surface 215, on which the interrogation signals transmitted from the interrogator antenna 12 are reflected, are assumed as nearly equal. Of the interrogation signals transmitted from the interrogator antenna 12, the interrogation signals that propagate on the X axis and pass the central point 216 are reflected on the reflection surface 215 and propagate again to the central point 216. On the other hand, of the interrogation signals traveling toward the substantially circular wave radio wave reflecting plate 214, the interrogation signals that propagate in parallel with the X axis and pass by a position apart from the central point 216 on the Y axis are reflected on the reflection surface 215. The interrogation signals then pass over the Y axis on a side opposite to the position on the Y axis with the central point 216 in between, which is the position the interrogation signals passed when they traveled toward the substantially circular radio wave reflecting plate 214.

Of the interrogation signals traveling toward the substantially circular radio wave reflecting plate 214, the interrogation signals that pass over the Y axis in the closest proximity to the central point 216 are reflected on the reflection surface 215 of the substantially circular radio wave reflecting plate 214, and concentrate somewhere in the closest proximity to the central point 216. On the other hand, of the interrogation signals traveling toward the substantially circular radio wave reflecting plate 214, as to the interrogation signals that propagate to a position apart from the central position 216, when the interrogation signals travel toward the substantially circular radio wave reflecting plate 214 from the interrogator antenna 12, the interrogation signals passing a position apart farther from the central position 216 propagate to a position apart farther from the central point 216 after reflected on the reflection surface 215.

Hence, the interrogation signals reflected on the reflection surface 215 of the substantially circular radio wave reflecting plate 214 concentrate not at a point position having no volume, but in a region having predetermined dimensions, in close proximity to the central point 216 of the reflection surface 215 of the substantially circular radio wave reflecting plate 214. It is thus possible to form broadly a region where the interrogation signals are strong, in close proximity to the central point 216 of the reflection surface 215 of the substantially circular radio wave reflecting plate 214. In this region where the interrogation signals are strong, the obtained communication power in the radio frequency tags 13 becomes larger. Hence, by placing the radio frequency tags 13 in this region where the interrogation signals are strong, the communication precision between the radio frequency tags 13 and the interrogator 11 is increased.

Response signals transmitted by reflection from the radio frequency tags 13 are received at the interrogator antenna 12 directly or via the reflection surface 215 of the substantially circular radio wave reflecting plate 214.

Any of the radio frequency tags 13a, 13b, and 13c described above can be used as the radio frequency tags 13. However, in the case of communications with the use of circular polarized waves, efficient communications can be achieved by using the cross tag 13c shown in FIG. 5. The cross tag 13c is able to address right-handed circular polarized waves on one surface, and left-handed circular polarized waves on the other surface. For example, in a case where interrogation signals are transmitted from the interrogator antenna 12 in the form of right-handed circular polarized waves, the cross tags 13c, which are placed in close proximity to the interrogator antenna 12 and communicate directly with the interrogator antenna 12, are able to receive interrogation signals efficiently when placed in such a manner that one surface of each faces the interrogator antenna 12. Also, in this case, the interrogation signals reflected on the reflection surface 215 of the substantially circular radio wave reflecting plate 214 are converted to left-handed circular polarized waves. Hence, the cross tags 13c placed in close proximity to the central point 216 of the substantially circular radio wave reflecting plate 214 become able to receive interrogation signals efficiently when placed in such a manner that the other surface of each faces the substantially circular radio wave reflecting plate 214. Response signals transmitted by reflection toward the substantially circular radio wave reflecting plate 214 from the radio frequency tags 13c, placed in close proximity to the central point 216 of the reflection surface 215 of the substantially circular radio wave reflecting plate 214, are in the form of left-handed circular polarized waves. However, the response signals are converted to right-handed circular polarized waves when reflected on the reflection surface 215 of the substantially circular radio wave reflecting plate 214, and therefore can be received at the interrogator antenna 12.

As has been described, in the RFID system 210, of the interrogation signals transmitted from the interrogator antenna 12 placed in close proximity to the central point 216 of the reflection surface 215 of the substantially circular radio wave reflecting plate 214, the interrogation signals that have not been received in the radio frequency tags 13 placed in close proximity to the interrogator antenna 12 are reflected on the reflection surface 215 of the substantially circular radio wave reflecting plate 214. It is thus possible to prevent the interrogation signals from scattering by passing through to the backside of the substantially circular radio wave reflecting plate 214, that is, the surface on a side opposite to the reflection surface 215. Interference of radio waves with another radio communications system can be thereby reduced.

Even when a small interrogator antenna 12, having a broad directional characteristic to enable radio waves to be radiated at a broad directional angle, is used as the interrogator antenna 12, it is still possible to concentrate the interrogation signals efficiently. The radio frequency tags 13 therefore receive the interrogation signals transmitted from the interrogator 11 directly and through reflection on the reflection surface 215 of the substantially circular radio wave reflecting plate 214, and are thus able to utilize the interrogation signals received in both ways, which enables the interrogation signals to be utilized effectively.

Because the interrogation signals reflected on the reflection surface 215 of the substantially circular radio wave reflecting plate 214 concentrate in a region having predetermined dimensions, in close proximity to the central point 216 of the substantially circular radio wave reflecting plate 214, it is possible to form broadly a region where the interrogation signals are strong, in close proximity to the central point 216. By placing the radio frequency tags 13 in this region where the interrogation signals are strong, not only can the communication accuracy between the radio frequency tags 13 placed in this region and the interrogator 11 be improved, but also a communication distance between the interrogator antenna 12 and the radio frequency tags 13 can be extended.

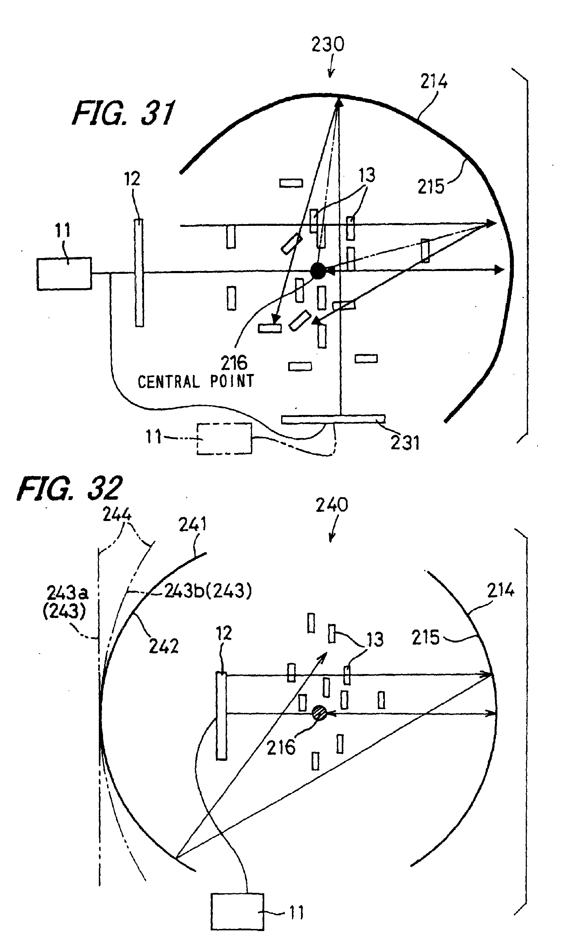

FIG. 31 is a view showing the configuration of an RFID system 230 according to a twenty-second embodiment of the invention.

The RFID system 230, serving as a radio communications apparatus, comprises an interrogator 11, an interrogator antenna 12 and another interrogator antenna 231 connected to the interrogator antenna, radio frequency tags 13 serving as transponders, and a substantially circular radio wave reflecting plate 214. Shown in FIG. 4 is the cross section of the substantially circular radio wave reflecting plate 214. The RFID system 230 is configured to additionally include another interrogator antenna 231 in the configuration of the RFID system 210 according to the twenty-first embodiment above. Hence, the same components are denoted by the same reference numerals with respect to the RFID system 210, and a description thereof is omitted. Because another interrogator antenna 231 has the same configuration as the interrogator antenna 12, a description thereof is omitted.

In this embodiment, more concretely, the reflection surface 215 of the substantially circular radio wave reflecting plate 214 comprises a part of a spherical surface, which is a surface larger than a hemispherical surface.

The interrogator antenna 12 and another interrogator antenna 231 are placed in such a manner that interrogation signals transmitted from the interrogator antenna 12 and another interrogator antenna 231 are reflected on the reflection surface 215 of the substantially circular radio wave reflecting plate 214 to travel independently in different directional directions, and concentrate in regions different from each other. In other words, the interrogation signals transmitted from another interrogator antenna 231 are reflected on the reflection surface 215 of the substantially circular radio wave reflecting plate 214, and concentrate in a region, which is different from the region where interrogation signals transmitted from the interrogator antenna 12 concentrate, in close proximity to the central point 216 of the reflection surface 215 of the substantially circular radio wave reflecting plate 214. It is thus possible to further broaden a region where the interrogation signals are strong, in close proximity to the central point 216. The communication accuracy between the radio frequency tags 13 placed in close proximity to the central point 216 and the interrogator 11 is thereby improved.

Interrogation signals transmitted from the plurality of interrogator antennas 12 and 231 can be transmitted in a time-divisional manner or transmitted concurrently.

Also, in a case where the communication accuracy differs in each of the interrogator antennas 12 and 231, the communication accuracy of the overall RFID system 230 is increased by selecting information from the interrogator antenna having the highest communication accuracy by the interrogator 11.

The plurality of interrogator antennas 12 and 231 described above are connected to a single interrogator 11. However, as still another embodiment of the invention, an interrogator 11 indicated by a virtual line of FIG. 31 may be further provided, so that the interrogator antenna 12 and another interrogator 231 are connected respectively to different interrogators 11. In this case, too, the interrogation signals transmitted from the interrogator antenna 12 and another interrogator antenna 231 can be transmitted in a time-divisional manner or transmitted concurrently. As still another embodiment of the invention, a further interrogator antenna may be provided in addition to the interrogator antenna 12 and another interrogator antenna 231, that is, it may be configured to provide three or more interrogator antennas.

FIG. 32 is a view showing the configuration of an RFID system 240 according to a twenty-third embodiment of the invention. The RFID system 240, serving as a radio communications apparatus, comprises an interrogator 11, an interrogator antenna 12 connected to the interrogator 11, radio frequency tags 13 serving as transponders, a substantially circular radio wave reflecting plate 214, and another radio wave reflecting plate 241. Shown in FIG. 32 are the cross sections of the substantially circular radio wave reflecting plate 214 and another radio wave reflecting plate 241.

The RFID system 240 is configured to additionally include another radio wave reflecting plate 241 in the configuration of the RFID system 210 according to the twenty-first embodiment above. Hence, the same components are denoted by the same reference numerals with respect to the RFID system 210, and a description of such components is omitted.

Another radio wave reflecting plate 241 is a reflecting plate having a reflection surface that reflects radio wave signals. In this embodiment, another radio wave reflecting plate 241 is of the same shape as the substantially circular radio wave reflecting plate 214, and has a reflection surface 242 including a part of the reflection surface 215 of the substantially circular radio wave reflecting plate 214. In the RFID system 240, the reflection surface 242 of another radio wave reflecting plate 241 is placed oppositely to the reflection surface 215 of the substantially circular radio wave reflecting plate 214.

Interrogation signals, transmitted from the interrogator antenna 12 and reflected on the reflection surface 215 of the substantially circular radio wave reflecting plate 214, concentrate in a region having predetermined dimensions in close proximity to the central point 216 of the reflection surface 215. The interrogation signals are further reflected on the reflection surface 242 of another radio wave reflecting plate 241, and concentrate in a region different from the region where the interrogation signals reflected on the reflection surface 215 concentrate. It is thus possible to utilize interrogation signals by reflecting the interrogation signals in a region sandwiched by the two radio wave reflecting plates, which enables the interrogation signals to be utilized more effectively. It is also possible to efficiently prevent the interrogation signals from being radiated to the outside from the region sandwiched by the substantially circular radio wave reflecting plate 214 and another radio wave reflecting plate 241.

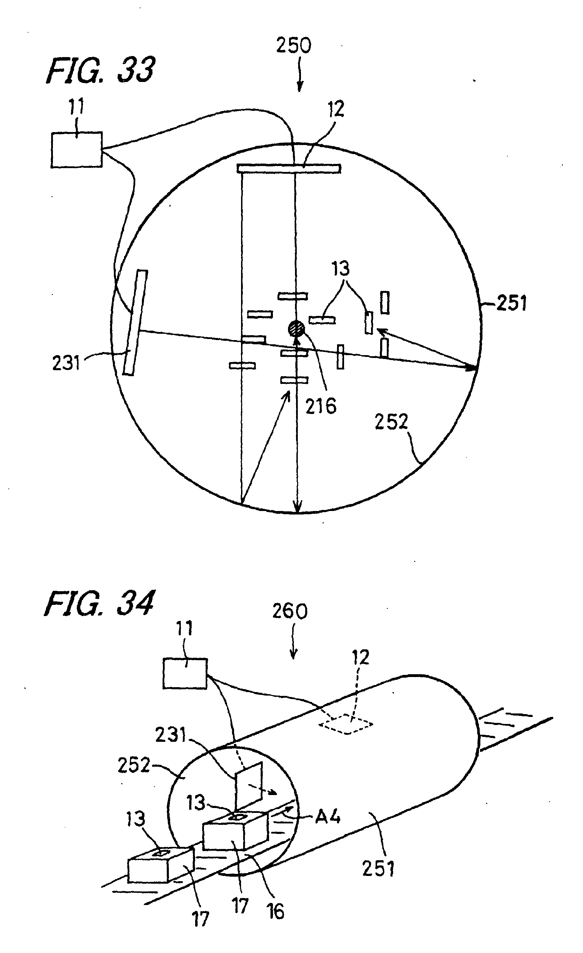

Another radio wave reflecting plate 241 described above is of the same shape as the substantially circular radio wave reflecting plate 214. However, as still another embodiment of the invention, a substantially non-circular radio wave reflecting plate 244 having a reflection surface of a shape different from the shape including a part of a circular curve or a curve similar thereto, may be used as another radio wave reflecting plate 241. The substantially non-circular radio wave reflecting plate 244 is a reflecting plate having a reflection surface 243 that reflects radio wave signals. The reflection surface 243 is configured to include a part of a plane 243a, or a paraboloid of revolution or a spherical surface 243b indicated by virtual lines of FIG. 34. By placing the reflection surface 243 of the substantially non-circular radio wave reflecting plate 244 configured as above oppositely to the reflection surface 215 of the substantially circular radio wave reflecting plate 214, it is possible to efficiently prevent the interrogation signals from being radiated to the outside from the region sandwiched by the two reflecting plates. Interference with another radio communications system can be thereby reduced further.

FIG. 33 is a view showing the configuration of an RFID system 250 according to a twenty-fourth embodiment of the invention. The RFID system 250, serving as a radio communications apparatus, comprises an interrogator 11, an interrogator antenna 12 and another interrogator antenna 231 connected to the interrogator 11, radio frequency tags 13, and a second substantially circular radio wave reflecting plate 251. Shown in FIG. 33 is the cross section of the second substantially circular radio wave reflecting plate 251.

The RFID system 250 has the same configuration as the RFID system 230 according to the twenty-second embodiment above, except that the substantially circular radio wave reflecting plate 214 in the RFID system 230 is replaced with the second substantially circular radio wave reflecting plate 251. Hence, the same components are denoted by the same reference numerals with respect to the RFID system 230, and a description of such components is omitted.

The second substantially circular radio wave reflecting plate 251 is a reflecting plate having a reflection surface 252 that reflects radio wave signals. In contrast to the reflection surface 215 of the substantially circular radio wave reflecting plate 214 described above that comprises a curved surface including a part of a spherical surface or a cylindrical surface, or a curved surface similar thereto, the reflection surface 252 of the second substantially circular radio wave reflecting plate 251 is a spherical surface or a cylindrical surface, or a curved surface similar thereto, and for example, a cylindrical surface. A difference between the reflection surface 215 of the substantially circular radio wave reflecting plate 214 and the reflection surface 252 of the second substantially circular radio wave reflecting plate 251 is whether the reflection surface is a curved surface including only a part of a circular curve or a curved surface including a circular curve entirely or almost entirely. The reflection surface 252 of the second substantially circular radio wave reflecting plate 251 includes a part of the reflection surface 215 of the substantially circular radio wave reflecting plate 214.

The interrogator antenna 12 and another interrogator antenna 231 are placed in such a manner that interrogation signals transmitted from the interrogator antenna 12 and another interrogator antenna 231 are reflected on the reflection surface 252 of the second substantially circular radio wave reflecting plate 251 to travel independently in different directional directions, and concentrate in regions different from each other. In other words, interrogation signals transmitted from another interrogator antenna 231 are reflected on the reflection surface 252 of the second substantially circular radio wave reflecting plate 251, and concentrate in a region, which is different from the region where interrogation signals transmitted from the interrogator antenna 12 concentrate, in close proximity to the central point 216 of the reflection surface 252 of the substantially circular radio wave reflecting plate 251. It is thus possible to further broaden a region where the interrogation signals are strong, in close proximity to the central point 216. The communication accuracy between the radio frequency tags 13 placed in close proximity to the central point 216 and the interrogator 11 is thereby improved.

In the RFID system 250, because the interrogator antenna 12 and the radio frequency tags 13 are placed on the inner side of the reflection surface 252 of the second substantially circular radio wave reflecting plate 251, it is possible to further reduce radiation of radio waves to the outside from the inside of the reflection surface 252. Interference of radio waves with another radio communications system can be thereby reduced further.

The interrogator 11 is placed at an outer side of the reflection surface 252 of the second substantially circular radio wave reflecting plate 251 so as not to block interrogation signals and response signals transmitted and received between the interrogator antenna 12 and the radio frequency tags 13.

FIG. 34 is a perspective view showing the configuration of an RFID system 260 according to a twenty-fifth embodiment of the invention. The RFID system 260 is configured to additionally include a transportation apparatus 16 in the configuration of the RFID system 250 according to the twenty-fourth embodiment above. Hence, the same components are denoted by the same reference numerals with respect to the RFID system 250, and a description thereof is omitted. In this embodiment, the reflection surface 252 of the substantially circular radio wave reflecting plate 251 is a cylindrical surface or a curved surface similar thereto, and for example, a cylindrical surface.

In the RFID system 260, a part of a belt conveyor used as the transportation apparatus 16 is provided on an inside of the cylindrical surface, serving as the reflection surface 252 of the substantially circular radio wave reflecting plate 251, along a direction in which the cylindrical surface extends. In the RFID system 260, the radio frequency tags 13 are attached to objects 17 placed and transported on the belt conveyor, and communications between the radio frequency tags 13 and the interrogator 11 are enabled while the objects 17 are being moved by means of the belt conveyor in a direction from one end to the other end of an opening portion in the cylindrical surface, that is, in a direction indicated by an arrow A4 of FIG. 34.

The interrogator antenna 12 and another interrogator antenna 231 are placed at a predetermined interval in a direction in which the belt conveyor extends, that is, in the transportation direction of the objects 17. It is thus possible to form broadly a region where the interrogation signals transmitted from the interrogator antenna 12 and another interrogator antenna 231 are strong. By configuring in such a manner that the radio frequency tags 13 are attached to the objects 17 and pass by the region where the interrogation signals are strong on the inner side of the reflection surface 252 of the substantially circular radio wave reflecting plate 251, communications at good accuracy can be achieved with the radio frequency tags 13 attached to the objects 17 that are transported successively on the belt conveyor.

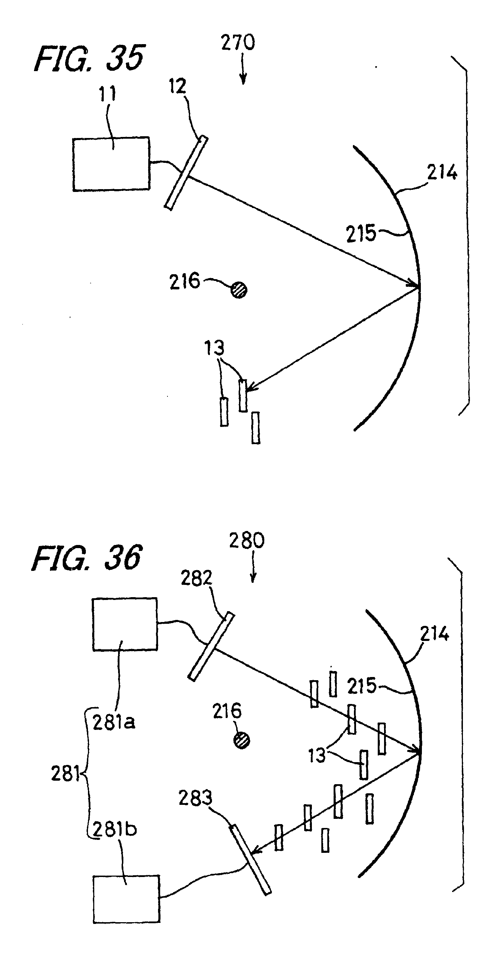

FIG. 35 is a view showing the configuration of an RFID system 270 according to a twenty-sixth embodiment of the invention. The RFID system 270, serving as a radio communications apparatus, comprises an interrogator 11, an interrogator antenna 12 connected to the interrogator 11, radio frequency tags 13, and a substantially circular radio wave reflecting plate 214. Shown in FIG. 35 is the cross section of the substantially circular radio wave reflecting plate 214.

The RFID system 270 has the same configuration as the RFID system 210 according to the twenty-first embodiment above, except that the interrogator antenna 12 and the radio frequency tags 13 are placed differently from those of the RFID system 210. Hence, portions having the same configuration are denoted by the same reference numerals with respect to the RFID system 210, and a description thereof is omitted.

The interrogator 11 and the radio frequency tags 13 are able to communicate with each other directly and via the reflection surface 215 of the substantially circular radio wave reflecting plate 214.

The interrogator antenna 12 is placed to be directed to the reflection surface 215 of the substantially circular radio wave reflecting plate 214. Interrogation signals transmitted from the interrogator antenna 12 are reflected on the reflection surface 215 of the substantially circular radio wave reflecting plate 214, and received in the radio frequency tags 13. Response signals from the radio frequency tags 13 pass through the same path and are received at the interrogator antenna 12.

By providing the substantially circular radio wave reflecting plate 214 to reflect the interrogation signals and the response signals, it is possible to prevent the interrogation signals and the response signals from scattering by passing through to the backside of the substantially circular radio wave reflecting plate 214, that is, the surface on the side opposite to the reflection surface 215. Interference of radio waves with another radio communications system can be thereby reduced. It is also possible to concentrate the interrogation signals and the response signals in a region opposing the reflection surface 215 of the substantially circular radio wave reflecting plate 214, which enables the interrogation signals and the response signals to be utilized effectively.

Also, because the reflection surface 215 of the substantially circular radio wave reflecting plate 214 is a curved surface, it is possible to concentrate interrogation signals reflected on the reflection surface 215 locally within the region opposing the reflection surface 215 of the substantially circular radio wave reflecting plate 214. Hence, by concentrating interrogation signals transmitted from the interrogator antenna 12, a region where the interrogation signals are strong can be readily formed. By placing the radio frequency tags 13 in this region where the interrogation signals are strong, the gain is improved, which can in turn improve the communication precision between the interrogator 11 and the radio frequency tags 13. Further, a communicable distance between the interrogator antenna 12 and the radio frequency tags 13 can be extended.

Also, by reflecting the interrogation signals with the use of the substantially circular radio wave reflecting plate 214, a signal propagation direction can be changed, and a degree of freedom in placement of the interrogator antenna 12 and the radio frequency tags 13 can be thereby increased.

FIG. 36 is a view showing the configuration of an RFID system 280 according to a twenty-seventh embodiment of the invention. The RFID system 280, serving as a radio communications apparatus, comprises an interrogator 281, a transmission interrogator antenna 282, a reception interrogator antenna 283, radio frequency tags 13, and a substantially circular radio wave reflecting plate 214. Shown in FIG. 1 is the cross section of the substantially circular radio wave reflecting plate 214.

The interrogator 281 comprises a transmitter 281a connected to the transmission interrogator antenna 282, and a receiver 281b connected to the reception interrogator antenna 283. Because the transmitter 281a has the same configuration as the transmission portion of the interrogator 11 described above, and the receiver 281b has the same configuration as the reception portion of the interrogator 11 described above, a description thereof is omitted. It goes without saying that the transmitter 281a and the transmission interrogator antenna 282 are furnished with the same transmission and reception functions as those of the interrogator 11 and the interrogator antenna 12 described above.

Because the transmission interrogator antenna 282 and the reception interrogator antenna 283 have the same configuration as the interrogator antenna 12 of the twenty-first embodiment above, a description thereof is omitted. The transmission interrogator antenna 282 transmits interrogation signals to the radio frequency tags 13, and the reception interrogator antenna 283 receives response signals transmitted by reflection from the radio frequency tags 13.

The transmission interrogator antenna 282 is placed to be directed to the reflection surface 215 of the substantially circular radio wave reflecting plate 214. The reception interrogator antenna 283 is placed at a position apart from the transmission interrogator antenna 282, which is a position at which response signals from the respective radio frequency tags 13 are readily received. In this embodiment, the reception interrogator antenna 283 is placed in a direction in which interrogation signals transmitted from the transmission interrogator antenna 282 propagate after reflected on the reflection surface 215 of the substantially circular radio wave reflecting plate 214.

As has been described, in the RFID system 280, because a region where the interrogation signals are strong can be formed broadly, the communication accuracy between the interrogator 281 and the radio frequency tags 13 is improved. Also, by using a plurality of substantially circular radio wave reflecting plates, it is possible to change a direction in which the interrogation signals are radiated, which increases a degree of freedom in placement of the RFID system 280.

Also, because the transmitter 281a is connected to the transmission interrogator antenna 282, and the receiver 281b is connected to reception interrogator antenna 283, when the transmission interrogator antenna 282 and the reception interrogator 283 are placed far apart, a degree of freedom in placement is increased in comparison with the configuration in which the transmission interrogator antenna 282 and the reception interrogator antenna 283 are connected to a single interrogator having a transmission portion and a reception portion. Also, even when the transmission interrogator antenna 282 and the reception interrogator antenna 283 are placed far apart, a path, such as a connection line, between the transmission interrogator antenna 282 and the transmitter 281a, and a path, such as a connection line, between the reception interrogator antenna 283 and the receiver 281b can be shorter. Influences of these paths to the signals, for example, a cable loss, can be thereby prevented.

In the RFID system 280 according to the twenty-seventh embodiment above, it is configured in such a manner that the transmitter 281a is connected to the transmission interrogator antenna 282, and the receiver 281b are connected to the reception interrogator antenna 283. However, as still another embodiment of the invention, it may be configured in such a manner that the transmission interrogator antenna 282 and the reception interrogator antenna 283 are connected to the interrogator 11 described above. In a case where communications are enabled with the use of a single interrogator 11 and a single interrogator antenna 12, when interrogation signals are transmitted from the interrogator 11 to the interrogator antenna 12, there is a need for the processing to separate the signals reflected on the interrogator antenna 12 from the response signals received at the interrogator antenna 12. However, by providing the transmission interrogator antenna 282 and the reception interrogator 283, the processing on the response signals received from the radio frequency tags 13 become easier.

In still another embodiment of the invention, in the RFID systems of the twenty-first through twenty-fourth embodiments above and the twenty-sixth and twenty-seventh embodiments above, it may be configured in such a manner that communications are enabled with the radio frequency tags 13 attached to the objects 17 transported by the transportation apparatus 16 shown in the RFID system 260 according to the twenty-fifth embodiment. In this case, by configuring in such a manner that the radio frequency tags 13 pass by a region where the interrogation signals concentrate, the interrogator 11 becomes able to communicate with the radio frequency tags 13 successively at high communication accuracy.

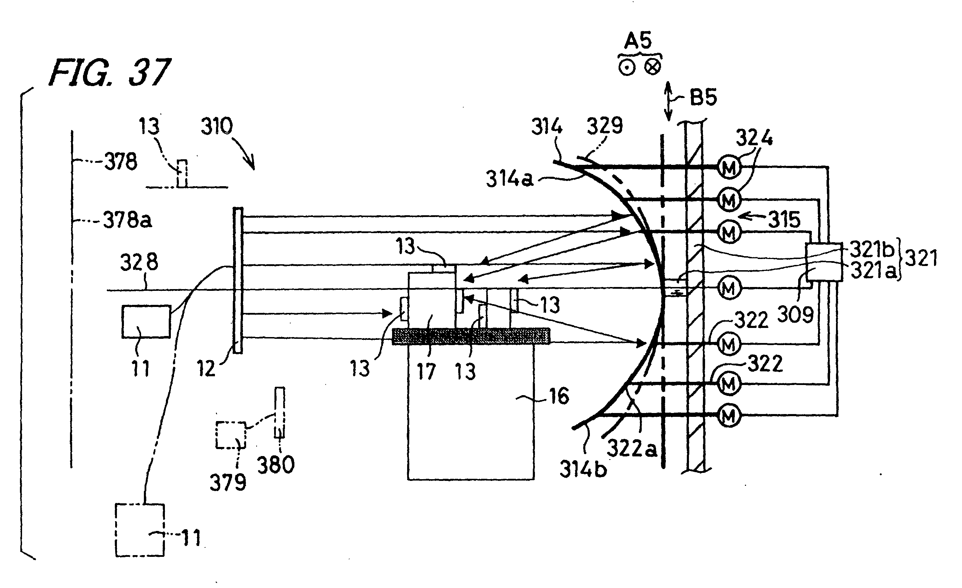

FIG. 37 is a cross section showing the configuration of an RFID system 310 according to a twenty-eighth embodiment of the invention. The RFID system 310, serving as a radio communications apparatus, comprises an interrogator 11, an interrogator antenna 12 connected to the interrogator 11, radio frequency tags 13 serving as transponders, a variable radio wave reflecting plate 314, and reflecting plate changing means 315. Shown in FIG. 37 are the cross sections of the variable radio wave reflecting plate 314 and the reflecting plate changing means 315. The RFID system 310 of this embodiment has the same configuration as the RFID systems of the first through twenty-seventh embodiments above. Hence, the corresponding portions are denoted by the same reference numerals, and a description thereof is omitted.

The radio frequency tags 13 are transponders capable of receiving interrogation signals from the interrogator antenna 12, and communicating with the interrogator 11 at least via the variable radio wave reflecting plate 314.

The radio frequency tags 13 are provided to objects 317 placed on a belt conveyor serving as a transportation apparatus 16. The radio frequency tags 13 are able to communicate directly with the interrogator 11, and are able to communicate indirectly with the interrogator 11 via a reflection surface 314a of the variable radio wave reflecting plate 314 (hereinafter, "the reflection surface 314a of the variable radio wave reflecting plate 314" is referred to simply as "the reflection surface 314a"). In the case of FIG. 37, the objects 317 are transported in a space between the interrogator antenna 12 and the variable radio wave reflecting plate 314 by means of the transportation apparatus 16.

The variable radio wave reflecting plate 314 has the reflection surface 314a that reflects radio wave signals. The variable radio wave reflecting plate 314 has at least flexibility. In this embodiment, the variable radio wave reflecting plate 314 has flexibility and elasticity, and remains in a planar shape in a natural state, to be more specific, a shape having the reflection surface 314a comprising a flat surface. Also, the variable radio wave reflecting plate 314 is of an rectangular shape when viewed from one side in a thickness direction. The variable radio wave reflecting plate 314 is able to reflect interrogation signals transmitted from the interrogator antenna 12 and response signals transmitted from the radio frequency tags 13 on the reflection surface 314a.

The variable radio wave reflecting plate 314 is a plate, the surface of which including at least the reflection surface is a flat surface made of metal, and for example, is a dielectric substrate formed by laminating aluminum foil on a flat metal plate made of copper and aluminum, in which the aluminum foil forms the reflection surface. In this embodiment, the variable radio wave reflecting plate 314 is placed in such a manner that its longitudinal direction A5 is parallel to the transportation direction of the objects 317.

The reflecting plate changing means 315 changes at least one of the shape and the position of the reflection surface 314a of the variable radio wave reflecting plate 314. The reflecting plate changing means 315 is able to change the reflection surface 314a to at least one shape from shapes including a part of a parabolic curve, an elliptic curve, a circular curve, and a curve close to these. It is thus possible to bend the variable radio wave reflecting plate 314 to make the reflection surface 314a in a concave shape.

In this embodiment, the reflecting plate changing means 315 changes the shape of the reflection surface 314a to be symmetric with respect to a shape changing plane 328, which is a virtual plane passing the central position of the variable radio wave reflecting plate 314 and perpendicular to a width direction B5 of the variable radio wave reflecting plate 314 in a natural state. The central position of the variable radio wave reflecting plate 314 is a gravity point position of the variable radio wave reflecting plate 314 in a natural state. Hereinafter, "the central position of the variable radio wave reflecting plate 314" is occasionally referred to as the central position.

A curved surface including a part of a parabolic curve and a close curve includes a curved surface including a part of a paraboloid of revolution or a parabolic cylindrical surface, or a curved surface close thereto. A curve including a part of an elliptic curve or a close curve includes a curved surface including a part of an ellipsoid of revolution or an elliptic cylindrical surface, or a curved surface close thereto. A curved surface including a part of a circular curve or a close curve includes a curved surface including a part of a spherical surface and a cylindrical surface or a curve close thereto.

The reflecting plate changing means 315 comprises a fixing jig 321 for fixing the variable radio wave reflecting plate 314, and pressing members 322 for pressing the variable radio wave reflecting plate 314. The variable radio wave reflecting plate 314 is fixed on at least one point in a non-reflection surface 314b, which is a surface on a side opposite to the reflection surface 314a, by the fixing jig 321, and pressed on at least one point, different from the fixing position, from the side opposite to the reflection surface 314a by one end portions of the pressing members 322. The pressing members 322 are, for example, bar-shaped or plate-shaped members.

In the case shown in FIG. 37, the fixing jig 321 has a fixing shaft 321a and a tabular fixing table 321b. The fixing shaft 321a is disposed between the variable radio wave reflecting plate 314 and the fixing table 321b in such a manner that an axis line of the fixing shaft 321a becomes perpendicular to the reflection surface 314a and the non-reflection surface 314b in a natural state. One end portion of the fixing shaft 321a is provided nearly at the central portion of the non-reflection surface 314b. Another end portion of the fixing shaft 321a is fixed to one surface of the fixing table 321b on a side opposing the variable radio wave reflecting plate 314. A plurality of fixing shafts 321a may be provided, and in this case, the axis lines of all the fixing shafts 321a are provided to be included, for example, in the shape changing plane 328.

The fixing table 321b is provided in parallel with the variable radio wave reflecting plate 314 in a natural state with a space in between. The fixing table 321b is provided with a plurality of through-holes that penetrate through in a thickness direction. In a case where the variable radio wave reflecting plate 314 is projected under a state where the variable radio wave reflecting plate 314 and the fixing table 321b are provided in parallel with each other with a space in between, the through-holes are made at intervals in the longitudinal direction A5 and the width direction B5 of the variable radio wave reflecting plate 314. The through-holes are so formed as to be able to insert the pressing members 322 therein. The pressing members 322 are shaft members which are inserted into the through-holes. One or more pressing members 322 and through-holes may be provided. In a state where one end portions of the pressing members 322 are not abutting on the non-reflection surface 314b, the variable radio wave reflecting plate 314 remains tabular.

The pressing members 322 are moved in a predetermined pressing direction. The pressing direction is a direction coming in close proximity to and moving away from the variable radio wave reflecting plate 314, which is a direction perpendicular to the reflection surface 314a of the variable radio wave reflecting plate 314 in a natural state. When the pressing members 322 are moved in the direction coming in close proximity to the variable radio wave reflecting plate 314, the one end portions of the pressing members 322 abut on the non-reflection surface 314b. When the pressing members 322 are moved further in the direction coming in close proximity to the variable radio wave reflecting plate 314, the pressing members 322 press the non-reflection surface 314b and bend the variable radio wave reflecting plate 314. It is thus possible to change the shape of the reflection surface 314a from a flat surface state to a concave state.

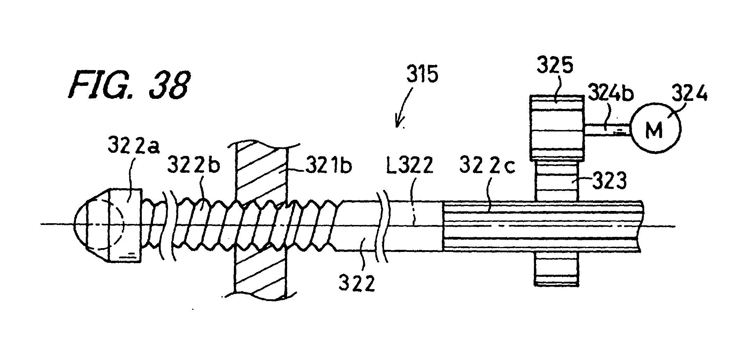

Each pressing member 322 is spline-coupled to a driven spur gear 323 (see FIG. 38) at an end portion on a side opposite to the end portion that abuts on the variable radio wave reflecting plate 314. By rotating a driving spur gear 325 (see FIG. 38) that is geared with the driven spur gear 323 with the use of driving means 324, for example, an electric motor, the pressing member 322 is moved in the direction coming in close proximity to and move away from the variable radio wave reflecting plate 314. The driving means 324 is controlled by control means 309 on time basis. In this embodiment, a plurality of pressing members 322 are provided to the fixing table 321b, and the pressing members 322 are rotated individually by their respective driving means 324. Each driving means 324 is controlled by the control means 309 on time basis, which makes it possible to change the pressing state of the respective pressing members 322 individually on time basis. It is thus possible to change the shape of the reflection surface 314a of the variable radio wave reflecting plate 314 with time.

Also, a change to another shape is possible by moving the pressing members 322 not only in the direction coming in close proximity to the variable radio wave reflecting plate 314, but also in the direction moving away from the variable radio wave reflecting plate 314. By changing the positions of the pressing members 322 with the respect to the fixing table 321b in this manner, the shape of the reflection surface 314a can be changed by changing a pressing state at one end portions of the pressing members 322. It is thus possible, for example, to change a propagation direction of the reflected signals as needed by changing the shape of the reflection surface 314a depending on the situation during communications as well as the placement situation of the interrogator antenna 12 and the radio frequency tags 13.

The shape of the reflection surface 314a may be changed to be symmetric with respect to a virtual plane passing the central position of the variable radio wave reflecting plate 314 and perpendicular to the shape changing plane 328. Alternatively, the shape of the reflection surface 314a may be changed to be symmetric with respect to a virtual straight line passing the central position and perpendicular to the reflection surface 314a in a natural state, or to be asymmetric with respect to the virtual straight line.

In a state where the objects 317, to which the radio frequency tags 13 are provided, are transported by the transportation apparatus 16 as described above, the radio frequency tags 13 placed in close proximity to the interrogator antenna 12 are irradiated with interrogation signals transmitted from the interrogator antenna 12 effectively. The radio frequency tags 13 thus obtain sufficiently the obtained communication power, which is the power obtained from the interrogation signals, and transmit response signals to the interrogator antenna 12. Communications between the radio frequency tags 13 placed in close proximity to the interrogator antenna 12 and the interrogator 11 are thereby enabled at good accuracy.

Of the interrogation signals transmitted from the interrogator antenna 12, the interrogation signals that have not been received in the radio frequency tags 13 placed in close proximity to the interrogator antenna 12 travel toward the variable radio wave reflecting plate 314. Because the obtained communication power in the radio frequency tags 13 becomes smaller as the radio frequency tags 13 are apart farther from the interrogator antenna 12, it is necessary to concentrate the interrogation signals to the radio frequency tags 13 by means of the variable radio wave reflecting plate 314.

In a case where the reflection surface 314a of the variable radio wave reflecting plate is of a shape of a curve close to a parabolic curve, for example, the shape indicated by a solid line of FIG. 37, the interrogation signals, which have been reflected on the variable radio wave reflecting plate 314, concentrate not at a point position having no volume, but in a region having predetermined dimensions in close proximity to the focal point determined by the shape. It is thus possible to form a region where the interrogation signals are strong. The radio frequency tags 13 placed within the region therefore have larger obtained communication power, which increases the communication accuracy between the interrogator 11 and the radio frequency tags 13.

Also, in a case where the reflection surface 314a of the variable radio wave reflecting plate 314 is of a shape different from the shape of a curve closer to a parabolic curve as described above, for example, the shape indicated by a virtual line 329 of FIG. 37, the positions of regions where the reflected interrogation signals concentrate vary because propagation directions of the reflected interrogation signals are different. By changing the shape of the reflection surface 314a in this manner, it is possible not only to form a region where the interrogation signals are strong in a region opposing the reflection surface 314a, but also to place the region in a desired region. The radio frequency tags 13, placed within the region different from a region before the shape was changed, therefore have larger obtained communication power, and the communication accuracy between the interrogator 11 and the radio frequency tags 13 is thereby increased.

Because the reflection surface 314a of the variable radio wave reflecting plate 314 is able to change its shape by the reflecting plate changing means 315, it is able to change a propagation direction of the reflected interrogation signals as needed. It is thus possible to form a region where the interrogation signals are strong, and the communication accuracy can be improved by increasing the obtained communication power in the radio frequency tags 13.

Even in a factory where the positions of the interrogator antenna 12, the transportation apparatus 16, and the objects 317 are restricted, the shape of the reflection surface 314a can be changed as needed to improve the reception accuracy of the radio frequency tags 13. The system can be thus readily optimized depending on the on-site situations.

Also, the fixing jig 321 may be configured in such a manner that one end portion of the fixing shaft 321a and the non-reflection surface 314b are coupled rotatably to enable the position of the reflection surface 314a of the variable radio wave reflecting plate 314 to be changed. Also, the fixing jig 321 may comprise the fixing shaft 321a alone. In this case, the other end portion of the fixing shaft 321a is fixed, for example, to the wall surface while the pressing members 322 are allowed to move.

Even when the variable radio wave reflecting plate 314 has no elasticity and has the flexibility alone, the shape and the position of the reflection surface 314a can be adjusted by proving a pushing member having elasticity, for example, a spring member, in a space between the variable radio wave reflecting plate 314 and the fixing table 321b. Also, in the lower portion of the variable radio wave reflecting plate 314, a portion where the transportation apparatus 16 blocks the interrogation signals transmitted from the interrogator antenna 12 does not function effectively, and such a portion may be removed.

FIG. 38 is a cross section showing a part of the reflecting plate changing means 315. In this embodiment, the reflecting plate changing means 315 includes the driving means 324, the driving spur gear 325, and further the driven spur gear 323. A roller 322a, of which ball is held rotatably by a holding portion, is provided to one end portion of the pressing member 322.

A through-hole in the fixing table 321b is a screw hole in which a female screw is formed. The pressing member 322 has a male screw portion 322b, on the outer peripheral portion of which is formed a male screw, at a portion closer to one end portion in the axis line direction, and a spline portion 323b, on the outer peripheral portion of which are formed a plurality of spline grooves in a circumferential direction at intervals, on the other end portion side in the axis line direction from the male screw portion 322b. The pressing member 322 is screwed together in such a manner that the male screw portion 322b is inserted in the through-hole in the fixing table 321b, and is allowed to rotate about the axis line L322. The pressing member 322, by rotating about the axis line L322, moves along the axis line L322 with respect to the fixing table 321b, and thereby moves in a direction to come in close proximity to and move away from the variable radio wave reflecting plate 314.

The driving means 324 is means for rotating and driving the pressing member 322, and is an electric motor, for example, a servo motor. The driving spur gear 325 is provided to one end portion of an output shaft 324b of the driving means 324, and rotated and driving by the driving means 324.

The driven spur gear 323 is provided with a through-hole that penetrates in the axis line direction, and spline grooves are formed on the inner peripheral portion. The pressing member 322 and the driven spur gear 323 are spline-coupled. The driven spur gear 323 is thus inhibited from rotating about the axis line L322, and is allowed to move in the direction of the axis line L322 with respect to the pressing member 322. The driven spur gear 323 is geared with the driving spur gear 325.

When the driving spur gear 325 is rotated and driving by the driving means 324, the driven spur gear 323 geared with the driving spur gear 325 starts to rotate, which causes the pressing member 322 to rotate about the axis line L322. Being screwed together with the fixing table 321b, the pressing member 322 moves in either direction in which the pressing member 322 screws in or screws out, that is, in the direction coming in close proximity to and move away from the variable radio wave reflecting plate 314. By causing the roller 322a to abut on the non-reflection surface 314b in allowing the pressing member 322 to screw in and screw out, that is to say, in moving the pressing member 322 in the direction coming in close proximity to and moving away from the variable radio wave reflecting plate 314, it is possible to change the shape of the reflection surface 314a by changing the pressing state of the variable radio wave reflecting plate 314.

The pressing member 322 changes the abutting position on the reflection surface 314 by not only rotating about the axis line L322, but also moving in the direction coming in close proximity to and moving away from the variable radio wave reflecting plate 314. However, because it is configured in such a manner that the ball provided rotatably to the roller 322a abuts on the reflection surface 314, not only can the non-reflection surface 314b be pressed without being damaged, but also the shape of the reflection surface 314a can be changed readily and smoothly.

Also, because the shape of the variable radio wave reflecting plate 314 is changed with the use of the screw mechanism and the spline mechanism as described above, the shape of the reflection surface 314a can be fine-adjusted easily. Also, even when the driving force of the driving means 324, which is a driving source, is small, it is still possible to change the shape of the reflection surface 314a with a large pressing force. In addition, because a plurality of pressing members 322 are used, the shape of the reflection surface 314a of the variable radio wave reflecting plate 314 can be adjusted at good accuracy.

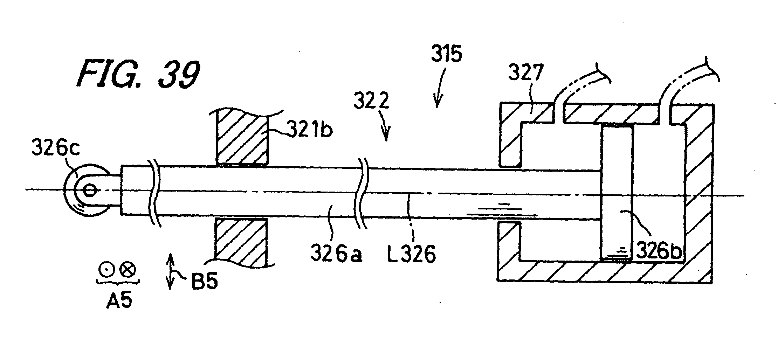

FIG. 39 is a cross section showing another example of the reflecting plate changing means 315. As another example of the reflecting plate changing means 315, it may be configured in such a manner that a fluid pressure cylinder, comprising an extendable and contractible piston rod 326a with respect to the cylinder tube 327, is used together with the driving means 324. For the fluid cylinder, the interior of the cylinder tube 327 is partitioned by the piston 26b provided with the piston rod 326a, and the piston rod 326a is extended and contracted by controlling the feeding and the discharging of fluid in each fluid pressure chamber. Fluid can be, for example, operating oil, operating air, or operating water.

According to this configuration, the pressing member 322 is a bar-shaped member, and is fixed to the piston rod 326a and inserted gently into the through-hole in the fixing table 321b. To one end portion of the piston rod 326 is provided a roller 326c, and the non-reflection surface 314b is pressed by the roller 326c. The roller 326c is provided rotatably about the axis line L326 of the piston rod 326a and the axis line perpendicular to either of the longitudinal direction or the width direction of the variable radio wave reflecting plate 314.

For example, when the shape of the reflection surface 314a is changed with respect to the shape changing plane 328 described above, the roller is allowed to rotate about the axis line L326 of the piston rod 326a and the axis line perpendicular to the longitudinal direction A5 of the variable radio wave reflecting plate 314. Also, when the shape of the reflection surface 314a is changed with respect to a virtual plane passing the central position of the reflection surface 314a and perpendicular to the shape changing plane 328, the roller 326c is allowed to rotate about the axis line L326 of the piston rod 326a and the axis line perpendicular to the width direction of the variable radio wave changing plate 314.

By controlling the feeding and the discharging of fluid in the respective fluid pressure chambers in the cylinder tube 327 while the piston rod 326a is inserted in the through-hole in the fixing table 321b, the pressing member 322 is moved in the direction coming in close proximity to and moving away from the variable radio wave reflecting plate 314 via the piston rod 326a. The piston rod 326a moves in the direction coming in close proximity to and moving away from the variable radio wave reflecting plate 314 and thereby changes the abutting position on the variable radio wave reflecting plate 314. However, because it is configured in such a manner that the roller 326c abuts on the variable radio wave reflecting plate 314, not only can the non-reflection surface 314b be pressed without being damaged, but also the shape of the reflection surface 314a can be changed readily and smoothly. Because the piston rod 326 does not rotate about the axis line L326 but merely moves in a direction parallel to the axis line L326, a configuration in which the roller is provided to one end of the piston rod 326 is sufficient. However, the configuration to use the ball as described above can be adopted as well.

Because a fluid cylinder using an oil pressure or a water pressure is able to generate a larger force than an electric motor to press the variable radio wave reflecting plate 314, it is effective when the dimensions of the variable radio wave reflecting plate 314 are large. Also, for a fluid cylinder using an air pressure, ambient air can be used and there is no risk of pollution.

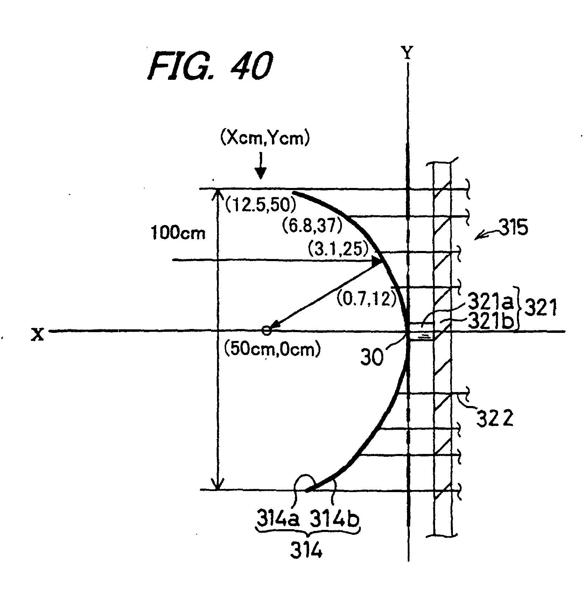

FIG. 40 is a cross section showing one example of the shape of the reflection surface 314a. When the shape of the reflection surface 314a is changed, the pressing members 322 have to be moved by giving consideration to the positions at which the pressing members 322 are provided and the shape of the reflection surface 314a when it has been changed. Let an X axis be a virtual straight line passing the central position of the variable radio wave reflecting plate 314 and perpendicular to the reflection surface 314a in a natural state, and a Y axis be a virtual straight line passing the central position, intersecting with the X axis at right angles, and perpendicular to one of the longitudinal direction A5 and the width direction B5 of the variable radio wave reflecting plate 314.

In the case shown in FIG. 40, the X axis is a virtual straight line included in the shape changing plane 328, and the Y axis is a virtual straight line perpendicular to the shape changing plane 328. The intersection of the X axis and the Y axis is set at the reference point 330. Also, a positive direction on the X axis is set to a direction facing the interrogator antenna 12 in front and facing the reflection surface 314a in the rear, and a positive direction on the Y axis is set to a direction facing the fixing table 321b on the right and facing the non-reflection surface 314b on the left.

In the case shown in FIG. 40, the shape of the reflection surface 314a is changed to be symmetric with respect to the shape changing plane 328. To be more concrete, when viewed in a direction perpendicular to the X axis and the Y axis, the reflection surface 314a is changed to a shape of a parabolic curve expressed by Y² = 200X. The variable radio wave reflecting plate 314 is a reflecting plate whose dimension in a direction parallel to the Y axis is at least greater than 100 cm in a natural state. The through-holes in the fixing table 321b are formed in the positive direction on the Y axis at the coordinates (0, 12), (0, 25), (0, 37), and (0, 50). The values of the coordinates are approximate values. The through-holes in the fixing table 321b in the negative direction on the Y axis are formed symmetric with the through-holes in the positive direction on the Y axis with respect to the X axis.

The pressing members 322 are inserted into the through-holes provided in the fixing table 321b, and abut on the non-reflection surface 314b of the variable radio wave reflecting plate 314 in a natural state. Moving distances of the respective pressing members 322 for changing the variable radio wave reflecting plate 314 from the tubular shape to a shape of a desired parabolic curve can be determined based on an equation of a parabolic curve to be changed and the positions of the through-holes into which the respective pressing members 322 are inserted. When the shape has been changed, the coordinates of the portions, at which the variable radio wave reflecting plate 314 and the pressing members 322 are brought into contact with each other, in the positive direction on the X axis and the positive direction on the Y axis are (0. 7, 12), (3.1, 25), (6.8, 37), and (12.5, 50) in approximate values. From these, moving distances of the respective pressing members 322 can be known.

Also, the central position of a region where the reflected interrogation signals concentrate was at a position on the X axis and 50 cm away from the reference point 330 in the positive direction on the X axis, that is to say, at the coordinate (50, 0). When the shape of the reflection surface 314a had been changed, the dimension across the opening in the width direction of the variable radio wave reflecting plate 314 in a direction parallel to the Y axis was 100 cm. Even when the reflection surface 314a is changed to another curve, such as shapes of an elliptic curve and a circular curve, moving distances of the pressing members 322 can be readily determined. Also, because it is configured in such a manner that the pressing members 322 are placed in parallel with each other to move in the axial direction of the pressing members 322, the pressing position of the pressing members 322 can be readily detected, from which the shape of the reflection surface 314a can be determined.

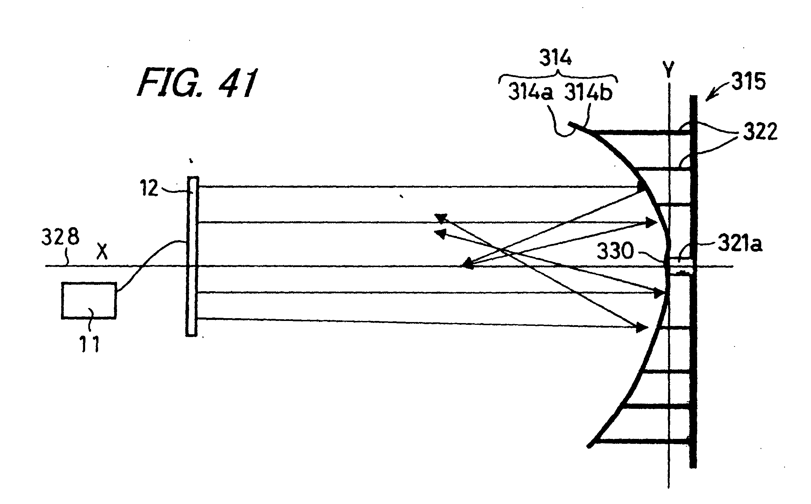

FIG. 41 is a cross section showing another example of the shape of the reflection surface 314a. In the case shown in FIG. 41, the X axis and the Y axis are set as specified above for the reflection surface 314a, and the reflecting plate changing means 315 changes the shape of the reflection surface 314a of the variable radio wave reflecting plate 314 to be asymmetric with respect to the shape changing plane 328. For example, the reflection surface 314a in the positive direction on the Y axis is changed to a shape of a curve close to a parabolic curve by the reflecting plate changing means 315, and the reflection surface 314a in the negative direction on the Y axis is changed to a shape of a curve close to a circular curve by the reflecting plate changing means 315.

The interrogation signals reflected on the reflection surface 314a in the positive direction on the Y axis concentrate somewhere in close proximity to the focal point of the parabolic curve, and a region where the interrogation signals are strong is formed with the central position being placed on the X axis. The interrogation signals reflected on the reflection surface 314b in the negative direction on the Y axis scatter in the first quadrant as is shown in FIG. 41, due to reflection by a circular curve. The interrogation signals reflected on the reflection surface 314a in the positive direction on the Y axis and the interrogation signals reflected on the reflection surface 314a in the negative direction on the Y axis together form a region where the interrogation signals are strong in the first quadrant. By forming a region where the interrogation signals are strong not only in one point, but also in more than one point discretely in this manner, as well as changing the shape of the reflection surface 314a as needed, it is possible to adjust the positions of regions where the interrogation signals are strong. The communication accuracy between the interrogator 11 and the radio frequency tags 13 can be thereby improved, which enables the interrogation signals to be utilized effectively.

In this embodiment, response signals transmitted from the radio frequency tags 13 are received at the interrogator antenna 12 directly or via the reflection surface 314a of the variable radio wave reflecting plate 314. Any of the foregoing radio frequency tags 13 can be used as the radio frequency tags. However, in a case where communications are enabled with the use of circular polarized waves, efficient communications can be achieved with the use of the cross tags 13c.

The cross tag 13c is able to address right-handed circular polarized waves on one surface, and left-handed circular polarized waves on the other surface. For example, in a case where interrogation signals are transmitted from the interrogator antenna 12 in the form of right-handed circular polarized waves, the interrogation signals can be received efficiently by placing the cross tags 13c, which are placed in close proximity to the interrogator antenna 12 and communicate directly with the interrogator antenna 12, in such a manner that one surface of each faces the interrogator antenna 12. Also, in this case, the interrogation signals reflected on the reflection surface 314a are converted to left-handed circular polarized waves. Hence, the cross tags 13c placed in close proximity to the focal point of the reflection surface 314a become able to receive the interrogation signals efficiently when placed in such a manner that the other surface of each faces the variable radio wave reflecting plate 314. Although response signals transmitted from the cross tags 13c placed in close proximity to the focal point of the reflection surface 314a toward the variable radio wave reflecting plate 314 are in the form of left-handed circular polarized waves, the signals are converted to right-handed circular polarized waves when reflected on the reflection surface 314a, so that the signals can be received at the interrogator antenna 12.

Also, in this embodiment, a single interrogator antenna 12 is connected to the interrogator 11. However, it may be configured in such a manner that a plurality of interrogator antennas 12 are connected to the interrogator 11. According to this configuration, the interrogator 11 separately includes one interrogator antenna 12 for transmitting interrogation signals to the radio frequency tags 13, and another interrogator antenna 12 for receiving response signals from the radio frequency tags 13. Hence, it is not necessary to process response signals received from the radio frequency tags 13 on the ground that the interrogation signals transmitted from the interrogator 11 to the interrogator antenna 12 are reflected on the interrogator antenna 12 as in a case where a single interrogator antenna 12 transmits/receives signals to/from the radio frequency tags 13. The processing of the response signals received from the radio frequency tags 13, therefore, can be easier.

Also, in this embodiment, it may be configured in such a manner that the interrogator 11 includes a transmitter for generating interrogation signals, and a receiver, provided separately from the transmitter, for receiving answers from the radio frequency tags 13, while the interrogator antenna 12 includes a transmission interrogator antenna and a reception interrogator antenna. According to this configuration, the transmission interrogator antenna is connected to the transmitter, and the reception interrogator antenna 380 indicated by a virtual line is connected to the receiver 379. In the case of FIG. 37, the interrogator 11 indicated by a solid line is used as the transmitter, and the interrogator antenna 12 connected thereto is used as the transmission interrogator antenna. By configuring the interrogator 11 and the interrogator antenna 12 in this manner, it is possible to place the transmission interrogator antenna and the reception interrogator antenna at positions far apart, which increases a degree of freedom in placement. Also, in this case, because paths, such as connection lines, from the respective antennas to the transmitter and the receiver can be shorter, influences from the paths, such as the connection lines, to the signals, for example, a cable loss, can be reduced.

Also, the RFID system 310 may be configured to further include an invariable radio wave reflecting plate 378 having a reflection surface of a constant shape at a constant position, indicated by a virtual line in FIG. 37, in addition to the variable radio wave reflecting plate 314. By configuring the RFID system 310 in this manner, communications are enabled between the interrogator 11 and the radio frequency tags 13 by reflecting the interrogation signals on the reflection surface 314a of the variable radio wave reflecting plate 314 and on a reflection surface 378a of the invariable radio wave reflecting plate 378. In the case of FIG. 37, the reflection surface 378a of the invariable radio wave reflecting plate 378 is placed oppositely to the reflection surface 314a of the variable radio wave reflecting plate 314. As is indicated by a virtual line, the interrogator 11 is retraced in advance when placed so as not to block interrogation signals. Interrogation signals are transmitted toward the variable radio wave reflecting plate under such a placement state. By placing the reflection surface 314a of the variable radio wave reflecting plate 314 oppositely to the reflection surface 378a of the invariable radio wave reflecting plate 378 in this manner, it is possible to efficiently prevent interrogation signals from being radiated to the outside from a region sandwiched by the two reflecting plates. Interference with another radio communications system can be thereby reduced. Instead of using the driving means 324, the manipulator himself may move the pressing members 322 in the direction coming in close proximity to and moving away from the variable radio wave reflecting plate 314.

According to this embodiment, in the RFID system 310, of the interrogation signals transmitted from the interrogator antenna 12, signals that have not been received in the radio frequency tags 13 placed in close proximity to the interrogator antenna 12 are reflected on the reflection surface 314a of the variable radio wave reflecting plate 314. It is thus possible to prevent the interrogation signals from scattering by passing through to the backside of the variable radio wave reflecting plate 314, that is, the surface on the opposite side of the reflection surface 314a. Interference of radio waves with another radio communications system can be thereby reduced.

In addition, even when a small interrogator antenna 12, having a broad directional characteristic to enable radio waves to be radiated at a broad directional angle, is used as the interrogator antenna 12, it is still possible to concentrate the interrogation signals efficiently. The radio frequency tags 13 therefore receive the interrogation signals transmitted from the interrogator 11 directly and through reflection on the reflection surface 314a of the variable radio wave reflecting plate 314, and are thus able to utilized the interrogation signals received in both ways, which enables the interrogation signals to be utilized effectively.

Because the interrogation signals reflected on the reflection surface 314a concentrate in a region having predetermined dimensions, in close proximity to the focal point determined by the shape of the reflection surface 314a, it is possible to form broadly a region where the interrogation signals are strong, in close proximity to the focal point. By placing the radio frequency tags 13 in this region where the interrogation signals are strong, the communication accuracy between the radio frequency tags 13 placed in this region and the interrogator 11 can be improved. Also, a communication distance between the interrogator antenna 12 and the radio frequency tags 13 can be extended. By guiding the interrogation signals from the interrogator antenna 12 to the radio frequency tags 13 through reflection on the reflection surface 314a, a propagation direction of the interrogation signals can be changed, which can in turn increase a degree of freedom in placement of the interrogator antenna 12 and the radio frequency tags 13.

Also, the reflection surface 314a of the variable radio wave reflecting plate 314 is changed by the reflecting plate changing means 315 to at least one shape from shapes including a part of a parabolic curve, an elliptic curve, a circular curve, and a curve close thereto. Because the reflection surface 314a is a curved surface, it is possible to concentrate interrogation signals reflected on the reflection surface 314a locally somewhere in close proximity to the focal point opposing the reflection surface 314a. Hence, by concentrating the interrogation signals transmitted from the interrogator antenna 12, a region where the interrogation signals are strong can be readily formed. Further, by changing the shape and the position of the reflection surface 314a so as to place the radio frequency tags 13 within the region where the interrogation signals are strong, not only can the communication accuracy between the interrogator antenna 11 and the radio frequency tags 13 be increased, but also a communicable distance between the interrogator antenna 12 and the radio frequency tags 13 can be extended. For example, by using more than one variable radio wave reflecting plate 314, it is possible to form not only one but also more than one region where the interrogation signals are strong, which enables the interrogation signals to be utilized effectively.

Also, the reflecting plate changing means 315 fixes at least one point of the variable radio wave reflecting plate 314, while pressing at least one point of the variable radio wave reflecting plate 314, which is different from the fixing position, from the side opposite to the reflection surface 314a, and thereby changes the reflection surface 314a of the variable radio wave reflecting plate 314 that remains tabular in a natural state to a concave shape. It is thus possible not only to form a region where the interrogation signals are strong in a region opposing the reflection surface 314a of the variable radio wave reflecting plate, but also to place the region in a desired region. Also, because the variable radio wave reflecting plate 314 has flexibility and elasticity, the reflection surface 314a can be deformed and the deformed shape can be maintained in a stable manner by a configuration as simple as changing the pressing state from the side opposite to the reflection surface 314a.

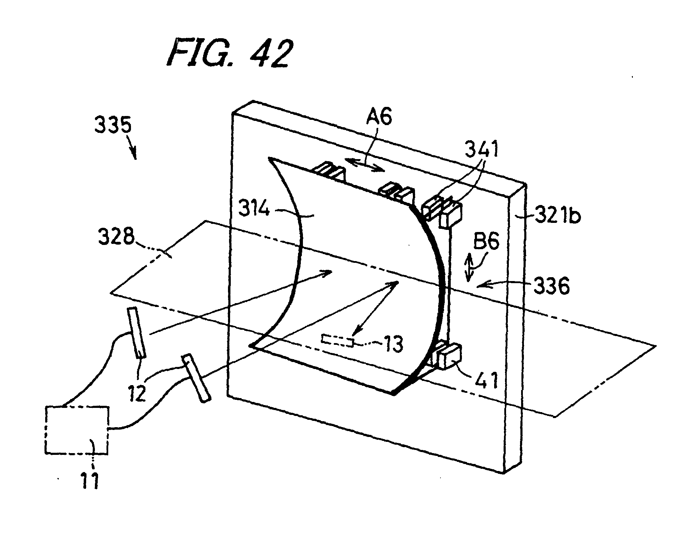

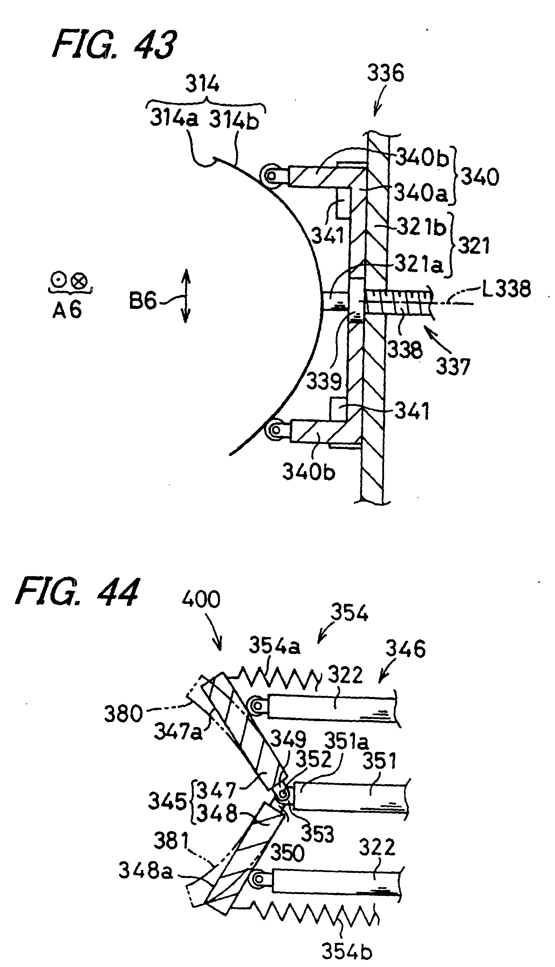

FIG. 42 is a perspective view showing the configuration of an RFID system 335 according to a twenty-ninth embodiment of the invention. FIG. 43 is a cross section showing a variable radio wave reflecting plate 314 and reflecting plate changing means 336.

In contrast to the twenty-eighth embodiment where the shape of the reflection surface 314a is changed with the use of the bar-shaped pressing members 322, in this embodiment, the shape of the reflection surface 314 is changed by bending the variable radio wave reflecting plate 314 with the use of variable jigs 337 each having a substantially horseshoe-shaped member. In the RFID system 335 of this embodiment, configurations other than this are the same as the configurations of the RFID system 310 according to the twenty-eighth embodiment above. Hence, the same portions are denoted by the same reference numerals with respect to the RFID system 310 according to the twenty-eighth embodiment above, and descriptions of the corresponding configurations and the advantages are omitted to avoid redundancy.

The reflecting plate changing means 336 comprises a fixing table 321b and the variable jigs 337 serving as the pressing members 322. In the case shown in FIG. 42 and FIG. 43, the shape of the reflection surface 314a is changed to be symmetric with respect to a shape changing plane 328, which is a virtual plane passing the central position of the reflection surface 314a and perpendicular to a width direction B6 of the variable radio wave reflecting plate 314. Each variable jig 337 comprises a manipulation shaft member 338, a coupling member 339, and a pressing tool 340.

The manipulation shaft member 338 is a shaft member, and the coupling member 339 is provided to one end portion thereof. The manipulation shaft member 338 has a male screw portion on an outer peripheral portion closer to another end portion than the portion coupled to the coupling member 339, and is screwed together with a screw hole in the fixing table 321b in which a female screw is formed. To one end portion of the manipulation shaft member 338 is provided the coupling member 339. The manipulation shaft member 338 is allowed to rotate about the axis line L338 and is inhibited to displace in a direction parallel to the axis line L338 by the coupling member 339. The coupling member 339 is provided while being fixed to the pressing tool 340, and couples the manipulation shaft member 338 to the pressing tool 340.

The pressing tool 340 is a member having a substantially horseshoe-shaped cross section, and has a base portion 340a and protrusion portions 340b. The base portion 340a is a member that extends in a predetermined single direction. In this embodiment, the pressing tool 340 is provided in such a manner that a direction in which the base portion 340 extends becomes parallel to a longitudinal direction A6 of the variable radio wave reflecting plate 314. The protrusions 340b, protruding in a direction perpendicular to a direction in which the base portion 340a extends, are provided to the both end portions of the base portion 340a, respectively. The pressing tool 340 is disposed between the variable radio wave reflecting plate 314 and the fixing table 321b in such a manner that a direction in which the protrusions 340b extend becomes parallel to the axis line L338 of the manipulation shaft member 338. The dimensions of the protrusion 340b provided to one end portion of the base portion 340a are the same as the dimensions of the protrusion 340b provided to the other end portion of the base portion 340a.

The roller 326c shown in FIG. 39 is provided rotatably to one end portion of the protrusion 340b. The roller 326c is rotatable about the axis line L338 of the manipulation shaft member 338 and about the axis line perpendicular to a direction in which the base portion 340a extends. The roller opposes a non-reflection surface 314b while the pressing tool 340 is disposed between the variable radio wave reflecting plate 314 and the fixing table 321b, and abuts on the non-reflection surface 314b when pressing the same.

The variable jigs 337 are provided not to cause mutual interference with the fixing shaft 321a. In this embodiment, a plurality of variable jigs 337 are provided at intervals in the width direction of the variable radio wave reflecting plate 314.

A rotation preventing piece 341 is a member for preventing the pressing tool 340 from rotating about the axis line L338 of the manipulation shaft member 338, and is provided on one surface of the fixing table 321b on the side opposing the variable radio wave reflecting plate 314. One end of the base portion 340a is sandwiched by two rotation preventing pieces 341 and the other end portion of the base portion 340a is sandwiched by two rotation preventing pieces 341. While the pressing tool 340 is coupled to the manipulation shaft member 338 by the coupling member 339, the pressing tool 340 is inhibited from rotating about the axis line L338 of the manipulation shaft member 338 while being allowed to displace in a direction parallel to the axis line L338 of the manipulation shaft member 338 by the rotation preventing pieces 341.

By rotating the manipulation shaft member 338 about the axis line L338, the manipulation shaft member 338 is screwed in and screwed out, and the pressing tool 340 moves in the direction coming in close proximity to and moving away from the variable radio wave reflecting plate 314. By moving the pressing tool 340 as described above, the non-reflection surface 314b is pressed by the pressing tool 340, and the shape of the reflection surface 314a of the variable radio wave reflecting plate 314 is thereby changed. The manipulation shaft member 338 is rotated with the use of an electric motor. By configuring the variable jigs 337 as described above, the shape of the reflection surface 314a can be changed not only to be symmetric with respect to the shape changing plane 328, but also to a desired shape through a change with time. A region where the reflected interrogation signals are strong can be thus formed with ease, and the communication accuracy between the interrogator 11 and the radio frequency tags 13 can be thereby improved.

Also, because the variable radio wave reflecting plate 314 has flexibility and elasticity, the reflection surface 314a can be deformed and the deformed shape can be maintained in a stable manner by a configuration as simple as changing the pressing state from the side opposite to the reflection surface 314a. Also, in FIG. 42, a plurality of interrogator antennas 12 are placed oppositely to the reflection surface 314a in the longitudinal direction and in the width direction of the variable radio wave reflecting plate 314.

In this embodiment, as is shown in FIG. 42, by using a plurality of interrogator antennas 12, a plurality of regions where the reflected interrogation signals concentrate can be formed, which enables the radio frequency tags 13 to receive the interrogation signals in a reliable manner.

The two protrusions 340b may be formed to have dimensions different from each other in a protruding direction. When configured in this manner, the shape of the reflection surface 314a can be changed to be asymmetric with respect to the shape changing plane 328. Alternatively, it may be configured in such a manner that the shape of the reflection surface 314a is changed to be symmetric with respect to a virtual plane passing the central position of the variable radio wave reflecting plate 314 and perpendicular to the shape changing plane 328. Further, it may be configured in such a manner that the shape of the reflection surface 314a is changed to be asymmetric with respect to a virtual plane passing the central position of the variable radio wave reflecting plate 314 and perpendicular to the shape changing plane 328.

Alternatively, it may be configured in such a manner that the variable jigs 337 are moved by a fluid pressure or the manipulator himself manipulates the variable jigs 337. The roller 322a shown in FIG. 38 may be provided to one end portion of the protrusion 340b. Also, a plurality of variable jigs 337 are provided at intervals in the width direction of the variable radio wave reflecting plate 314. However, only a single variable jig 337 may be provided.

FIG. 44 is a cross section showing a variable radio wave reflecting plate 345 and reflecting plate changing means 346 in an RFID system 345 according to a thirtieth embodiment of the invention. The RFID system 345 of this embodiment is configured to inflect the variable radio wave reflecting plate 314 in the RFID systems 310 and 335 above. Hence, the corresponding portions are denoted by the same reference numerals with respect to the RFID systems 310 and 335 according to the twenty-eighth and twenty-ninth embodiments above, respectively, and descriptions of the corresponding configurations and the advantages are omitted to avoid redundancy.

The variable radio wave reflecting plate 345 is formed by inflecting the variable radio wave reflecting plate 314, and has a first variable radio wave reflecting plate 347 and a second variable radio wave reflecting plate 348. In this embodiment, the dimensions of the first variable radio wave reflecting plate 347 are the same as the dimensions of the second variable radio wave reflecting plate 348. The reflection surface 314a of this embodiment comprises a reflection surface 347a of the first variable radio wave reflecting plate 347 and a reflection surface 348a of the second variable radio wave reflecting plate 348.

The first variable radio wave reflecting plate 347 has a first coupling portion 349, in which a through-hole penetrating in a direction parallel to a predetermined direction is formed, on one side surface parallel to the thickness direction. In this embodiment, the predetermined direction is a longitudinal direction of the first variable radio wave reflecting plate 347. The second variable radio wave radio wave reflecting plate 348 has a second coupling portion 350, in which a through-hole penetrating in a direction parallel to a predetermined direction is formed, in one side surface parallel to the thickness direction. In this embodiment, the predetermined direction is a longitudinal direction of the second variable radio wave reflecting plate 348.

The reflecting plate changing means 346 has a fixing shaft 351 and a coupling shaft member 352 in addition to the pressing members 322. The fixing shaft 351 has a fixing shaft coupling portion 353, in which a through-hole penetrating in a direction perpendicular to the axis line of the fixing shaft 351 is formed, on one end portion 351a. The respective through-holes in the first coupling portion 349, the second coupling portion 350, and the fixing shaft coupling portion 352 are so formed as to able to insert the coupling shaft member 352 therein. The first variable radio wave reflecting plate 347, the second variable radio wave reflecting plate 348, and the fixing shaft 351 are coupled by the coupling shaft member 352 as the coupling shaft member 352 is inserted into the respective through-holes in the first coupling portion 349, the second coupling portion 350, and the fixing shaft coupling portion 353.

While the first variable radio wave reflecting plate 347, the second variable radio wave reflecting plate 348, and the fixing shaft 351 are coupled, the axis line direction of the coupling shaft member 352 is parallel to the respective longitudinal directions of the first and second variable radio wave reflecting plates 347 and 348, and the first and second variable radio wave reflecting plates 347 and 348 are allowed to undergo angular displacement about the axis line of the coupling shaft member 352.

A pushing member 354 has a first spring member 354a and a second spring member 354b. The first spring member 354a is provided in a space between the first variable radio wave reflecting plate 347 and the fixing table 321b. One end portion of the first spring member 354a is provided to the first variable radio wave reflecting plate 347 on one surface on the opposite side of the reflection surface 347a, and the other end portion is provided to the fixing table 321b. The second spring member 354b, serving as a pushing member, is disposed between the second variable radio wave reflecting plate 348 and the fixing table 321b. One end portion of the second spring member 354b is provided on one surface on a side opposite to the reflection surface 347b of the second variable radio wave reflecting plate 348, and another end portion thereof is provided on the fixing table 321b.

The roller 326c shown in FIG. 39 is provided to one end portion of the pressing member 322, and the roller 326c abuts on the first and second variable radio wave reflecting plates 347 and 348. The pressing member 322 is, for example, the piston rod shown in FIG. 39, and changes a pressing state by controlling the feeding and the discharging of fluid.

Through the movement in a direction coming in close proximity to and moving away from the first variable radio wave reflecting plate 347 with the use of the pressing members 322, the first variable radio wave reflecting plate 347 is pressed by one end portions of the pressing members 322. The first variable radio wave reflecting plate 347 is thus allowed to undergo angular displacement about the axis line of the coupling shaft member 352. Also, through the movement in a direction coming in close proximity to and moving away from the second variable radio wave reflecting plate 348 with the use of the pressing members 322, the second variable radio wave reflecting plate 348 is pressed by one end portions of the pressing members 322. The second variable radio wave reflecting plate 348 is thus allowed to undergo angular displacement about the axis line of the coupling shaft member 352.

By allowing the first and second variable radio wave reflecting plates 347 and 348 to undergo angular displacement about the axis line of the coupling shaft member 352, it is possible to change the position of the reflection surface 347a of the first variable radio wave reflecting plate 347, and the position of the reflection surface 348a of the second variable radio wave reflecting plate 348. Also, by using the pushing member 354, not only can the position of the reflection surface 347a of the first variable radio wave reflecting plate 347 and the position of the reflection surface 348a of the second variable radio wave reflecting plate 348 be set with ease, but also the state thus set can be maintained in a stable manner.

It is thus possible to bring the reflection surface 314a of the twenty-eighth embodiment, comprising the reflection surface 347a of the first variable radio wave reflecting plate 347 and the reflection surface 348a of the second variable radio wave reflecting plate 348, into a flexion state, and therefore, the shape of the reflection surface 314a of the twenty-eighth embodiment can be changed. It is thus possible not only to form a region where the interrogation signals are strong in a region opposing the reflection surface 347a of the first variable radio wave reflecting plate 347 and the reflection surface 348a of the second variable radio wave reflecting plate 348, but also to place the region in a desired region.

Also, it is possible to change the positions of the respective reflection surfaces 347a and 348a and to maintain the shape in a stable manner by a configuration as simple as changing a pressing state from the side opposite to each of the reflection surfaces 347a and 348a of the first variable radio wave reflecting plate 347 and the second variable radio wave reflecting plate 348, respectively.

In this embodiment, it may be configured in such a manner that a plurality of first variable radio wave reflecting plates 347 and second variable radio wave reflecting plates 348 are placed in a line in the axis line direction of the coupling shaft member 352 and are coupled by means of the coupling shaft member 352. It is thus possible to form a plurality of regions where the interrogation signals are strong, discretely in a direction of the axis line of the coupling shaft member 352. The communication accuracy between the interrogator 11 and the radio frequency tags 13 can be thereby improved. In this embodiment, it is configured in such a manner that tabular first and second variable radio wave reflecting plates 347 and 348 are used. However, as are indicated by virtual lines of FIG. 44, it may be configured in such a manner that first and second variable radio wave reflecting plates 380 and 381 each having a pre-bent shape are used.

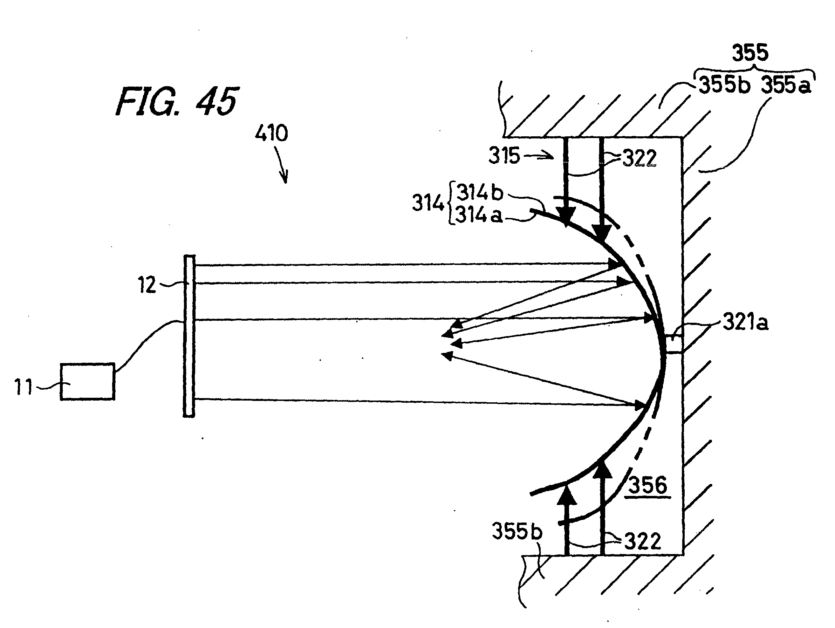

FIG. 45 is a cross section showing a variable radio wave reflecting plate 314 and reflecting plate changing means 315 in an RFID system 410 according to a thirty-first embodiment of the invention. In the RFID system 410 of this embodiment of the invention, the shape of the reflection surface 314a is changed by using the reflecting plate changing means 315 in the RFID system 310 according to the twenty-eighth embodiment, and by changing the placement of the pressing members 322. To be more specific, the shape of the reflection surface 314a is changed by moving the pressing members 322 in a direction parallel to the reflection surface 314a of the variable radio wave reflecting plate 314 in a natural state while the variable radio wave reflecting plate 314 has been bent with the use of the pressing members 322. In the RFID system of this embodiment, configurations other than this are the same as those in the RFID systems of the twenty-eighth through thirtieth embodiments above. Hence, the same portions are denoted by the same reference numerals with respect to the RFID systems of the twenty-eighth through thirtieth embodiments above, and descriptions of the corresponding configurations and the advantages are omitted to avoid redundancy.

A fixing table 355 is of a substantially horseshoe shape, and defines a space 356 surrounded by a tabular base portion 355a and two protrusions 355b. The space 356 is defined by the fixing table 355 to be large enough to accommodate the variable radio wave reflecting plate 314 in a natural state. A fixing shaft 321a is provided nearly at the central portion of the base portion 355a of the fixing table 355. The fixing shaft 321a is provided so that the axis line becomes perpendicular to the thickness direction of the base portion 355a. The protrusions 355b of the fixing table 355 are provided in parallel with the thickness direction of the base portion 355a while being provided to the both end portions of the base portion 355a. The protrusions 355b are provided, for example, to the both end portions of the base portion 355a in a longitudinal direction. The pressing members 322 have the same configuration as that of the twenty-eighth embodiment, and are provided to the protrusions 355b. The pressings members 322 are provided in such a manner that the axis line L322 becomes perpendicular to the thickness direction of the base portion 355a and parallel to the thickness direction of the protrusions 355.

The variable radio wave reflecting plate 314 is provided in the space 356 in a state where, for example, the longitudinal direction of the variable radio wave reflecting plate 314 becomes perpendicular to the respective thickness directions of the base portion 355a and the protrusions 355b of the fixing table 355, and the reflection surface 314a faces outward. The variable radio wave reflecting plate 314 has been bent, and is sandwiched by the pressing members 322 from the both sides in a direction parallel to the reflection surface 314a.

While the variable radio wave reflecting plate 314 is sandwiched by the pressing members 322 as described above, the variable radio wave reflecting plate 314 is pressed by the pressing members 322 in a direction to bring the both end portions in a predetermine direction into close proximity to each other. In this embodiment, the both end portions in the predetermined direction are both end portions in the width direction. By adjusting a degree of bending of the variable radio wave reflecting plate 314 by pressing with the use of the pressing members 322 in this manner, it is possible not only to form a region where the interrogation signals are strong in a region opposing the variable radio wave reflecting plate 314, but also to place the region in a desired region. Also, because the variable radio wave reflecting plate 314 has flexibility and elasticity, it is possible to deform the reflection surface 314a and to maintain the deformed shape in a stable manner by a configuration as simple as changing the pressing state to bring the both end portions in the predetermined direction into close proximity.

In this embodiment, it is configured in such a manner that the both end portions of the variable radio wave reflecting plate 314 in the width direction are pressed in a direction coming in proximity to each other. However, it may be configured in such a manner that the protrusions 355b are provided to the both end portions of the base portion 355a in the width direction in addition to both end portions of the base portion 355a in the longitudinal direction, so that the both end portions of the variable radio wave reflecting portion 314 in the longitudinal direction are pressed in the direction coming in close proximity to each other.

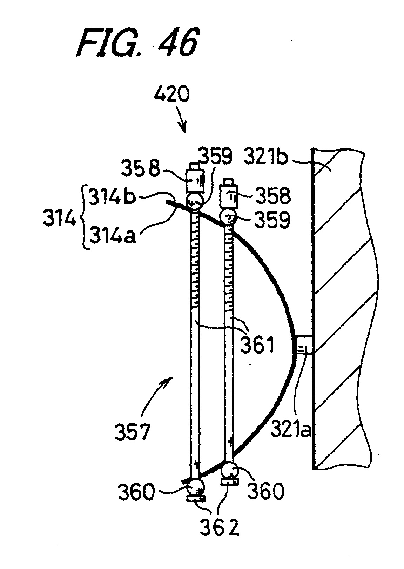

FIG. 46 is a cross section showing a variable radio wave reflecting portion 314 and reflecting plate changing means 357 in an RFID system 420 according to a thirty-second embodiment of the invention. The RFID system 420 of this embodiment has the reflecting plate changing means 157. The reflecting plate changing means 357 changes the reflection surface 314a to a concave shape by pressing the end portions of the variable radio wave reflecting plate 314 in a predetermined direction, in a direction coming in close proximity to each other while the variable radio wave reflecting plate 314 has been bent. In the RFID system of this embodiment, configurations other than this are the same as those of the RFID systems of the twenty-eighth through thirty-first embodiments above. Hence, the same portions are denoted by the same reference numerals with respect to the RFID systems of the twenty-eighth through thirty-first embodiments above, and descriptions of the corresponding configurations and the advantages are omitted to avoid redundancy.

The variable radio wave reflecting plate 314 is provided with a plurality of through-holes that penetrate in a direction parallel to the thickness direction. The through-holes in the variable radio wave reflecting plate 314 have a size sufficient for a pressing manipulation shaft member 361 to rotate about the axis line. The through-holes in the variable radio wave reflecting plate 314 are formed in the both end portions of the variable radio wave reflecting plate 314 in the width direction in such a manner that a through-hole in one end portion in the width direction and a through-hole in another end portion in the width direction make a pair with respect to the width direction. In this embodiment, another pair of through-holes is formed on the inner side of the pair of through-holes formed with respect to the width direction of the variable radio wave reflecting plate 314. The two pairs of through-holes formed as has been described above are formed in an end portion on one side in the longitudinal direction and in an end portion on the other side, respectively. In a case where the variable radio wave reflecting plate 314 is long in the longitudinal direction, the through-holes may be provided to any other arbitrary positions.

The reflecting plate changing means 357 has no electric conductivity, and comprises a pressing manipulation member 358, a first protecting member 359, a second protecting member 360, and a pressing manipulation shaft member 361 serving as a shaft member. The pressing manipulation member 358 is of a cylindrical shape. A female screw is formed inside the pressing manipulation member 358. The pressing manipulation portion 358 is inserted through the manipulation shaft member 361 serving as a shaft member, and is provided oppositely to the non-reflection surface 314b.

The first and second protecting members 359 and 360 are spherical bodies, and column-shaped through-holes are provided in the spherical bodies. The first protecting member 359 is inserted through the pressing manipulation shaft member 361, and is disposed rotatably about the axis line of the pressing manipulation shaft member 361and between the reflection surface 314b and the pressing manipulation member 358. The minor diameter of the through-hole in the first protecting member 359 is smaller than the major diameter of the pressing manipulation member 358. The second protecting member 360 is provided rotatably about the axis line of the pressing manipulation shaft member 361.

The pressing manipulation shaft member 361 is inserted through from one to the other through-hole in the pair, from the side opposite to the reflection surface 314a. The pressing manipulation shaft member 361 has a male screw portion that can be screwed together with the pressing manipulation member 358. In this embodiment, the male screw portion is provided from one end portion to an intermediate portion of the pressing manipulation shaft member 361.

To the other end portion of the pressing manipulation shaft member 361 is provided a stopper portion 362 having a sufficiently larger diameter than a diameter of the second protecting member 360. The second protecting member 360 is thus inserted through the pressing manipulation shaft member 361, and the second protecting member 360 is stopped in a state rotatable about the axis line of the pressing manipulation shaft member 361 while being disposed between the non-reflection surface 314b and the stopper portion 362.

In this embodiment, as with the RFID system 310 according to the twenty-eighth embodiment, the pressing manipulation member 358 may be screwed in and screwed out under electrical control with the use of gears and an electric motor, or screwed in and screwed out as the manipulator himself manipulates the pressing manipulation member 358.

By configuring the reflecting plate changing means 357 as has been described, the variable radio wave reflecting plate 314 is maintained in a pre-bent state. A degree of bending of the variable radio wave reflecting plate 314 is adjusted by rotating the pressing manipulation member 358 about the axis line of the pressing manipulation shaft member 361 to screw in and screw out the pressing manipulation member 358 while the reflecting plate changing means 357 is provided to the variable radio wave reflecting plate 314.

Because the first protecting member 359 is disposed between the non-reflection surface 314b and the pressing manipulation member 358, and the second protecting member 360 is disposed between the non-reflection surface 314b and the stopper portion 362 of the pressing manipulation shaft member 361, it is possible to prevent the non-reflection surface 314b from being damaged by the pressing manipulation member 358. Also, because the reflecting plate changing means 357 has no electric conductivity, even when provided oppositely to the reflection surface 314a, adverse influences to the interrogation signals, for example, a change of the propagation direction of the reflected interrogation signals, can be prevented.

By configuring the reflecting plate changing means 357 as has been described, it is possible not only to form a region where the interrogation signals are strong in a region opposing the reflection surface 314a of the variable radio wave reflecting plate 314, but also to place the region in a desired region. Also, because the radio wave reflecting plate 314 has flexibility and elasticity, the reflection surface 314a can be deformed and the deformed shape can be maintained in a stable manner by a configuration as simple as changing the pressing state where the both end portions in the predetermined direction are brought into close proximity.

The through-holes in the variable radio wave reflecting plate 314 described above may be formed to make a pair with respect to a direction parallel to the longitudinal direction of the variable radio wave reflecting plate 314, and another pair of through-holes may be formed on the inner side than this pair of through-holes. Also, it may be configured in such a manner that a male screw portion is provided to the other end portion of the pressing manipulation shaft member 361, so that another member, having a screw hole that can be screwed together, is screwed together with the male screw portion. Four reflecting plate changing means 357 are provided. However, only one or five or more reflecting plate changing means 357 may be provided. FIG. 46 shows the configuration in which the pressing manipulation members 358 are placed on the top portion of the variable radio wave reflecting plate 314. However, it may be configured in such a manner that the placement of the pressing manipulation members 358, the first protecting members 359, the second protecting members 360, and the pressing manipulation shaft members 361 is reversed vertically, so that the pressing manipulation members 358 are placed at the bottom portion of the variable radio wave reflecting plate 314. Also, instead of the first protecting member 359, a member that is screwed together with the pressing manipulation shaft member 361 and moves by rotating with respect to the pressing manipulation shaft member 361 may be used, so that either this member or the pressing manipulation member 358 is used on the side of the reflection surface 314a, which is inside the variable radio wave reflecting plate 314, to pinch the reflection surface 314a from the both sides in the thickness direction. It is thus possible to change the shape of the reflection surface 314a continuously in a more arbitrary manner. Also, by configuring to pinch the variable radio wave reflecting plate 314 from the both sides in the thickness direction as has been described, it is possible to change the shape of the reflection surface 314a arbitrarily by effectively utilizing the variable radio wave reflecting plate 314 made of a material having small elasticity.

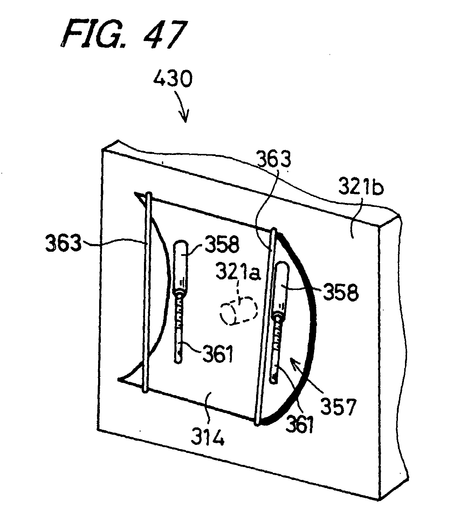

FIG. 47 is a cross section showing a variable radio wave reflecting plate 314 and reflecting plate changing means 357 in an RFID system 430 according to a thirty-third embodiment of the invention. In the RFID system 430 of this embodiment, the shape of the reflecting plate 314a is changed by using the reflecting plate changing means 357 in the RFID system 420 according to the thirty-second embodiment and bending maintaining members 363 for maintaining the variable radio wave reflecting plate 314 in a pre-bent state. In the RFID system of this embodiment, configurations other than this are the same as those of the RFID systems of the twenty-eighth through thirty-second embodiments above. Hence, the same portions are denoted by the same reference numerals with respect to the RFID systems of the twenty-eighth through thirty-second embodiments above, and descriptions of the corresponding configurations and the advantages are omitted to above redundancy.

The bending maintaining members 363 are members maintaining the variable radio wave reflecting plate 314 in a bent state. Each bending maintaining member 363 has no electric conductivity, and comprises a bar-shaped member with end portions that are bent in a shape of a letter U in a longitudinal direction. The end portions of the variable radio wave reflecting plate 314 in the width direction are fitted into U-shaped end portions of the bending maintaining member 363, so that the U-shaped end portions engage with the end portions of the variable radio wave reflecting plate 314 in the width direction. In this manner, the two end portions of the variable radio wave reflecting plate 314 in the width direction are supported in a manner so as to come in close proximity to each other from a natural state. The variable radio wave reflecting plate 314 is thus maintained in a bent state.

The reflecting plate changing means 357 has no electric conductivity. In this embodiment, the reflecting plate changing means 357 has a cylindrical pressing manipulation member 358 in which a female screw is formed, and a pressing manipulation shaft member 361 in which a male screw is formed. The pressing manipulation member 358 is provided by being screwed together with the pressing manipulation shaft member 361, and is able to screw in and screw out in the axis line direction with respect to the pressing manipulation shaft member 361. The reflecting plate changing means 357 is able to extend and contract by changing the dimension in the axis line direction by these screw-in and screw-out operations. The reflecting plate changing means 357 configured in this manner is provided on the reflection surface 314a side of the variable radio wave reflecting plate 314 in a state where one end portion of the pressing manipulation member 358 and one end portion of the pressing manipulation shaft member 361 abut on their respective predetermined positions on the reflection surface 314a so as not to cause a shift in position. By allowing the reflecting plate changing means 357 to extend and contract by screwing in and screwing out the pressing manipulation member 358, the pressing state of the reflection surface 314a of the variable radio wave reflecting plate 314 is changed, and so is the shape of the reflection surface 314a.

By using the reflecting plate changing means 357 configured as described above, it is possible not only to form a region where the interrogation signals are strong in a region opposing the reflection surface 314a of the variable radio wave reflecting plate 314, but also to place the region in a desired region. Because the variable radio wave reflecting plate 314 has flexibility and elasticity, the reflection surface 314a can be deformed and the deformed shape can be maintained in a reliable manner by a configuration as simple as changing a pressing state to press the reflection surface 314a.

The bending maintaining members 363 may be configured in such a manner that the dimension in the longitudinal direction is changed, that is, to be extendable and contractible, so that a dimension of the opening, which is an interval across the both end portions the variable radio wave reflecting plate 314 in the width direction, can be changed.

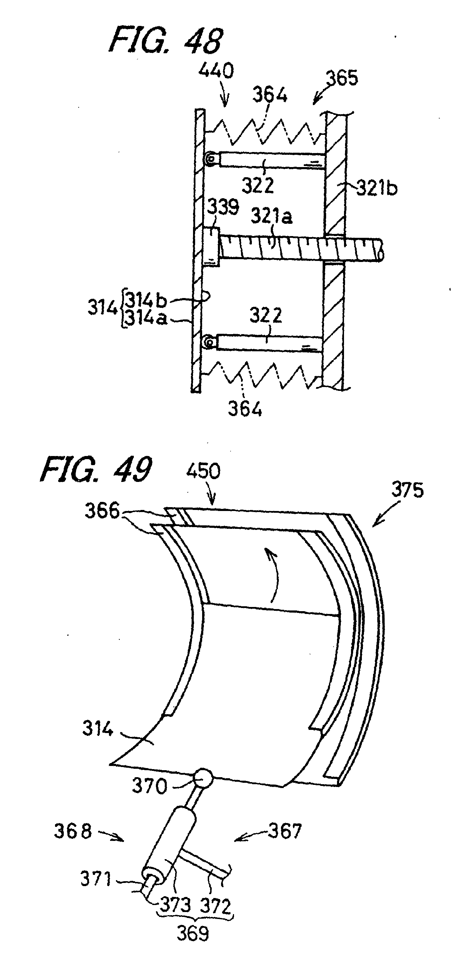

FIG. 48 is a cross section showing a variable radio wave reflecting plate 314 and reflecting plate changing means 365 in an RFID system 440 according to a thirty-fourth embodiment of the invention. In the RFID system 440 of this embodiment, the variable radio wave reflecting plate 314 is pulled at positions different from each other to make the reflection surface 314a in a concave shape. In the RFID system of this embodiment, configurations other than this are the same as those of the RFID systems of the twenty-eighth through thirty-third embodiments above. Hence, the same portions are denoted by the same reference numerals with respect to the RFID systems of the twenty-eighth through thirty-third embodiments above, and descriptions of the corresponding configurations and the advantages are omitted to avoid redundancy.

A fixing shaft 321a is provided with a male screw portion on its outer peripheral portion to be screwed together with a screw hole provided in a fixing table 321b, and provided with the coupling member 339 shown in FIG. 43 at one end portion. The coupling member 339 is provided on a non-reflection surface 314b of the variable radio wave reflecting plate 314 to couple the variable radio wave reflecting plate 314 and the fixing shaft 321a. While the variable radio wave reflecting plate 314 and the fixing shaft 321a are coupled to each other by means of the coupling member 339, the fixing shaft 321a is allowed to rotate about the axis line of the fixing shaft 321a and inhibited from displacing in the axis line direction of the fixing shaft 321a by the coupling member 339.

In this embodiment, two fixing shafts 321a are provided on the non-reflection surface 314b, which are placed at positions different from each other at an interval in one of the longitudinal direction and the width direction of the variable radio wave reflecting plate 314. In this embodiment, the two fixing shafts 321a are provided nearly at the central portion of the non-reflection surface 314b and provided apart from each other in the longitudinal direction of the variable radio wave reflecting plate 314.

Each fixing shaft 321a is spline-coupled to the driven spur gear 323 shown in FIG. 38 at one end portion. By rotating and driving the driving spur gear 325 shown in FIG. 38 that is geared with the driven spur gear 323 with the use of the driving means 324 shown in FIG. 38, for example, an electric motor, the fixing shaft 321a is moved in a direction coming in close proximity to and moving away from the variable radio wave reflecting plate 314.

In this embodiment, the pressing members 322 are provided in such a manner that they are fixed to the fixing table 321b at the other end portions 322c, and the axis line of the pressing members 322 becomes perpendicular to the fixing table 321b. The roller 326c shown in FIG 39 is provided to one end portion of each pressing member 322, and this roller 326c abuts on the variable radio wave reflecting plate 314.

The shape of the reflection surface 314a is changed by bending the variable radio wave reflecting plate 314 in a natural state by pulling the fixing shafts 321a. To be more concrete, the shape of the reflection surface 314a is changed by moving the fixing shafts 321a in a direction parallel to their axis lines, which is also a direction in which the non-reflection surface 314b moves to come in close proximity to the fixing table 321b. Also, after the shape has been changed, by further pulling the fixing shafts 321a and pushing out the fixing shafts 321a, that is to say, by moving the fixing shafts 321a in a direction in which the non-reflection surface 314b moves away from the fixing table 321b, the reflection surface 314a can be changed to another shape.

According to this embodiment, by pulling the variable radio wave reflecting plate 314 at positions different from each other as described above, it is possible to change the reflection surface 314a of the variable radio wave reflecting plate 314, which remains tabular in a natural state, to a concave shape. It is thus possible not only to form a region where the interrogation signals are strong in a region opposing the reflection surface 314a of the variable radio wave reflecting plate 314, but also to place the region in a desired region. Because the variable radio wave reflecting plate 314 has flexibility and elasticity, the reflection surface 314a can be deformed and the deformed shape can be maintained in a stable manner by a configuration as simple as changing the pulling state at two positions.

In this embodiment, the variable radio wave reflecting plate 314 has flexibility and elasticity. However, even when the variable radio wave reflecting plate 314 has flexibility alone, it is still possible to deform the reflection surface 314a and to maintain the deformed shape in a stable manner by disposing spring members 364, serving as pushing members, indicated by virtual lines of FIG. 48, between the non-reflection surface 314b and the fixing table 321b.

In this embodiment, it is configured in such a manner that the shape of the reflection surface 314a is changed by moving the fixing shafts 321a with the use of an electric motor and gears. However, it may be configured in such a manner that the shape of the reflection surface 314a is changed by moving the fixing shafts 321a with the use of the fluid pressure cylinder shown in FIG. 39. Alternatively, it may be configured in such a manner that the shape of the reflection surface 314a is changed by fixing the fixing shafts 321a to the fixing table 321b and by pulling the both end portions of the variable radio wave reflecting plate 314 in the width direction, in a direction moving away from the fixing table 321b.

FIG. 49 is a perspective view showing a variable radio wave reflecting plate 314 and reflecting plate changing means 375 in an RFID system 450 according to a thirty-fifth embodiment of the invention. The RFID system 450 of this embodiment has the reflecting plate changing means 375. The reflecting plate changing means 375 has one or more guiding members 366, each having a different shape, and the shape of the reflection surface 314a is made to a concave shape analogous to the shape of the guiding member 366 by placing the variable radio wave reflecting plate 314 selectively along the guiding member 366. In the RFID system of this embodiment, configurations other than this are the same as those of the RFID systems of the twenty-eighth through thirty-fourth embodiments above. Hence, the same portions are denoted by the same reference numerals with respect to the RFID systems of the twenty-eighth through thirty-fourth embodiments above, and descriptions of the configurations and the advantages are omitted to avoid redundancy.

The reflecting plate changing means 375 comprises a plurality of guiding members 366 and inserting guide selecting means 367. The plurality of guiding members 366 are formed in shapes different from each other and laminated one on another. The inserting guide selecting means 367 is means for selecting the guiding member 366 into which the variable radio wave reflecting plate 314 is to be inserted, and for inserting/removing the variable radio wave reflecting plate 314 into/from the guiding member 366 to adjust the insertion position of the reflection surface 314a. The inserting guide selecting means 367 has reflecting plate inserting means 368 and guide selecting means 369.

The reflecting plate inserting means 368 is means for inserting/removing the variable radio wave reflecting plate 314 into/from the guiding member 366, and has a pinching member 370 and an inserting shaft member 371. The pinching member 370 is provided on one end portion of the inserting shaft member 371, and pinches the variable radio wave reflecting plate 314. The inserting shaft member 371 is a shaft member. The inserting shaft member 371 is spline-coupled to the driven spur gear 323 shown in FIG. 38 at the other end. By rotating and driving the driving spur gear 325 shown in FIG. 38 that is geared with the driven spur gear 323 by the driving means 324 shown in FIG. 38, for example an electric motor, the inserting shaft member 371 is moved in a direction to insert/remove the variable radio wave reflecting plate 314 into/from the guiding member 366. By adjusting a quantity of movement of the inserting shaft member 371, it is possible to change an insertion state in the guiding member 366 of the variable reflecting plate 314 to be inserted into the guiding member 366.

The guide selecting means 369 is means for selecting the guiding member 366 into which the variable radio wave reflecting plate 314 is to be inserted, and has a driving shaft member 372 and a driven shaft member 373. The driving shaft member 372 is a shaft member, and the driven shaft member 373 is provided on one end portion thereof. The driving shaft member 372 is spline-coupled to the driven spur gear 323 shown in FIG. 38 at the other end. By rotating and driving the driving spur gear 325 shown in FIG. 38 that is geared with the driven spur gear 323 by the driving means 324 shown in FIG. 38, for example, an electric motor, the driving shaft member 372 is moved in a direction in which a plurality of guiding members 366 are laminated.

The driven shaft member 373 is provided with a through-hole penetrating in a direction parallel to the axial direction. The through-hole in the driven shaft member 373 is so formed as to have such a size that the inserting shaft member 371 can be inserted therein and the inserting shaft member 371 can move in the axis line direction. The inserting shaft member 371 is inserted into the through-hole in the driven shaft member 373 described above. As the driving shaft member 372 moves in a direction in which the plurality of guiding members 366 are laminated, the driven shaft member 373 moves in a direction in which the plurality of guiding members 366 are laminated, in association of which the inserting shaft member 371 moves in a direction in which the plurality of guiding members 366 are laminated. The guiding members 366 are thus changed.

By using the inserting guide selecting means 367 configured as described above, the guiding member 366, into which the variable radio wave reflecting plate 314 is to be inserted, is selected so that the variable radio wave reflecting plate 314 is inserted into a desired guiding member 366, while the variable radio wave reflecting plate 314 is removed from the guiding member 366. By adjusting the insertion position of the variable radio wave reflecting plate 314 with the use of the reflecting plate inserting means 368, it is possible to change an area of a bent portion of the variable radio wave reflecting portion 314. Hence, not only can the placement location of the variable radio wave reflecting plate 314 be changed, but also a part of the interrogation signals are allowed to pass through to be reflected, which can in turn change a degree of strength of the concentrated interrogation signals. Also, the variable radio wave reflecting plate 314 is bent in a portion inserted in the guiding member 366 and a portion not inserted in the guiding member 366 remains tabular. By adjusting the insertion position of the variable radio wave reflecting plate 314 into the guiding member 366 as has been described, it is possible to change the shape of the reflection surface 314a in the overall variable radio wave reflecting plate 314.

According to this embodiment, it is possible to change the shape of the reflection surface 314a to a concave shape analogous to the shape of the guiding member 366 by placing the variable radio wave reflecting plate 314 selectively along the guiding member 366. It is thus possible not only to form a region where the interrogation signals are strong in a region opposing the reflection surface 314a of the variable radio wave reflecting plate 314, but also to place the region in a desired region. Also, because the shape can be changed by merely making the variable radio wave reflecting plate 314 analogous to the guiding member 366, not only can the shape be set easily, but also the shape thus set can be maintained in a reliable manner.

In this embodiment, it is configured in such a manner that a plurality of guiding members 366 are used. However, it may be configured in such a manner that only a single guiding member 366 is used. Even when a single guiding member 366 is used, the shape and the position of the reflecting plate 314a can be changed by adjusting the insertion position of the variable radio wave reflecting plate 314 in the guiding member 366. Also, the guiding member 366 used herein has the same curvature radius on the insertion side from which the variable radio wave reflecting plate 314 is inserted and the depth side. However, it may be configured in such a manner that the curvature radius differs between the insertion side and the depth side. When configured in this manner, a plurality of regions where the interrogation signals concentrate can be formed. The communication accuracy between the interrogator 11 and the radio frequency tags 13 can be thereby improved. Also, it may be configured in such a manner that the inserting shaft member 371 and the driving shaft member 372 are moved by means of a fluid pressure, or manipulations by the manipulator himself.

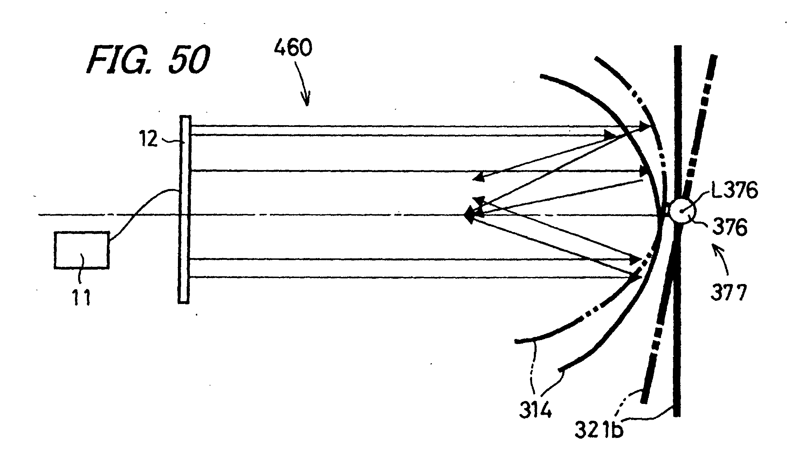

FIG. 50 is a cross section showing a variable radio wave reflecting plate 314 and reflecting plate changing means 377 in an RFID system 460 according to a thirty-sixth embodiment of the invention. The RFID system 460 of this embodiment includes the reflecting plate changing means 377. The reflecting plate changing means 377 causes the variable radio wave reflecting plate 314 to rotate about a predetermined rotational axis line. In the RFID system of this embodiment, configurations other than this are the same as those of the RFID systems of the twenty-eighth through thirty-fifth embodiments above. Hence, the same portions are denoted by the same reference numerals with respect to the RFID systems of the twenty-eighth through thirty-fifth embodiments above, and descriptions of the corresponding configurations and the advantages are omitted to avoid redundancy.

The variable radio wave reflecting plate 314 has a reflection surface 314a of a constant shape. As with the twenty-eighth embodiment, the variable radio wave reflecting plate 314 is coupled fixedly to a fixing table 12b by means of a fixing shaft 321a. The reflecting plate changing means 377 is means for causing the variable radio wave reflecting plate 314 to rotate about a predetermined rotational axis line, and has a rotating shaft member 376. The rotating shaft member 376 is provided on one surface of the fixing table 321b nearly at the central portion. In this embodiment, the rotating shaft member 376 is provided on one surface of the fixing table 321b in the longitudinal direction nearly at the central portion in a state where the longitudinal direction of the variable radio wave reflecting plate 314 is parallel to the longitudinal direction of the fixing table 321b. The rotating shaft member 376 is rotated about the axis line L376 with the use of gears and an electric motor.

By rotating the rotating shaft member 376 about the axis line L375, which is the predetermined rotational axis, the variable radio wave reflecting plate 314, the fixing shaft 321a, and the fixing table 321b rotate together about the axis line L376 of the rotating shaft member 376. It is thus possible to change the position of the reflection surface 314a of the variable radio wave reflecting plate 314. Hence, a propagation direction of the reflected interrogation signals can be readily changed. It is thus possible not only to form a region where the interrogation signals are strong in a region opposing the reflection surface 314a of the variable radio wave reflecting plate 314, but also to place the region in a desired region.

In this embodiment, it is configured in such a manner that only the position of the reflection surface 314a of the variable radio wave reflecting plate 314 is changed. However, it may be configured in such a manner that, in addition to a change of the position of the reflection surface 314a, the shape of the reflection surface 314a is changed by providing the pressing members 322 of the twenty-eighth embodiment on the fixing table 321b. Alternatively, it may be configured in such a manner that the manipulator himself manipulates the rotating shaft member 376 to change the position of the reflection surface 314a.

In the respective embodiments above, battery-less tags are used as the radio frequency tags 13. However, as still another embodiment of the invention, tags having batteries may be used as the radio frequency tags 13.

The configurations are not limited to those of the respective embodiments above, and an RFID system may be configured by arbitrarily combining these embodiments above.

The RFID systems of the respective embodiments above can be suitably used in diversified fields, such as factory automation (FA), office automation (OA), distribution, and physical distribution.

In the respective embodiments above, the RFID systems were described as a radio communications system. The invention, however, can be applied to short-distance communications for a radio communications system, such as Bluetooth® and a wireless LAN (Local Area Network).

The respective embodiments above are merely examples of the invention and the invention is not limited to the embodiments above. The configurations, therefore, can be changed within the scope of the invention.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

### Industrial Applicability

As has been described, according to the invention, it is possible to prevent signals from scattering to the backside of the radio wave reflecting plate, and radio wave interference with another radio communications system can be thereby reduced. Also, it is possible to concentrate signals in a predetermined region with the use of the radio wave reflecting plate, and by placing a transponder in this region where the signals concentrate, the signals can be utilized effectively. Also, because a propagation direction from the interrogator antenna can be changed with the use of the radio wave reflecting plate, a degree of freedom in placement of the interrogator antenna and the transponder is increased.

Also, according to the invention, it is possible to efficiently concentrate signals in the vicinity of the focal point of the reflection surface of the radio wave reflecting plate, and thereby to make the signals in the vicinity of the focal point strong. Also, because only a region opposing the reflection surface are irradiated with the signals from the interrogator antenna, scattering of signals can be prevented in a reliable manner.

Also, according to the invention, because the interrogator antenna is placed in the vicinity of the focal point of the reflection surface, even when the directional characteristic of the interrogator antenna is low, communications are enabled at good accuracy.

Also, according to the invention, because the transponder is placed in the vicinity of the focal point of the reflection surface where the signals are strong, the communication accuracy between the interrogator and the transponder can be increased.

Also, according to the invention, signals transmitted from a plurality of interrogator antennas are reflected on the reflection surface, and concentrate at a position different from the focal point of the reflection surface to have a predetermined volume. It is thus possible to broaden a region where the signals are strong. A region where the communication accuracy between the interrogator and the transponder is high, therefore, can be broadened.

Also, according to the invention, signals from the interrogator antenna at a position shifted from the focal point of the reflection surface are reflected on the reflection surface and a region shifted from a region opposing the reflection surface is then irradiated with the signals. It is thus possible to broaden a region where the signals are strong.

Also, according to the invention, the reflection surface is a paraboloid of revolution or a parabolic cylindrical surface including the intersection of a parabolic curve or a curve similar thereto and the axis of the curve as well as the curve. It is thus possible to efficiently concentrate signals from the interrogator antenna on the focal point of the reflection surface.

Also, according to the invention, because it is possible to concentrate signals reflected on the reflection surface on the focal point of the reflection surface at a position shifted from a path through which the signals from the interrogator antenna pass to reach the reflection surface, a region where the signals are strong can be broadened.

Because the path in which the signals reflected on the reflection surface travel is shifted from the focal point of the reflection surface, that is, the interrogator antenna, the interrogator antenna will not block the signals reflected on the reflection surface. It is thus possible to irradiate the signals transmitted from the interrogator antenna efficiently to the transponder.

Also, according to the invention, because a plurality of interrogator antennas are connected to a single interrogator, it is possible to increase the communication precision of the overall system by selecting information from the interrogator antenna having the highest communication precision by the interrogator.

Also, according to the invention, because a plurality of interrogator antennas are connected respectively to different interrogators, processing is performed in individual interrogators and the interrogator antennas connected thereto. The processing ability of the overall system can be thereby increased.

Also, according to the invention, because another radio wave reflecting plate having the reflection surface opposing the reflection surface of the radio wave reflecting plate is placed, it is possible to prevent signals from scattering to the outside of a region sandwiched by the radio wave reflecting plates. Hence, signals from the interrogator antenna can be utilized effectively. Also, even when the same radio communications systems are placed in a line, it is possible to prevent interference of signals with another radio communications system.

Also, according to the invention, the reflection surfaces of the two radio wave reflecting plates, which are paraboloids of revolution or parabolic cylindrical surfaces, are placed oppositely so that the axes thereof are aligned with each other, and the interrogator antenna is placed in the vicinity of the focal point of the reflection surface of one of the radio wave reflecting plates. Thus, although the vicinity of the focal point of the reflection surface of the other radio wave reflecting plate is far from the interrogator antenna, it is possible to form a region where the signals are strong. Hence, by placing the transponder in the vicinity of the reflection surface of the other radio wave reflecting plate, it is possible to extend a communicable distance between the interrogator antenna and the transponder.

Also, according to the invention, the reflection surfaces of the two radio wave reflecting plates, which are paraboloids of revolution or parabolic cylindrical surfaces, are placed oppositely so that the axes thereof are aligned with each other, and two interrogator antennas are provided in such a manner that the interrogator antennas are placed in the vicinity of the focal points of the reflection surfaces of the both radio wave reflecting plates, respectively. Hence, even in a region where communications are disabled with the use of signals from one interrogator antenna, it is possible to form a region where communications are enabled with the use of signals from the other interrogator antenna. A communicable region, therefore, can be broadened.

Also, according to the invention, it is possible to concentrate signals on the focal points of the both radio wave reflecting plates by placing the two radio wave reflecting plates in such a manner that the positions of the focal points of the respective reflection surfaces are aligned with each other. This enables signals transmitted from the interrogator antenna to be utilized effectively.

Also, according to the invention, by placing the radio wave reflecting plate having a reflection surface formed of a paraboloid of revolution or a parabolic cylindrical surface, and the other radio wave reflecting plate having a reflection surface formed of a curved surface including a part of a circular curve or a curve similar thereto in such a manner that the positions of the focal points and the centers of these reflection surfaces are aligned with each other, it is possible to make the signals strong in the vicinity of the center of the reflection surface of the other radio wave reflecting plate, that is, in the vicinity of the focal point of the radio wave reflecting plate.

Also, according to the invention, the reflection surface of the other radio wave reflecting plate having a planar-shaped reflection surface is placed so as to intersect at right angles with an axis of the reflection surface of the radio wave reflecting plate having a reflection surface formed of a paraboloid of revolution or a parabolic cylindrical surface. It is thus possible to prevent the signals from scattering from a region sandwiched by the radio wave reflecting plate and the other radio wave reflecting plate.

Also, according to the invention, signals transmitted from a plurality of interrogator antennas are circular polarized wave signals having turning directions different from each other, and signals arriving at a plurality of interrogator antennas differ from each other in turning direction. It is thus possible to avoid interference of signals between the interrogator antennas.

Also, according to the invention, communications are enabled between the interrogator and the transponder in a broad region where the signals are strong while the transponder is being moved by means of a transportation apparatus. The interrogator is thus able to communicate with different transponders successively at high communication precision.

Also, according to the invention, it is possible to read out information accumulated in the memory portion in the transponder. The transponder, therefore, is applicable to a readable RFID system.

Also, according to the invention, it is possible to write information into the memory portion in the transponder. The transponder, therefore, is applicable to a writable RFID system.

Also, according to the invention, it is possible to prevent signals from scattering by passing through to the backside of the substantially elliptic radio wave reflecting plate, and interference of radio waves with another radio communications system can be thereby reduced. Also, it is possible to concentrate the signals to a region opposing the reflection surface on the reflection surface side from the substantially elliptic radio wave reflecting plate, which enables the signals to be utilized effectively.

Also, because it is possible to concentrate signals reflected on the reflection surface locally within a region opposing the reflection surface of the substantially elliptic radio wave reflecting plate, a region where the signals are strong can be readily formed by concentrating signals transmitted from the interrogator antenna. By placing the transponder in this region where the signals are strong, the gain is improved, which can in turn improve the communication accuracy between the interrogator and the transponder. Further, a communicable distance between the interrogator antenna and the transponder can be extended.

Also, according to the invention, by transmitting signals from an interrogator antenna placed in close proximity to one of focal points of the reflection surface of the substantially elliptic radio wave reflecting plate, to be directed to the reflection surface, it is possible to form with ease a region where signals transmitted from the interrogator antenna are strong, in close proximity to the other focal point.

Even when the interrogator antenna has a broad directional characteristic, a region where signals transmitted from the interrogator antenna are strong can be readily formed in close proximity to the other focal point of the reflection surface of the substantially elliptic radio wave reflecting plate. The communication accuracy between the interrogator and the transponder can be thereby increased.

Also, according to the invention, because it is possible to reflect signals transmitted from the interrogator antenna on the reflection surface of the substantially elliptic radio wave reflecting plate to concentrate somewhere in close proximity to the other focal point of the reflection surface of the substantially elliptic radio wave reflecting plate, a region where the signals transmitted from the interrogator antenna are strong can be formed readily in close proximity to the other focal point. The communication accuracy with the transponder can be thereby increased.

Also, a region where the signals are strong can be formed in close proximity to the other focal point of the reflection surface of the substantially elliptic radio wave reflecting plate without providing an interrogator antenna in close proximity to one focal point of the reflection surface of the substantially elliptic radio wave reflecting plate. It is thus possible to place the interrogator antenna at a position not to interfere with the propagation of the signals to/from the transponder and hence the communications.

Also, according to the invention, in a case where signals transmitted from one of the interrogator antenna and the transponder are reflected on the substantially elliptic reflecting plate to propagate to the other, neither the interrogator antenna nor the transponder interferes with the signal propagation.

Also, according to the invention, by placing a plurality of substantially elliptic radio wave reflecting plates in such a manner that at least one focal point of the reflection surface is aligned with the focal point of the reflection surface of another substantially elliptic radio wave reflecting plate, it is possible to form a region where the signals are strong, in the vicinity of the focal points of the respective substantially elliptic radio wave reflecting plates. Hence, not only can a region where the signals are strong be broadened, but also a communicable distance between the interrogator antenna and the transponder can be extended.

Also, according to the invention, it is not necessary to process a signal received from the transponder on the ground that signals transmitted from the interrogator to the interrogator antenna are reflected on the interrogator antenna connected to the interrogator per se. The processing of a signal received from the transponder, therefore, can be easier.

Also, according to the invention, by placing the transponder in a region where the signals are strong, in close proximity to the other focal point of the reflection surface of the substantially elliptic radio wave reflecting plate, the transponder is able to efficiently receive signals transmitted from the interrogator antenna. The communication accuracy between the interrogator and the transponder can be thereby improved.

Also, according to the invention, because the reflection surface of the substantially elliptic radio wave reflecting plate is configured to include a part of an ellipsoid of revolution or an elliptic cylindrical surface, or a curved surface similar thereto, it is possible to efficiently concentrate signals transmitted from the interrogator antenna and reflected on the reflection surface of the reflecting plate of the substantially elliptic radio wave reflecting plate in a predetermined region.

Also, according to the invention, a plurality of interrogator antennas connected to the interrogator are placed in such a manner that signals transmitted from each interrogator antenna are reflected on the reflection surface of the substantially elliptic radio wave reflecting plate to concentrate in different regions. It is thus possible to broadly provide a region where the signals are strong. A communication range where the communication accuracy between the interrogator and the transponder is high, therefore, can be broadened.

Also, according to the invention, it is possible to place the transmission interrogator antenna and the reception interrogator antenna far apart, which increases a degree of freedom in placement. Also, because it is possible to shorten a path, such as a connection line, from the respective antennas to the transmitter and the receiver, influences from the path, such as a connection line, to the signals can be reduced.

Also, according to the invention, the transponder is able to transmit information accumulated in the memory portion to the interrogator. It is thus possible, for example, to read out information about an object bearing the transponder with the use of the interrogator.

Also, according to the invention, by further reflecting the signals reflected on the reflection surface of the substantially elliptic radio wave reflecting plate on the reflection surface of the substantially non-elliptic radio wave reflecting plate, signals can be utilized more effectively. In particular, by placing the reflection surface of the substantially elliptic radio wave reflecting plate oppositely to the reflection surface of the substantially non-elliptic radio wave reflecting plate, it is possible to prevent the signals from scattering from a region sandwiched by the reflection surfaces of a plurality of reflecting plates.

Also, according to the invention, by providing a substantially circular radio wave reflecting plate to reflect the signals, it is possible to prevent signals from scattering by passing through to the backside of the substantially circular radio wave reflecting plate. Interference of radio waves with another radio communications system can be thereby reduced. Also, it is possible to concentrate signals in a region opposing the reflection surface, which enables the signals to be utilized effectively.

Because it is possible to concentrate signals reflected on the reflection surface locally within a region opposing the reflection surface of the substantially circular radio wave reflecting plate, a region where the signals are strong can be formed readily by concentrating signals transmitted from the interrogator antenna. By placing the transponder in this region where the signals are strong, the gain is improved, which can in turn improve the communication accuracy between the interrogator and the transponder. Further, a communicable distance between the interrogator antenna and the transponder can be extended.

Also, according to the invention, it is possible to form with ease a region where the signals transmitted from the interrogator antenna are strong, in close proximity to the central point of the reflection surface of the substantially circular radio wave reflecting plate. Also, it is possible to broadly provide a region where the signals are strong, in close proximity to the central point of the reflection surface of the substantially circular radio wave reflecting plate. A communication range over which communication accuracy between the interrogator and the transponder is high, therefore, can be broadened.

Also, according to the invention, by placing the transponder in a region where the signals are strong, in close proximity to the central point of the reflection surface of the substantially circular radio wave reflecting plate, the transponder is able to efficiently receive signals transmitted from the interrogator antenna. The communication accuracy between the interrogator and the transponder can be thereby improved.

Also, according to the invention, because the reflection surface of the substantially circular radio wave reflecting plate is configured to include a part of a spherical surface or a cylindrical surface, or a curved surface similar thereto, it is possible to concentrate signals reflected on the reflection surface of the reflecting plate of the substantially circular radio wave reflecting plate efficiently in a predetermined region.

Also, according to the invention, because signals transmitted from each of a plurality of interrogator antennas connected to the interrogator are reflected on the reflection surface of the substantially circular radio wave reflecting plate to concentrate in different regions, a region where the signals are strong can be broadened. It is thus possible to broaden a communication range over which communication accuracy between the interrogator and the transponder is high.

Also, according to the invention, by further reflecting signals reflected on the reflection surface of the substantially circular radio wave reflecting plate on the reflection surface of the substantially non-circular radio wave reflecting plate, the signals can be utilized more effectively. In particular, by placing the reflection surface of the substantially circular radio wave reflecting plate oppositely to the reflection surface of the substantially non-circular radio wave reflecting plate, it is possible to prevent the signals from scattering from a region sandwiched by the reflection surfaces of a plurality of reflecting plates.

Also, according to the invention, by providing the variable radio wave reflecting plate to reflect the signals, it is possible to prevent signals from scattering by passing through to the backside of the variable radio wave reflecting plate. Interference of radio waves with another radio communications system can be thereby reduced.

Also, by changing at least one of the shape and the position of the reflection surface of the variable radio wave reflecting plate by the reflecting plate changing means, a propagation direction of the reflected signals can be changed. It is thus possible to utilize the signals effectively by setting a propagation direction of signals as needed.

Also, a propagation direction of signals can be changed by guiding the signals from the interrogator antenna to the transponder through reflection on the reflection surface of the variable radio wave reflecting plate. A degree of freedom in placement of the interrogator antenna and the transponder is thereby increased.

Also, according to the invention, because the reflection surface of the variable radio wave reflecting plate is a curved surface, it is possible to concentrate signals reflected on the reflection surface locally within a region opposing the reflection surface of the variable radio wave reflecting plate. A region where the signals are strong can be thereby formed with ease. Further, by changing the shape and the position of the reflection surface of the variable radio wave reflecting plate as needed, so that the transponder is placed in a region where the signals are strong, not only can the communication accuracy between the interrogator and the transponder be improved, but also a communicable distance between the interrogator antenna and the transponder can be extended. Also, for example, by using a plurality of variable radio wave reflecting plates, not only one but also more than one region where the signals are strong can be formed, which enables the signals to be utilized more effectively.

Also, according to the invention, it is possible not only to form a region where the signals are strong in a region opposing the reflection surface of the variable radio wave reflecting plate, but also to place the region in a desired region. Also, the reflection surface can be deformed by a configuration as simple as changing the pressing state from the opposite side of the reflection surface of the variable radio wave reflecting plate.

Also, according to the invention, the reflection surface can be deformed by a configuration as simple as changing the pressing state in which the both end portions of the variable radio wave reflecting plate in a predetermined direction are brought into close proximity to each other.

Also, according to the invention, the reflection surface can be deformed by a configuration as simple as changing a pulling state of the variable radio wave reflecting plate at positions different from each other.

Also, according to the invention, the shape of the reflection surface can be changed by making the variable radio wave reflecting plate analogous to the shape of the guiding member. Hence, not only can the shape be set readily, but also the shape thus set can be maintained in a stable manner.

Also, according to the invention, by changing the position of the reflection surface by causing the variable radio wave reflecting plate to rotate about a predetermined rotational axis line by the reflecting plate changing means, a propagation direction of the reflected signals can be readily changed.

Also, according to the invention, communications between the interrogator and the transponder are enabled by reflecting signals on the variable radio wave reflecting plate and the invariable radio wave reflecting plate. In particular, by placing the reflection surface of the variable radio wave reflecting plate oppositely to the reflection surface of the invariable radio wave reflecting plate, it is possible to prevent signals from scattering from a region sandwiched by the reflection surfaces of a plurality of reflecting plates.

## Claims

1. A radio communications system, comprising:
an interrogator for generating information to be transmitted;
an interrogator antenna, connected to the interrogator, for transmitting a signal representing the information generated in the interrogator;
a radio wave reflecting plate having a reflection surface formed thereon which reflects the signal transmitted from the interrogator antenna and has a predetermined reflection characteristic; and
a transponder, capable of receiving the signal from the interrogator antenna, for receiving a signal transmitted from the interrogator antenna and reflected at least on the radio wave reflecting plate.

2. The radio communications system of claim 1, wherein the reflection surface includes a part of a parabolic curve or a curve similar thereto.

3. The radio communications system of claim 2, wherein the interrogator antenna is placed in a vicinity of a focal point of the reflection surface.

4. The radio communications system of claim 2, wherein the transponder is placed in a vicinity of a focal point of the reflection surface.

5. The radio communications system of claim 2, wherein a plurality of interrogator antennas are placed oppositely to the reflection surface, and each interrogator antenna is set to be directed to a vicinity of a focal point of the reflection surface.

6. The radio communications system of claim 2, wherein a plurality of interrogator antennas are placed in a vicinity of a focal point of the reflection surface at positions such that signals transmitted from each interrogator antenna are reflected on the reflection surface to travel independently in different directional directions.

7. The radio communications system of claim 2, wherein the reflection surface is a paraboloid of revolution or a parabolic cylindrical surface including an intersection of a parabolic curve or a curve similar thereto and an axis of the curve as well as the curve.

8. The radio communications system of claim 2, wherein the reflection surface is a paraboloid of revolution or a parabolic cylindrical surface including a curve of a parabolic curve or a curve similar thereto in a portion shifted from an intersection of the parabolic curve or the curve similar thereto and an axis of the curve.

9. The radio communications system of claim 4 or 5, wherein a plurality of interrogator antennas are connected to a single interrogator.

10. The radio communications system of claim 4 or 5, wherein a plurality of interrogator antennas are connected respectively to different interrogators.

11. The radio communications system of claim 2, wherein another radio wave reflecting plate having a reflection surface opposing the reflection surface is placed, and the reflection surface of the other radio wave reflecting plate reflects arrival signals to a vicinity of a focal point of the reflection surface of the other radio wave reflecting plate or in a direction in which the signals have arrived.

12. The radio communications system of claim 11, wherein the reflection surfaces of the two radio wave reflecting plates, which are paraboloids of revolution or parabolic cylindrical surfaces, are placed oppositely so that axes thereof are aligned with each other, the interrogator antenna is placed in the vicinity of the focal point of the reflection surface of one of the radio wave reflecting plates, and the transponder is placed in the vicinity of the focal point of the reflection surface of at least the other radio wave reflecting plate.

13. The radio communications system of claim 11, wherein the reflection surfaces of the two radio wave reflecting plates, which are paraboloids of revolution or parabolic cylindrical surfaces, are placed oppositely so that axes thereof are aligned with each other, and two interrogator antennas are provided in such a manner that the respective interrogator antennas are placed in the vicinity of the focal points of the reflection surfaces of the both radio wave reflecting plates, respectively.

14. The radio communications system of claim 11, wherein the two radio wave reflecting plates are placed so that positions of the focal points of the respective reflection surfaces are aligned with each other.

15. The radio communications system of claim 11, wherein the reflection surface of the radio wave reflecting plate is a paraboloid of revolution or a parabolic cylindrical surface, the reflection surface of the other radio wave reflecting plate is a curved surface including a part of a circular curve or a curve similar thereto, and the radio wave reflecting plate and the other radio wave reflecting plate are placed so that positions of the focal points of the respective reflection surfaces are aligned with each other.

16. The radio communications system of claim 11, wherein the reflection surface of the radio wave reflecting plate is a paraboloid of revolution or a parabolic cylindrical surface, and the reflection surface of the other radio wave reflecting plate is of a planar shape and placed so as to intersect with an axis of the reflection surface of the radio wave reflecting plate at right angles.

17. The radio communications system of claim 11, wherein a plurality of interrogator antennas are placed, and signals transmitted from the interrogator antennas are circular polarized wave signals having turning directions different from each other.

18. The radio communications system of claim 1, wherein an apparatus for moving the transponder is provided, and communications are enabled between the interrogator and the moving transponder.

19. The radio communications system of claim 1, wherein the transponder includes a processing circuit having at least a modulation portion and a memory portion for accumulating information, and an antenna for transmitting and receiving a signal, wherein, upon receipt of a signal at the antenna, the processing circuit modulates in the modulation portion, according to the signal, a signal related to the information accumulated in the memory portion, and controls the antenna to transmit the signal from the antenna.

20. The radio communications system of claim 1, wherein the transponder includes a processing circuit having at least a demodulation portion and a memory portion for accumulating information, and an antenna for receiving a signal, wherein, upon receipt of a signal at the antenna, the processing circuit writes information into the memory portion according to the signal.

21. The radio communications system of claim 1, wherein the reflection surface includes a part of an elliptic curve or a curve similar thereto.

22. The radio communications system of claim 21, wherein the interrogator antenna is placed in close proximity to one of focal points of the reflection surface of the substantially elliptic radio wave reflecting plate to be directed to the reflection surface of the substantially elliptic radio wave reflecting plate.

23. The radio communications system of claim 21, wherein the interrogator antenna is placed in close proximity to a virtual straight line including one of focal points of the reflection surface of the substantially elliptic radio wave reflecting plate and passing through the reflection surface, to be directed to the reflection surface of the substantially elliptic radio wave reflecting plate almost in parallel with the virtual straight line.

24. The radio communications system of claim 21, wherein the reflection surface of the substantially elliptic radio wave reflecting plate is a curved surface including a curve of an elliptic curve or a curve similar thereto other than a portion that intersects with a straight line passing two focal points of the elliptic curve or the similar curve.

25. The radio communications system of claim 21, wherein a plurality of substantially elliptic radio wave reflecting plates are provided, and each substantially elliptic radio wave reflecting plate is placed so that at least one focal point thereof is aligned with a focal point of the reflection surface of another substantially elliptic radio wave reflecting plate.

26. The radio communications system of claim 21, wherein a plurality of interrogator antennas connected to the interrogator are provided,
signals transmitted from one interrogator antenna are received in the transponder, and
a signal transmitted from the transponder is received at another interrogator antenna.

27. The radio communications system of claim 22 or 23, wherein the transponder is placed in close proximity to another focal point of the reflection surface of the substantially elliptic radio wave reflecting plate.

28. The radio communications system of claim 21, wherein the reflection surface of the substantially elliptic radio wave reflecting plate includes a part of an ellipsoid of revolution or an elliptic cylindrical surface or a curved surface similar thereto.

29. The radio communications system of claim 21, wherein a plurality of interrogator antennas connected to the interrogator are provided, and
each interrogator antenna is placed in such a manner that signals transmitted from each interrogator antenna concentrate in different regions after the signals are reflected on the substantially elliptic radio wave reflecting plate.

30. The radio communications system of claim 1, wherein the interrogator includes a transmitter for generating an interrogation, and a receiver provided separately from the transmitter, for receiving an answer from the transponder,
the interrogator antenna includes a transmission interrogator antenna and a reception interrogator antenna, and
the transmission interrogator antenna is connected to the transmitter and the reception interrogator antenna is connected to the receiver.

31. The radio communications system of claim 1, wherein the transponder includes a processing circuit having at least a modulation portion and a memory portion for accumulating information, and an antenna for transmitting and receive a signal, wherein, upon receipt of a signal at the antenna, the processing circuit changes a reflection characteristic of the antenna according to the signal in the modulation portion with the use of a signal related to the information accumulated in the memory portion and reflects the signal received at the antenna.

32. The radio communications system of claim 21, wherein a substantially non-elliptic radio wave reflecting plate formed of a reflection surface of a shape different from a shape including a part of an elliptic curve or a similar curve is provided, and
the transponder is able to communicate with the interrogator at least via the substantially elliptic radio wave reflecting plate and the substantially non-elliptic radio wave reflecting plate.

33. The radio communications system of claim 1, wherein the reflection surface includes a part of a circular curve or a curve similar thereto.

34. The radio communications system of claim 33, wherein the interrogator antenna is placed in close proximity to a virtual straight line including a central point of the reflection surface of the substantially circular radio wave reflecting plate and passing through the reflection surface, to be directed to the reflection surface of the substantially circular radio wave reflecting plate almost in parallel with the virtual straight line.

35. The radio communications system of claim 33, wherein a plurality of interrogator antennas connected to the interrogator are provided,
signals transmitted from a single interrogator antenna are received in the transponder, and
a signal transmitted from the transponder is received at another interrogator antenna.

36. The radio communications system of claim 34, wherein the transponder is placed in close proximity to the central point of the reflection surface of the substantially circular radio wave reflecting plate.

37. The radio communications system of claim 33, wherein the reflection surface of the substantially circular reflecting plate includes at least a part of a spherical surface or a cylindrical surface, or a curved surface similar thereto.

38. The radio communications system of claim 33, wherein a plurality of interrogator antennas connected to the interrogator are provided, and
each interrogator antenna is placed in such a manner that signals transmitted from each interrogator antenna concentrate in different regions after the signals are reflected on the substantially circular radio wave reflecting plate.

39. The radio communications system of claim 33, wherein a substantially non-circular radio wave reflecting plate formed of a reflection surface of a shape different from a shape including a part of a circular curve or a curve similar thereto is provided, and
the transponder is able to communicate with the interrogator at least via the substantially circular radio wave reflecting plate and the substantially non-circular radio wave reflecting plate.

40. The radio communications system of claim 1, wherein the radio wave reflecting plate is a variable radio wave reflecting plate, and
reflecting plate changing means for changing at least one of a shape and a position of a reflection surface of the variable radio wave reflecting plate is further provided.

41. The radio communications system of claim 40, wherein the reflecting plate changing means is able to change the reflection surface to at least one shape from shapes including a part of a parabolic curve, an elliptic curve, and a circular curve, and a curve close thereto.

42. The radio communications system of claim 40, wherein the variable radio wave reflecting plate has at least flexibility, and
the reflecting plate changing means changes the reflection surface to a concave shape by fixing the variable radio wave reflecting plate on at least one point, and pressing at least one point on the variable radio wave reflecting plate, which is different from the fixing position, from a side opposite to the reflection surface.

43. The radio communications system of claim 40, wherein the variable radio wave reflecting plate has at least flexibility, and
the reflecting plate changing means changes the reflection surface to a concave shape by pressing both end portions of the variable radio wave reflecting plate in a predetermined direction, in a direction to come in close proximity to each other.

44. The radio communications system of claim 40, wherein the variable radio wave reflecting plate has at least flexibility, and
the reflecting plate changing means changes the reflection surface to a concave shape by pulling the variable radio wave reflecting plate at positions different from each other.

45. The radio communications system of claim 40, wherein the reflecting plate changing means includes one or more guiding members each being made to a different shape, and changes the shape of the reflection surface to a concave shape analogous to a shape of the guiding member by placing the variable radio wave reflecting plate selectively along the guiding member.

46. The radio communications system of claim 40, wherein the reflecting plate changing means causes the variable radio wave reflecting plate to rotate about a predetermined rotational axis line.

47. The radio communications system of claim 40, wherein a plurality of interrogator antennas connected to the interrogator are provided,
a signal transmitted from one of the interrogator antennas is received in the transponder, and
a signal transmitted from the transponder is received at another interrogator antenna.

48. The radio communications system of claim 40, wherein the interrogator includes a transmitter for generating an interrogation, and a receiver, provided separately from the transmitter, for receiving an answer from the transponder,
the interrogator antenna includes a transmission interrogator antenna and a reception interrogator antenna, and
the transmission interrogator antenna is connected to the transmitter and the reception interrogator antenna is connected to the receiver.

49. The radio communications system of claim 40, wherein an invariable radio wave reflecting plate having a reflection surface with a constant shape at a constant position is provided, and
the transponder is able to communicate with the interrogator at least via the variable radio wave reflecting plate and the invariable radio wave reflecting plate.
